(19) Europäisches Patentamt
European Patent Office
Office européen des brevets

(11) **EP 3 195 541 B1**

(12) **EUROPEAN PATENT SPECIFICATION**

(45) Date of publication and mention
of the grant of the patent:
**03.11.2021  Bulletin 2021/44**

(51) Int Cl.:
*H04L 25/02* (2006.01)       *G01S 5/02* (2010.01)
*G01S 5/00* (2006.01)

(21) Application number: **15821676.2**

(22) Date of filing: **17.07.2015**

(86) International application number:
**PCT/US2015/041037**

(87) International publication number:
**WO 2016/011433 (21.01.2016 Gazette 2016/03)**

(54) **WIRELESS POSITIONING SYSTEMS**

DRAHTLOSE POSITIONIERUNGSSYSTEME

SYSTÈMES DE POSITIONNEMENT SANS FIL

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **17.07.2014   US 201462025795 P
27.10.2014   US 201462069090 P
26.01.2015   US 201514605611
15.04.2015   US 201562148019 P**

(43) Date of publication of application:
**26.07.2017   Bulletin 2017/30**

(73) Proprietor: **Origin Wireless, Inc.
Greenbelt, MD 20770 (US)**

(72) Inventors:
• **CHEN, Yan
ChengHua District, ChengDu (CN)**
• **LAI, Hung-Quoc Duc
Parkville, Maryland 21234 (US)**
• **HAN, Yi
Ellicott City, MD 21042 (US)**
• **CHEN, Chen
College Park, Maryland 20740 (US)**
• **WU, Zhung-Han
Laurel, MD 20707 (US)**
• **LIU, K.J. Ray
Potomac, Maryland 20854 (US)**

(74) Representative: **Fish & Richardson P.C.
Highlight Business Towers
Mies-van-der-Rohe-Straße 8
80807 München (DE)**

(56) References cited:
CA-A1- 2 442 950         US-A1- 2007 010 956
US-A1- 2008 039 114       US-A1- 2013 223 503

• YUNYE JIN ET AL: "Indoor localization with
channel impulse response based fingerprint and
nonparametric regression", IEEE
TRANSACTIONS ON WIRELESS
COMMUNICATIONS, IEEE SERVICE CENTER,
PISCATAWAY, NJ, US, vol. 9, no. 3, 1 March 2010
(2010-03-01), pages 1120-1127, XP011290385,
ISSN: 1536-1276, DOI:
10.1109/TWC.2010.03.090197
• BAKER JARED ET AL: "A Map-Based Method for
Geolocation in Multipath Environments",
MILCOM 2013 - 2013 IEEE MILITARY
COMMUNICATIONS CONFERENCE, IEEE, 18
November 2013 (2013-11-18), pages 58-63,
XP032563680, DOI: 10.1109/MILCOM.2013.19
[retrieved on 2014-02-07]
• None

**Description**

TECHNICAL FIELD

This disclosure relates to collecting and processing location-specific wireless waveforms for use in wireless communication, positioning, security, and recognition systems, components, methods and apparatuses.

BACKGROUND

One challenge that may be addressed in the future using novel wireless signaling protocols is high-speed and efficient wireless data transfer to and from huge numbers of potentially closely spaced devices. The demand for high-speed and low-latency wireless communication capabilities has increased dramatically in recent years. It has been projected that by the year 2020, the volume of wireless traffic will rise to about one thousand (1000) times that of the year 2010. Supporting these traffic demands will be a challenge for future wireless networks. One challenge will be supporting the huge number of wireless devices with ever-growing demands for higher data rates within the allocated spectrum. Another will be the scheduling delay that is expected to accompany large numbers of coexisting wireless devices competing for network service and to significantly deteriorate the user experience in many delay-sensitive applications. Some network users have already started to feel the impact of such delays in places such as airports, conference halls, and stadiums where it is difficult to access the wireless network with hundreds of other devices around. Such poor user experiences may become the norm if new technologies are not introduced to deal with the predicted growth of wireless traffic.

Several technologies have been proposed to tackle this challenge. One straightforward approach is to install more access points (APs) in a given coverage area such that each AP can service a smaller number of users (TDs) and therefore more traffic can be offloaded to the wired backhaul networks. However, APs that utilize the widely adopted and deployed OFDM protocols can interfere with each other when they are deployed too close together. Sophisticated interference mitigation and resource allocation algorithms may be used to enable the closely spaced APs to accommodate multiple users. For instance, in the IEEE 802.11 (WiFi) standard, the overall available spectrum is currently approximately 72 MHz in the 2.4 GHz band but adjacent APs may be restricted to utilizing 22 MHz or less of the available spectrum because they may each need to operate in different spectral bands to reduce interference with each other and with the TDs. But this kind of frequency division multiplexing may hinder closely-spaced APs from fully utilizing the available spectrum and therefore supporting the predicted user demands of the future. Moreover, in such schemes, channel planning can be time-consuming and may fail altogether, either because of a lack of communication and/or coordination among multiple APs, or a lack of enough independent spectral bands to support the traffic demands. The system may suffer when APs are added or removed from the network because the channel planning may need to be done all over again. Femtocell networks may suffer from similar issues since the interference between macro- and/or femto- base stations or among multiple femto- base stations need to be coordinated and mitigated by division of the network resources; that is reducing the spectral allocation to individual users or cells. Therefore, while installing more OFDM (or similar existing protocol) based access points in a given wireless coverage area may be straightforward and a suitable solution for some applications, this solution alone does not appear to scale well enough to meet the predicted growth in traffic demands of future wireless network capabilities.

Another possible approach is to use multiple-input-multiple-output (MIMO) techniques such as have been incorporated in some existing OFDM based schemes such as WiFi and LTE (Long Term Evolution) to improve the spectral efficiency and/or reduce the scheduling delay of wireless networks. For example, multi-user multiple-input-multiple-output (MU-MIMO) techniques are able to support multiple simultaneous transmissions. However, in addition to the difficulty in operating multiple antennas, the number of supported simultaneous transmissions may be limited. Therefore, this solution alone may not be sufficient for the high network densification challenge described above. Recently, researchers have begun to investigate so-called massive MIMO techniques that use many more antennas than active terminals so that the extra antennas can help focus the wireless signal energy into smaller regions and support some level of spatial multiplexing in addition to frequency multiplexing. While the massive MIMO technique brings some unique benefits beyond the traditional MIMO system, the cost and complexity of implementing these schemes scales up with the number of antennas, which may hinder it from being widely adopted. The principle of utilizing extra antennas can also be applied in distributed antenna systems where some additional antennas are placed close to the users. The wireless signal energy can be focused into a small area through the coordination of the local antennas and thus the system may be able to provide high data rates for certain terminal devices. However, the complexity of the system and of coordinating the antennas grows with the system size, which may limit the scalability of this solution. Therefore, there is a need for wireless communication technologies that can efficiently and cost-effectively meet the ever increasing demands for wireless access to the internet.

Another challenge that may be addressed using novel wireless signaling protocols is accurate indoor position identification and tracking. The global positioning system (GPS) uses signals from satellites to provide users and devices equipped with GPS equipment location and time information. When a user is navigating inside buildings, GPS signals may be weak or unavailable. In some examples, Wi-Fi signals from wireless access points can be used to determine coarse positions. For example, a wireless device can measure the average received signal strength (RSS) and use the RSS indicator (RSSI) of the received wireless signal to estimate its distance from a wireless access point. Such systems may be able to estimate that a device is a certain distance from an access point, but may not be able to indicate the relative orientation of the device, that is, whether the device is in front or in back or on the side of the access point. In some situations, signals from multiple wireless access points can be used to estimate the position of the device using triangulation, but such schemes have not reported indoor positioning accuracies greater than a few meters. Other known techniques for determining position of a device in an indoor environment include so-called time of arrival (ToA) or time of flight (ToF) techniques, time difference of arrival

(TDoA), and angle of arrival (AoA) techniques. These techniques also achieve positioning accuracies of a few meters. Therefore, there is a need for positioning technologies that can determine and/or track the position of a user or a device with high resolution accuracy.

Highly accurate indoor positioning technologies may be adapted for other applications such as gesture recognition, home security and indoor surveillance systems. Using wireless or "radio" technologies may have advantages over current solutions because low-radiation level radio systems are safe and do not require line-of-sight between a transmitter and a receiver may be implemented using current off-the-shelf components.

CA 2442950 A1 describes a method for mobile station location using wideband channel measurements' results applied to an artificial neural network (ANN).

## SUMMARY

The invention is defined in the claims.

## DESCRIPTION OF DRAWINGS

FIG. 1A shows an exemplary embodiment of a wireless system that includes two transceivers.

FIG. 1B shows a representation of a wireless signal being transmitted through a wideband channel.

FIG. 1C shows a view of operational principles of an exemplary time-reversal communication system.

FIG. 2A-C show exemplary embodiments of a positioning system.

FIG. 3 shows exemplary scattering elements placed around an antenna.

FIG. 4 shows an exemplary embodiment of a positioning system.

FIG. 5 shows a representation of locations related to an exemplary mapping training phase.

FIG. 6 shows an implementation of a time-reversal indoor positioning system.

FIG. 7 shows a graph that illustrates exemplary results of convolving an exemplary time-reverse channel response with an exemplary reference channel response.

FIGS. 8A and 8B are exemplary floor plans of an office environment.

FIG. 9A is a graph showing the amplitude and phase of an exemplary forward channel.

FIG. 9B is a graph showing the amplitude and phase of an exemplary backward channel.

FIG. 10 is a graph showing cross-correlation between the channel impulse response of the forward channel and that of the backward channel.

FIG. 11 is a graph showing the time-reversal resonating strength between exemplary forward and backward channel measurements.

FIG. 12 is a graph showing the time-reversal resonating strength between any two channel impulse responses from exemplary channel impulse responses measured at different short-term time periods.

FIG. 13 is a graph showing the time-reversal resonating strength between any two channel impulse responses from exemplary channel impulse responses measured at different long-term time periods.

FIG. 14 is a graph showing the time-reversal resonating strength among channel responses collected under a dynamic environment.

FIG. 15 is a graph showing exemplary focusing gain at various grid points.

FIG. 16 shows virtual spatial focusing effect evaluated using 1 cm grid spacing.

FIGS. 17A-D show exemplary wireless communication links between one or more transmit antennas and one or more wireless receiver antennas.

FIG. 18A shows a block diagram of an exemplary WiFi system capable of determining device location.

FIG. 18B shows an exemplary non-overlapping channel tuning scheme and an exemplary overlapping channel tuning scheme.

FIGS. 19-25 show calculated resonating strengths between a stored channel response and a newly measured channel response at various locations.

FIG. 26 shows an exemplary positioning system that includes two general purpose computers.

FIG. 27 shows a flow diagram that illustrates a training phase methodology.

FIG. 28 shows a flow diagram that illustrates a localization phase methodology.

FIGS. 29-40 show confusion matrices that represent resonating strengths according to various embodiments of the positioning system of FIG. 26.

FIGS. 41-52 show receiver operating characteristic (ROC) curves that illustrate the performance of various embodiments of the positioning system of FIG. 26.

FIG. 53 shows an exemplary multi-user positioning system that includes a locator and multiple terminal devices.

FIG. 54 shows example gestures that may be recognized by a positioning system.

FIGS. 55-57 show examples of channel probe signals and representations of the channel probe signals after they have been filtered by a root-raise-cosine filter.

FIGS. 58-60 show examples of location specific signatures at various locations and various signal bandwidths.

FIG. 61 shows an example of a channel probing signal.

FIG. 62 shows an example of a representation of a technique for modulating at least a portion of the channel probe signal of FIG. 61.

FIG. 63 shows an example of portions of a training sequence of the channel probing signal of FIG. 61.

FIG. 64 shows an example of a representation of a technique for determining a synchronization index.

FIG. 65 shows an example of a representation of a technique for confirming a synchronization.

FIG. 66 shows a representation of a Toeplitz matrix.

FIG. 67 shows an example of a synchronization mismatch histogram.

FIG. 68 shows an example of an autocorrelation function of a pseudo random code.

FIGS. 69-71 show examples of estimated channel responses determined using a least square based method.

FIG. 72 is a graph showing a waveform for real and imaginary parts of actual and estimated channel responses.

FIG. 73 is a diagram showing exemplary transmission of signals from two transmitter antennas to two receiver antennas.

FIGS. 74, 76, and 78 are graphs showing results of performing K-means clustering on CSI ensembles of a link between a transmitting antenna and a receiving antenna using various numbers of clusters.

FIGS. 75, 77, and 79 are graphs showing centroids of the K-means clustering on the link of FIGS. 74, 76, and 78.

Like reference symbols in the various drawings indicate like elements.

## DETAILED DESCRIPTION

This invention relates to a method and an apparatus that may take advantage of location-specific wireless signatures to improve communication, positioning, recognition, and security systems, to name a few. The technology takes advantage of rich multipaths in wireless signal propagation and may also take advantage of the physics of reciprocal responses that resonate with the environment to focus signal energy to specific positions. The technologies and techniques described herein may improve the resolution of indoor positioning systems, provide detection of any physical changes within a given environment and can be used to monitor the discrete movement of physical objects within space with spatial resolutions of 5 cm or less. In addition, the technology can support multiple connected devices within a wireless network to communicate at full or nearly full data rates with physical security with little impact from other devices or other wireless networks present within the same physical spectrum. The technology can also be used for event/object recognition via radio, e.g. computer vision without seeing.

Location specific signatures may be generated when a wireless signal launched by an antenna is scattered and/or reflected and/or diffused by the physical environment through which it travels. Multipath propagation may occur when portions of the launched signal are scattered away from the line-of-sight propagation path. These scattered components of the signal may eventually make their way to a given receiver antenna and/or back to the transmitting antenna but may arrive at different times and with varying amplitudes. In traditional wireless networks, such signal reflections, diffractions, echoes, or "multipaths" may be viewed as a problem because if left uncorrected, they may reduce the range and reliability of a communication link. In this disclosure, we describe systems, technologies and techniques that may take advantage of multipath wireless signal propagation and that may be used in communication, indoor positioning and/or tracking, recognition, and security system applications, to name a few.

In this disclosure, the term "user" may refer to a device and/or an antenna. For example, in a system that has multiple devices communicating with a base station, the term "multi-user uplink" may refer to the uplink from multiple devices or from a device with multiple antennas, the term "multi-user downlink" may refer to the downlink to multiple devices or to a device with multiple antennas, and the term "inter-user interference" may refer to the interference among various devices.

In this disclosure, wireless signals may propagate between two devices and they may propagate away from one device and then back to it after being reflected and/or scattered. In this disclosure, a so called embodiment or exemplary embodiment does not necessarily comprise all features of one of the independent claims.

In some embodiments, a device may also be referred to as a base station, an access point, a locator, a transmitter, a receiver, a transceiver, a source, a router, a time reversal machine, an origin, a computer, a node, a gateway, a bridge, an antenna, and the like. In some embodiments, a device may also be referred to as a user, a terminal device, a mobile device, a phone, a computer, a tablet, a wearable electronic device such as a watch, a band, a wristband, an ankle band, a belt, a sensor, a piece of clothing and the like, an electronic card, fob, dongle, and the like, a "pinger", a bot, an antenna, and the like. In some embodiments that include more than one device and/or more than one antenna, the described roles of one device may be exchanged with the described roles of another device. In embodiments described as having two devices, or an access point and a terminal device, or similar descriptions, it should be understood that those embodiments may also include more than two devices. For example, embodiments described as having an access point and a device may have multiple devices and/or may have multiple access points. Likewise, embodiments may have multiple base stations, locators, routers, transceivers, sources, transmitters, receivers, mobile devices, phones, tablets, computers, wearable electronic components, cards, fobs, dongles, pingers, devices, antennas, time reversal machines, origins, bots, and the like.

Location Specific Signatures

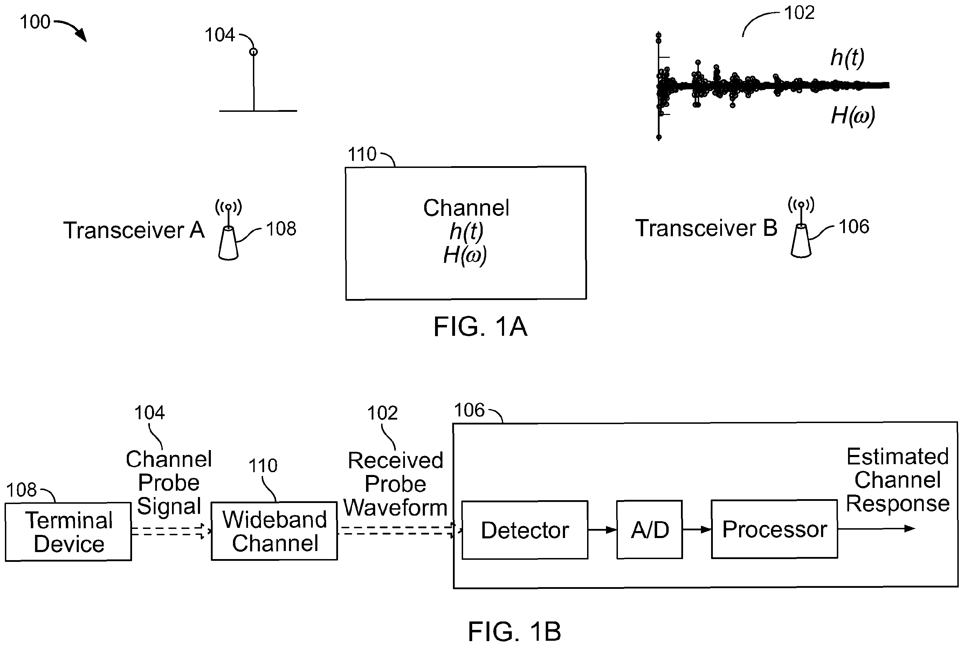

FIG. 1A shows an exemplary embodiment of a wireless system comprising two transceivers. In this embodiment, transceiver A 108, comprising an antenna, launches a wireless signal 104 that propagates through a wireless channel 110 and arrives at transceiver B 106, comprising an antenna, as a multipath wireless signal 102. In exemplary embodiments, at least one antenna may launch at least one wireless signal into a channel and at least one antenna may receive a signal from the wireless channel. In embodiments, the transmitting and receiving antennas may be placed apart from each other, and in some embodiments, they may be co-located. For example, a device, computer, mobile device, access point and the like may comprise more than one antenna and the antennas may be operated as either or both transmit and receive antennas. In some embodiments, the at least one antenna may be a single antenna that may be used to both launch wireless signals into a channel and to receive multipath signals from the channel. In embodiments, antennas may transmit and receive signals in different time slots, in different frequency bands, in different directions, and/or in different polarizations or they may transmit and receive signals at the same or similar times, in the same or similar frequency bands, in the same or similar directions and/or in the same or similar polarizations. In some embodiments, antennas and/or devices comprising antennas may adjust the timing, carrier frequency, direction and/or polarization of signal transmissions and signal receptions.

Throughout this disclosure, where systems, techniques and/or methods are described as using a transmit antenna and a receive antenna, it should be understood that in some embodiments, the transmit antenna and receive antenna may be physically the same antenna or may be antennas that are physically very close together. In some embodiments, the transmit antenna and receive antenna may be apart from each other. In embodiments, transmit and receive antennas may be approximately 1 mm apart, 5 mm apart, 1 cm apart, 5 cm apart, 10 cm apart, 50 cm apart, 1 meter apart, 5 m apart, 10 meters apart, 50 meters apart or 100 meters apart. In embodiments, antennas may be between 1 mm and 100 m apart. In embodiments, antennas may be more than 100 m apart. In embodiments, conducting planes may be used to provide some isolation between transmit and receive antennas and/or to shape radiation patterns.

Antennas in exemplary embodiments may be any type of electrical device that converts electric power or electric signals into radio waves, microwaves, microwave signals, or radio signals, and vice versa. By way of example but not limitation, the at least one antenna may be configured as a directional antenna or an omni-directional antenna. The at least one antenna may be some type of monopole antenna, dipole antenna, quadrapole antenna and the like. The at least one antenna may be some type of loop antenna and/or may be formed from a length of wire. The at least one antenna may be a patch antenna, a parabolic antenna, a horn antenna, a Yagi antenna, a folded dipole antenna, a multi-band antenna, a shortwave antenna, a microwave antenna, a coaxial antenna, a metamaterial antenna, a satellite antenna, a dielectric resonator antenna, a fractal antenna, a helical antenna, an isotropic radiator, a J-pole antenna, a slot antenna, a microstrip antenna, a conformal antenna, a dish antenna, a television antenna, a radio antenna, a random wire antenna, a sector antenna, a cellular antenna, a smart antenna, an umbrella antenna and the like. The at least one antenna may also be part of an antenna array such as a linear array antenna, a phased array antenna, a reflective array antenna, a directional array antenna, and the like. The at least one antenna may be a narrowband antenna or a broadband antenna, a high gain antenna or a low gain antenna, an adjustable or tunable antenna or a fixed antenna. Any type of antenna may be configured for use in the systems, methods and techniques described herein. In embodiments, the radiation pattern associated with an exemplary antenna may be tunable and may be tuned to improve the performance of the exemplary systems, methods and techniques described herein.

In embodiments, electrical signals may be applied to one or more antennas for wireless transmission and may be received from one or more antennas for processing. In embodiments, wireless signals may be radio waves or microwaves. In embodiments, wireless signals may have carrier frequencies anywhere in the range from kilohertz to terahertz. In embodiments, antennas may comprise at least one of a filter, amplifier, switch, monitor port, impedance matching network, and the like. In embodiments, electrical signals may be generated using analog and/or digital circuitry and may be used to drive at least one antenna. In embodiments, electrical signals received from at least one antenna may be processed using analog and/or digital circuitry. In exemplary embodiments of the inventions disclosed herein, electrical signals may be sampled, digitized, stored, compared, correlated, time reversed, amplified, attenuated, adjusted, compensated, integrated, processed and the like.

In this disclosure, the signal launched by a transmit antenna for the purpose of probing characteristics of the channel may sometimes be referred to as a probe signal or a channel probe signal or a channel probe waveform. FIG. 1B shows a representation of a wireless signal 104 being transmitted from a first device 108 to a second device 106 through a wideband channel 110. The channel probe signal 104 may traverse a wideband wireless channel 110 and arrive at a second device 106, in this example device 106, as what we may also refer to as a received probe waveform 102. This received probe waveform 102 may be received and processed by a receiver comprising at least one antenna and a set of receiver electronics. In exemplary embodiments, the processing of the received probe waveform 102 yields an estimated channel response for the wideband channel between devices 108 and 106. In embodiments, probe and received signals may be analog signals that are converted to digital signals (and may be digital signals that are converted to analog signals) and may be processed and/or generated using digital signal processors (DSPs), field programmable gate arrays (FPGAs), Advanced RISC Machine (ARM) processors, microprocessors, computers, application specific integrated circuits (ASICs) and the like.

In the time domain, the channel impulse response of a communication link can be modeled as

$$h_i[k] = \sum_{l=0}^{L-1} h_{i,l}\, \delta[k - l],$$

(Equ. 1)

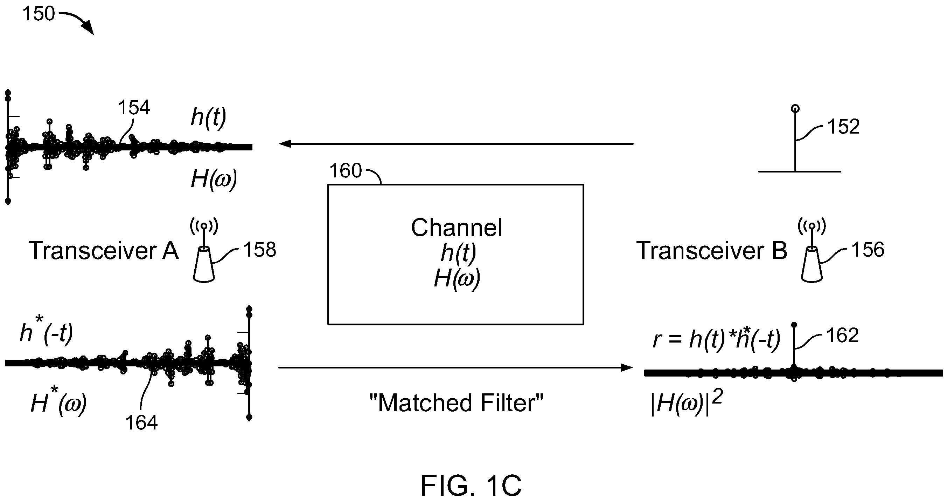

where $h_i[k]$ is the $k$-th tap of the CIR with length $L$, and $\delta[]$ is the Dirac delta function. Note that the time domain representation of the channel response, $h$, and the frequency domain representation of the channel response, $H$, are related by the Fourier Transform. This duality is illustrated symbolically in FIG. 1C, and will be discussed later in this disclosure. In embodiments where a channel response is determined between two separate antennas $i$ and $j$, the channel response function notation may include either or both indices as a subscript. For example, if a single access point is receiving signals from multiple devices, $i$, the channel response may be indicated as $h_i$ (or $H_i$ in the frequency domain). If multiple access points, $j$, are receiving signals from multiple devices, $i$, the channel response may be indicated as $h_{ij}$ (or $H_{ij}$ in the frequency domain). In embodiments where a single antenna is both transmitting a probe signal and receiving a probe signal waveform, the indices $i$ and $j$ may represent time slots, frequencies, polarizations and the like.

The received probe waveform may be predicted by convolving the channel probe signal with the channel impulse response, if the channel impulse response is known. The channel impulse response or estimated channel response may be an approximation or an estimate of the actual channel impulse response. For example, the estimated channel response may be truncated to a certain channel length that is deemed to be an "accurate-enough" estimate of the channel or that is chosen to preferentially probe certain characteristics of the channel. In addition, the estimated channel response may be derived from a discretized approximation of a received probe waveform with the time and amplitude resolution of the discretized signal determined to be "accurate enough" for a particular application. The estimated channel response may be a filtered version of the actual channel response and may be an accurate-enough estimate of the channel. The determination of what is "accurate-enough" may depend on the application, the hardware components used in the wireless devices, the processing power of the devices, the allowed power consumption of the devices, the desired accuracy of the system performance, and the like.

If the probe signal transmitted by a device is a single pulse or impulse signal, then the received probe waveform may be an accurate enough estimate of the channel impulse response and little additional processing other than reception, discretization and storage of the received probe waveform may be necessary to obtain the estimated channel response. If the probe signal transmitted by a device is a waveform other than a single pulse or impulse signal, then a receiver may need to perform additional processing on the received probe waveform in order to determine the estimated channel response. In an exemplary embodiment, a receiver may detect and discretize a received probe waveform. Analog-to-digital (A/D) converters may be used to perform the discretization. In embodiments, a deconvolution process may use the discretized received probe waveform and a representation of the channel probe signal to yield the estimated channel response. In embodiments, other mathematical functions may be used to yield estimated channel responses. Channel impulse responses (CIRs) may also be referred to in this document as channel responses (CRs), CR signals, CIR signals, channel probe signal responses, and estimated channel responses. Channel responses may be measured and/or computed and/or may be generated by a combination of measurement and computation. In this disclosure we may also refer to channel responses and received probe waveforms as location-specific signatures.

In embodiments, different channel probe signals may be chosen to increase or decrease the accuracy of the estimate of the channel response of a wideband channel. In exemplary embodiments, a channel probe signal may be a pulse or an impulse. In addition, the channel probe signal may be a series of pulses with regular, arbitrary or non-regular patterns. The channel probe signal may be a waveform. Waveforms may be substantially square waveforms, raised cosine waveforms, Gaussian waveforms, Lorentzian waveforms, or waveforms with shapes that have been designed to probe the channel in some optimal or desired way. For example, channel probe waveforms may be frequency chirped or may have frequency spectra that are tailored to probe the channel in some optimal or desired way. Probe waveforms may be multiple waveforms with different center frequencies and bandwidths. Probe waveforms may be amplitude modulated, phase modulated, frequency modulated, pulse position modulated, polarization modulated, or modulated in any combination of amplitude, phase, frequency, pulse position and polarization.

The waveform may have a temporal width that is substantially equal to a bit duration of a data stream that may be intended to be exchanged over the associated communication channel. The waveform may have a temporal width that is substantially half, substantially one quarter, substantially one tenth, substantially one hundredth, or less than a bit duration of a data stream intended to be exchanged over the associated communication channel. The probe signal/waveform may be a data pattern and may be a repeating data pattern. The probe signal may include packet and/or framing information, synchronization and/or clock recovery information, stream capture information, device ID and network and link layer operating information. The probe signal may have a frequency spectrum that has been tailored for the operating environment and/or the electronic components in the transmitters and/or receivers of the systems. The probe signal may be an estimate of the channel impulse response or may be an altered version of the estimate of the channel impulse response. For example, the probe signal may be a time-reversed version of the estimated channel response. The probe signal may be designed to compensate for and/or to accentuate signal distortions imposed by certain electronic components in the transmitters and/or receivers and/or imposed by certain environmental factors.

One exemplary type of a channel probing signal is a periodic pulse sequence. With such a channel probing signal, the received probe waveform may be a noisy version of the periodic channel pulse response. In embodiments, a time-averaging scheme can be used to suppress the noise and extract the channel response.

In some embodiments, a time-averaging scheme may not provide a reliable measure of the channel response. To improve the channel response estimation, a longer sequence of pulses can be used to suppress the noise. To further improve the performance of the system, a short pseudo-random sequence of pulses can be used as the channel probing signal. In such a case, the received probe waveform can be the convolution of the pseudo-random sequence with the channel response.

In embodiments, the pseudo-random sequence used as the probing signal may be known by a receiver. Then the channel response can be estimated using a correlation-based method where the received signal is convolved with the pseudo-random sequence. In general, the auto-correlation of the pseudo-random sequence may not be an ideal delta function because there can be inter-symbol interference and thus error in the estimated channel response. In embodiments, such kinds of channel estimation error due to inter-symbol interference may be minimized or avoided by using orthogonal Golay complementary sequences, which may have an ideal delta shape for auto-correlation function, rather than a pseudo-random sequence.

In embodiments, a wireless device may transmit a first wireless signal with a center frequency of $f_1$ GHz. In embodiments, the first wireless signal may be a channel probe signal, a pulse signal, a frame signal, a pseudorandom noise (PN) sequence, a preamble signal, and the like. In embodiments, the bandwidth of the wireless signal may be approximately 10 MHz, 20 MHz, 40 MHz, 60 MHz, 125 MHz, 250 MHz, 500 MHz, 1 GHz and the like. In embodiments, a wireless device may send a second wireless signal with a center frequency of $f_2$ GHz. In embodiments, the second wireless signal may be a channel probe signal, a pulse signal, a frame signal, a PN sequence, a preamble signal, and the like. In embodiments, the bandwidth of the wireless signal may be approximately 10 MHz, 20 MHz, 40 MHz, 60 MHz, 125 MHz, 250 MHz, 500 MHz, 1 GHz and the like. In embodiments, the frequency spectrum of the first wireless signal and the second wireless signal may include overlapping frequencies. In some embodiments, there may be no overlapping frequencies between the two wireless signals. In some embodiments, the frequency spectra of the different wireless signals may be separated by so-called guard-bands or guard-band frequencies. The channel response for the channel probed using the first wireless signal (for example at frequency $f_1$) may be represented as $H_{ij}(f_1)$. The channel response for the channel probed using the second wireless signal (for example at probe frequency $f_2$) may be represented as $H_{ij}(f_2)$. In embodiments, more than two probe frequency signals may be used to probe the channel. The more than two probe frequency signals may have some overlapping frequencies or they may have no overlapping frequencies.

In embodiments, a wireless device may use channel tuning and/or frequency hopping to tune to different wireless signal carrier frequencies to probe a wireless channel. In some embodiments, a wireless device may tune to different channels within a specified frequency band to probe the wireless channel. For example, a wireless device may first tune to one channel within the WiFi, (IEEE 802.11) signaling bandwidth and then to another channel within the wireless band. The frequency tuning may be from one channel to the next in a sequential fashion, but it may also hop from one channel to another in a random fashion anywhere within the WiFi band. In embodiments, the different channels may have different channel bandwidths. In embodiments, any wireless protocol may be used to generate probe signals and/or to analyze channel information in the received signal.

In embodiments, multiple channel probe signals may be used to probe a channel. In some implementations, the same probe signal may be sent multiple times and the received probe waveforms may be averaged and/or compared. For example, a probe signal may be sent twice, 5 times, 10 times, 30 times, 50 times, 100 times, 500 times or 1000 times. In embodiments, a probe signal may be sent once or may be sent any number of times between 2 and 1000 times. In embodiments, a probe signal may be sent more than 1000 times. For example, in some monitoring and security applications, probe signals may be sent continuously. For example, probe signals at 1 probe signal per second, 10 probe signals per second, 100 probe signals per second, and the like may be sent continuously to monitor and probe a space. The rate at which probe signals are continually sent may be determined by the speed at which changes to an environment should be detected.

In embodiments, only some of the received probe waveforms may be used for further processing. For example, some received probe waveforms and/or the estimated channel responses may be discarded or trimmed. The discarded and/or trimmed waveforms and or responses may be sufficiently different from other received waveforms and/or estimated responses that they may be deemed as outliers and not accurate-enough representations of the channel. In some embodiments, different probe signals may be sent at different times and/or in response to feedback from the receiver. For example, a probe signal at the transmitter may be tuned to improve the received probe waveforms, the estimated channel responses and/or the similarity of the received probe waveforms and/or the estimated channel responses. In embodiments, a transmitter may send at least two different probe signals and a receiver may estimate channel responses based on either one, some or all of the at least two different received probe waveforms. In embodiments, probe signals may be versions of previously measured and/or calculated channel responses and/or time reversed versions of the measured and/or calculated channel responses.

As will be discussed in more detail later in this disclosure, similarity or matching or correlation of waveforms, signatures and/or responses may be determined using virtual time reversal processing techniques, time-reversal resonating strengths, pattern recognition and/or matching, linear and/or nonlinear support vector machines and/or support vector networks, machine learning, data mining, classification, statistical classification, tagging, kernel tricks (e.g., kernel methods that apply kernel functions) and the like.

In embodiments, processing a received probe waveform may include amplifying or attenuating any portion of the received signal. In embodiments, a channel may be probed once or a channel may be probed more than once. In embodiments, multiple received probe waveforms may be measured, processed, recorded and the like. In embodiments, some channel responses may be averaged with others. In embodiments, some channel responses may be discarded or not recorded. In embodiments, some channel responses may be measured under different environmental conditions and stored. Such stored response signals may be used as reference signals to indicate the environmental conditions associated with the original measurements. In embodiments, a newly measured channel response may be compared to a number of previously stored channel responses to determine which previously stored channel response most closely matches the newly measured channel response. Then, the environmental parameters of the most closely correlated or most closely matched previously stored channel response may be associated with the newly measured channel response. In exemplary embodiments, environmental conditions may include, but may not be limited to, temperature, location or placement of objects, location or placement of people, pose of objects, pose of people, location and/or pose of access points, terminal devices, position and/or pose of sensors, position and/or pose of signal reflectors, position and/or pose of signal scatterers, position and/or pose of signal attenuators, and the like.

In an embodiment, the estimated channel response is considered a location-specific waveform and/or signature because it represents the channel response between two devices at certain positions or between a device and the objects and/or structures in a venue or in a certain environment. As shown in FIG. 1B, if either a first device, in this example device 108, or a second device, in this example, 106, is moved, then at least some of the multiple propagation paths through which a signal propagates can change, thereby changing the channel response. If a single antenna is used for both transmitting and receiving signals, then objects and/or structures that are moved in a venue of environment may change the multiple propagation paths through which a signal propagates, thereby changing the channel response. The characteristics of the estimated channel waveform and how much they change as a function of position and/or orientation may depend on the venue, the environment, and the hardware components in the system, and the like.

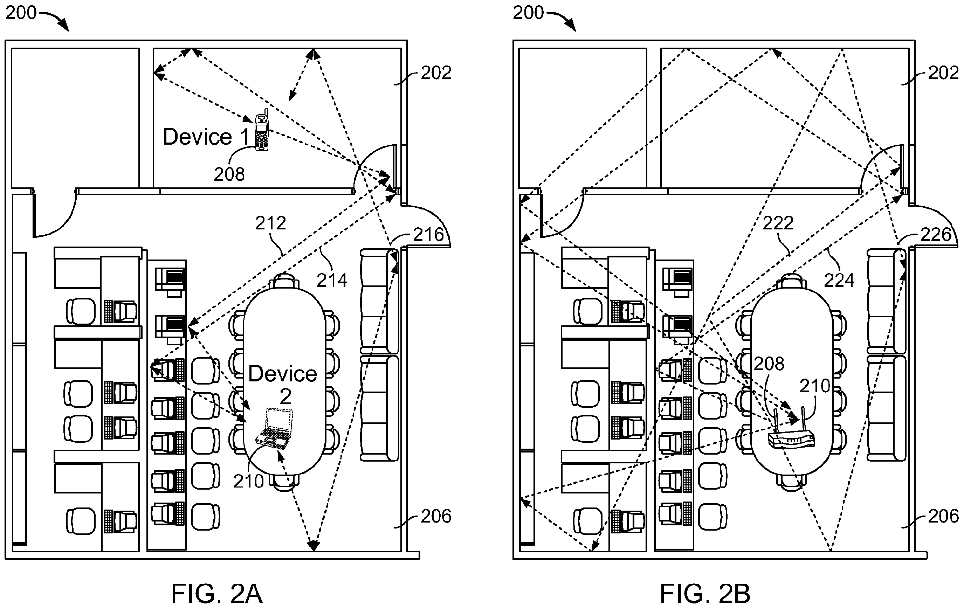

FIG. 2A shows an exemplary embodiment of a positioning system in which a first wireless device 208 may receive a location-specific signature from a second wireless device 210. Location-specific signatures may be generated in environments having structures or objects that may cause one or more reflections of wireless signals. For example, as shown in FIG. 2A, a venue 200 may have a first room 202 and a second room 206. When a first device 208 in the first room 202 transmits a signal to a second device 210 in the second room 206, the signal can propagate in several directions and reach the second device 210 by traveling through several propagation paths, e.g., 212, 214, and 216. The signal traveling through multiple propagation paths is referred to as a multipath signal. If the signal being transmitted by a first device over a wideband channel is used to probe the channel response, then the signal also may be referred to as a channel probe signal. As the signal travels through the propagation paths (wideband channel), the signal may become distorted. The multipath signal received by the second device 210, which may also be referred to as the received probe waveform, can be quite different from the signal transmitted by the first device 208. The received probe waveform is a location-specific signature because it is specific to the relative positions of a first wireless device and a second wireless device in that venue or environment.

FIG. 2B shows an exemplary embodiment in which a first wireless device antenna 208 may receive a location-specific signature from a second wireless device antenna 210 and where both antennas share a common housing or device or circuit board, and the like. In the exemplary embodiment shown in FIG. 2B, a venue 200 may have a first room 202 and a second room 206. When a first device antenna 208 in the second room 206 transmits a signal to a second device antenna 210 in the second room 206, the signal can propagate in several directions and reach the second device antenna 210 by traveling through several propagation paths, e.g., 222, 224, and 226. The multipath signal received by the second device antenna 210, which may also be referred to as the received probe waveform, can be quite different from the signal transmitted by the first device antenna 208. The received probe waveform is a location-specific signature because it is specific to the relative positions of a first wireless device antenna and a second wireless device antenna in that venue or environment.

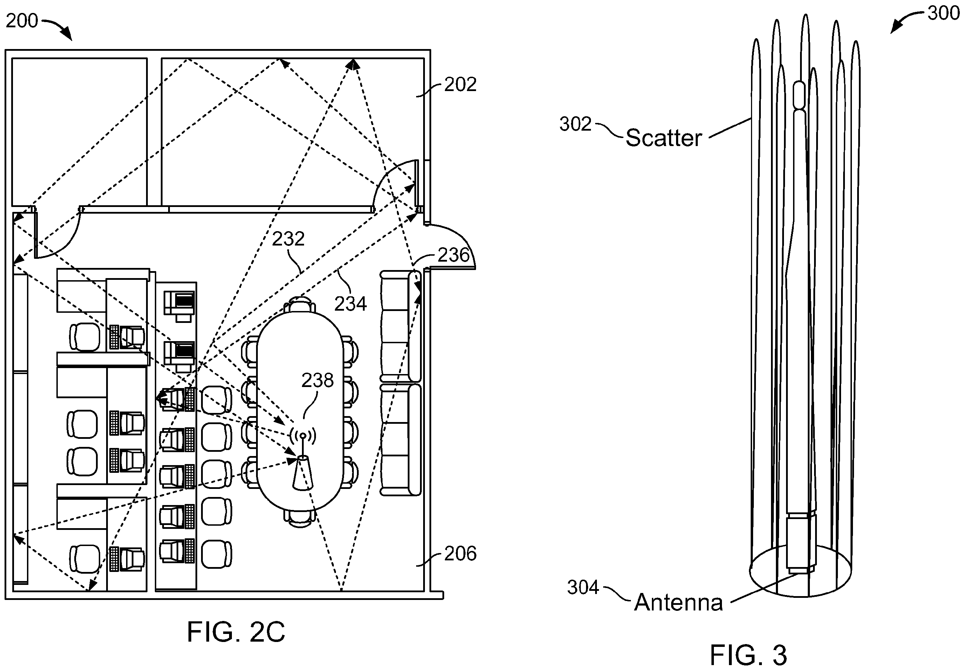

FIG. 2C shows an exemplary embodiment in which a first wireless device antenna 238 may transmit and receive wireless signals. In this embodiment, antenna 238 may transmit a channel probe signal and may receive a received probe waveform. In embodiments, the transmit and receive signals may be time multiplexed, frequency multiplexed, and/or polarization multiplexed. In embodiments, the wireless device antenna 238 may comprise switches that may be used to switch at least a portion of the circuits coupled to the antenna between transmitter circuit components and receiver circuit components. In the exemplary embodiment shown in FIG. 2C, a venue 200 may have a first room 202 and a second room 206. When the device antenna 238 in the second room 206 transmits a signal, the signal can propagate in several directions and reach the device antenna 238 by traveling through several propagation paths, e.g., 232, 234, and 236. The multipath signal received by the device antenna 238, which may also be referred to as the received probe waveform, can be quite different from the signal transmitted by the device antenna 238. The received probe waveform is a location-specific signature because it is specific to the position of the wireless device antenna in that venue or environment.

In an exemplary embodiment, the position accuracy of a system can be improved by placing one or more scattering elements 302 around a transmitter antenna 304 of a terminal device 300, as shown in FIG. 3. By using the scattering elements 302, the localization accuracy of the positioning system can be improved to about 1/30 of the carrier signal wavelength (e.g., which is about 2 mm when the positioning system is operated at 5GHz frequency).

For example, a feature of the exemplary positioning system of FIG. 2A is that the devices 208, 210, may use a wider bandwidth compared to conventional radio-frequency based wireless systems, such as those based on Wi-Fi, Bluetooth, or cellular signals. When using a wider bandwidth, the fine structure of the measured channel responses can be more clearly distinguished, causing the correlation or degree of similarity between channel responses at different locations to decrease. As a result, the localization accuracy of location-specific signatures may improve as the bandwidth becomes wider. For applications that require less localization accuracy, a location-specific signature may be determined using narrower bandwidth signals and/or may provide filters or signal smoothing components in the received signal path to increase the correlation of the channel responses at different locations. For applications that require more localization accuracy, a location-specific signature may be determined using wider bandwidth signals and/or higher bandwidth and/or higher resolution analog-to-digital and digital-to-analog converters.

Positioning Systems

This document discloses positioning systems that can achieve meter-level as well as centimeter-level or millimeter-level (or better) position accuracy by using wireless channel response information. Channel responses, also referred to as channel impulse responses (CIRs) and estimated channel responses can be location-specific signatures that characterize a wireless channel between, and therefore the relative position of, two devices or a single device and its environment. Channel responses may be measured and/or computed and/or may be generated by a combination of measurement and computation.

In an exemplary embodiment of a wireless positioning system, a first device may be referred to as a base station, or an access point, or a locator, and may receive probe waveforms from a second device transmitting channel probe signals. The locator is able to process a received probe waveform to generate a channel estimate for the channel between the locator and the device as it is positioned. The locator has also access to a list or a database of previously determined channel responses with corresponding location information or the locator has access to a tool that can generate predicted channel responses for devices at various locations relative to the locator. The locator may compare a channel estimate from the received probe waveform of the as-positioned device to stored and/or generated channel estimates and may associate a location with the as-positioned device if its estimated channel response is close enough to a stored and/or generated channel response.

In some implementations, a database of channel responses may be established, with each channel response being associated with one of a plurality of positions in a venue. The database of channel responses may be established by any or all or of a combination of a measurement, an estimation, a simulation, a calculation, a prediction, and the like. In an exemplary measurement technique, a device may be placed at various positions in a venue, and at each position, the coordinates of the device may be determined using a reference position measurement system, such as a laser interferometer position measurement system or by a user or device identifying its position on a 2D/3D visualization of the space. At each position, the device may send a probe signal, or multiple probe signals, that is/are received and/or detected by a locator. The locator may determine the channel responses based on the received probe waveforms, and may store the coordinates and the corresponding channel responses in a database. Due to reflections from, e.g., floor, ceiling, walls, and objects in the venue, the probe signals may propagate through multiple paths (multipaths) to the locator. When the device is at different locations in the venue, the probe signals transmitted from the terminal device to the locator may propagate through different multipaths, resulting in different channel responses received or detected at the locator. Thus, the information stored in the database may represent a mapping between the detected channel responses and corresponding coordinates in the venue. Later, when a device is placed at a position in the venue, the device may send another probe signal or set of probe signals to the locator. The locator may determine the channel response based on the received probe waveform or waveforms, and may look through the database to identify the positional coordinates that correspond to the most closely matching channel response. The positioning system may be especially useful in indoor environments where signals are subject to multiple reflections. The positioning system may also be especially useful in outdoor environments where tall buildings or various structures or other things may reflect and/or scatter electromagnetic signals creating multipath signals at a locator.

In embodiments, a database of channel responses may be stored locally and/or remotely. For example, an installed access point may comprise a database of channel response information that is associated with the area or venue in which the access point is installed. In another example, an installed access point may communicate to a remote node in a network that may comprise a database of stored channel response functions. In embodiments, the processing performed to determine the location of a device may be performed locally, at or near a locator or the processing may be performed on a remote resource. In embodiments, storing and processing resources may be included in a single device, and/or may be co-located, and/or may be distributed throughout a network. In embodiments, a database of channel resources may be accessible on the Internet or WorldWide-Web. In embodiments, channel response information may be stored on multiple servers and/or in multiple locations. In embodiments, information related to devices and their locations may be collected and/or processed and/or stored and/or made accessible to multiple users at multiple locations. In embodiments, a database of channel responses may be used to provide mapping and indoor location information. In embodiments, such a database could provide mapping functionality indoors. For example, a user may run an application on their device, or may access a remote server that sends indoor mapping information to the user. The user may be able to change the resolution of the mapping information, change the views of the mapping information, "zoom in" and "zoom out" of the mapping information using channel response information derived locally and/or from a network resource.

There are multiple exemplary techniques that a locator may use to "look through" a database and "identify" a correspondence between stored and recently determined channel responses. These techniques may include, but are not limited to, processing the stored and/or received data, comparing processed data to thresholds, identifying data that meet certain criteria such as having certain thresholds, and the like. Machine learning techniques may be applied to determine whether or not certain channel responses match, are correlated, are related, and the like. For example, using channel information as features or extracting features from the channel information, machine learning techniques such as support vector machine, decision tree, etc. can be used to learn a classifier for identifying the location. Processing of stored and/or received data may include but is not limited to sampling data, collecting data, eliminating data, statistically analyzing the data, performing mathematical functions such as multiplication, convolution (is actually included as defined in claims 1 and 8), correlation, matched filtering, integration, averaging, addition, subtraction, normalization, classification, training, kernel tricks, and the like, on the data.

In exemplary embodiments, a locator may measure a location-specific signature from a device. The received probe waveform may be predicted by convolving the channel probe signal with the channel impulse response, if the channel impulse response is known. In embodiments, wireless positioning systems may use a wider bandwidth compared to conventional radio-frequency based wireless systems, such as those based on Wi-Fi, Bluetooth, or cellular signals. When using a wider bandwidth, the fine structure of the measured channel responses may be more clearly distinguished causing the correlation among channel responses at different locations to decrease. As a result, the localization accuracy or resolution may improve as the bandwidth becomes wider. For applications that require less localization accuracy, a location-specific signature based positioning system may use narrower bandwidth signals and/or may provide filters or signal smoothing components in the signal path to increase the correlation of the channel responses at different locations. For applications that require more localization accuracy, a location-specific signature based positioning system may use wider bandwidth signals and/or higher bandwidth and/or higher resolution analog-to-digital and digital-to-analog converters. In some embodiments, the channel responses may be truncated to tune the location accuracy of the positioning system.

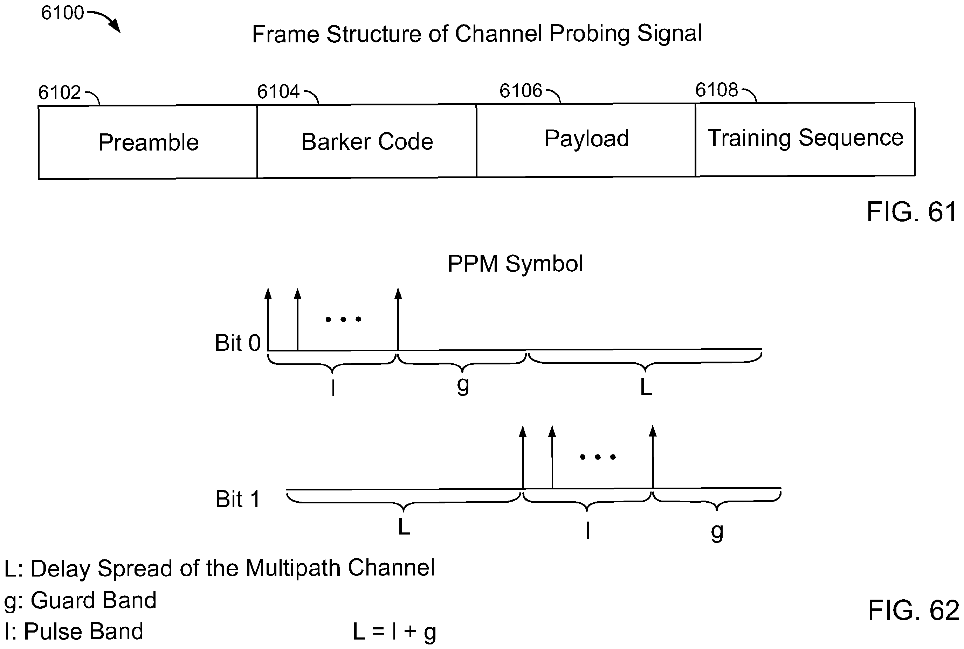

During the channel probing phase, the locator may need to obtain channel information that is sufficiently accurate in order to realize the required positioning accuracy of the system. In embodiments of the invention, time-reversed versions of the channel response are used to determine device positions. Such embodiments may take advantage of the focusing effects of time-reversal systems. Devices and methods for obtaining wireless channel information in a channel probing phase of a data communication system may be referred to as time reversal handshaking. In embodiments, channel probing is part of the handshaking process in the data communication system, and information obtained during the channel probing portion of the handshaking process can be used for, e.g., positioning, monitoring security, and gesture recognition. Techniques for time-reversal handshaking are described in U.S. patent application 14/183,648 and published as US 2015/0236848, titled "Handshaking Protocol For Time-Reversal System," filed on February 19, 2014, the contents of which are described below with respect to FIGS. 61-73.

In embodiments, a newly measured channel response is compared to a number of previously stored channel response measurements to determine which previously stored channel response measurement most closely matches the newly measured channel response. For example, the change of position of a device may be determined by comparing positions of a device at different times. For example, a device could be mounted on doors or windows of a house and determining a change in position (or a change in estimated channel response) may be used to indicate that a door or window has been opened. Such a system could be used for intruder detection or home monitoring applications. In embodiments, a device mounted on the shirt pocket or wrist of a senior citizen may be used to detect if the senior citizen has fallen to the ground. A device may be attached to a product in a warehouse and used to detect the type and location of the product and update inventory in real-time. A device may be held and/or carried by a person walking around in a shopping mall and used for targeted advertising or store navigation. In embodiments, a device may be held or carried by a visitor and used for guided tours and/or to provide indoor navigation instructions.

Generating Reference Location-Specific Signatures with Known Locations

In exemplary embodiments, reference location-specific signatures for known locations may be compared against recently measured location-specific signatures. If the comparison indicates that those location specific signatures are similar enough to each other, then a location system may determine that the recently measured device is at the known position corresponding to the closely matched reference location-specific signature. In embodiments, there are a variety of ways to determine reference location-specific signatures for known locations.

In one exemplary embodiment, devices in a venue at known locations may send channel probe signals to a locator and the locator may determine the estimated channel responses for devices in those locations and store that data in a database. In some implementations, a mapping between locations in a venue and corresponding reference channel responses may be established experimentally or by measurement prior to the operation of the positioning system and then the mapping may be used to determine the locations of the terminal devices within the venue. In some implementations, a mapping between locations in a venue and corresponding reference channel responses may be established by computation and then mapping may be used to determine the locations of the terminal devices within the venue. In some implementations, a combination of experiments or measurements and computations are used.

In some implementations, reference channel responses may be established prior to the operation of the positioning system or they may be established on-the-fly or at the same time that the positioning system is operating. In embodiments, pre-established reference channel responses may be periodically checked for accuracy or validity, for example by performing some or all of the techniques used to generate the reference channel responses in the first place and then calculating whether the newly estimated channel responses match the older stored channel responses. If they do not sufficiently match, then the newer channel response may replace the older channel response in the database. The determination of whether or not two or more channel responses match well enough may be user and/or application and/or system specific. Also, the steps that a system may initiate, such as replacing channel responses in a database, may also be user and/or application and/or system specific. In some embodiments, less than all of the reference channel responses may be checked and/or recalibrated.

In some embodiments, the reference channel responses may be continually expanded and/or improved. For example, certain sensors may be placed throughout a venue at known locations. As users approach the sensors, the users (or the users' devices) may trigger the sensor to communicate with the locator and the users' devices. This may cause the users' devices to send a channel probe signal so that the locator may check the accuracy of the current reference channel response associated with the sensor position and/or may add it to an existing database. In an exemplary embodiment, a pressure sensor in a floor may trigger the positioning system to collect a channel probe signal from a device when a person is standing in that position. Then, the locator may store the position of the sensor and the estimated channel response. It is envisioned that many types of sensors may be used in similar embodiments, for example thermal sensors, light sensors, motion sensors, intrusion sensors, cameras and the like. In addition, monitoring systems such as security cameras, NEST® thermostats, and the like may be used as sensors in the positioning systems described here.

In embodiments, the hardware components in devices may impact the channel response between the device and the locator. For example, two devices with different antennas and receiver electronics may be characterized by different channel responses between themselves and the locator. In addition to having access to reference channel responses for known locations, the locator may also have access to reference channels for known locations and classes of hardware specifications. In embodiments, a device may communicate with a locator to let it know its hardware configuration so that the locator can choose the appropriate reference channel responses to use to determine the position of the device. As described previously, locators may continually, or periodically, or in response to a trigger event, add to or modify the reference channel responses used to determine device position. For example, a locator may update the reference channel responses when a new type of device sends it a probe signal.

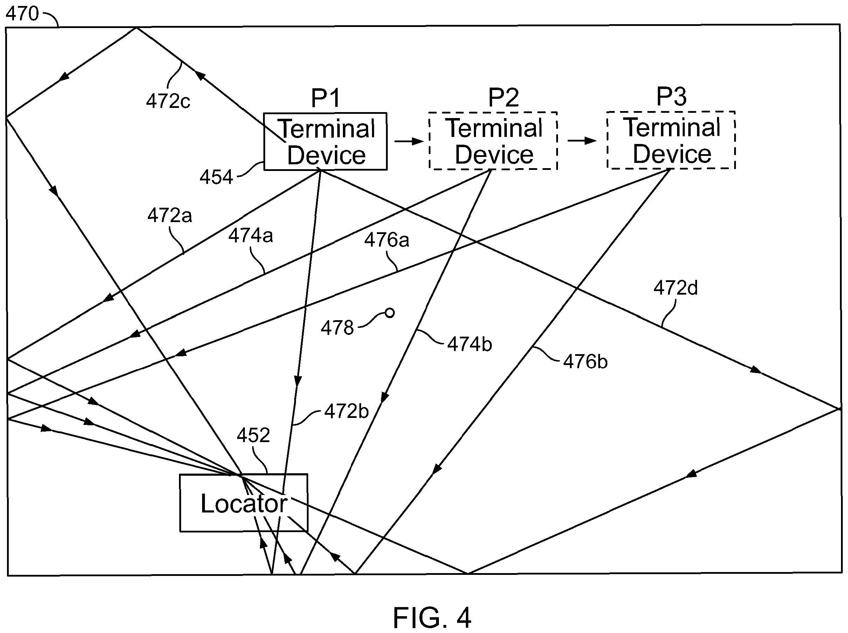

An exemplary embodiment of a positioning system is shown in FIG. 4. In this embodiment, the system may also be used to build a database of reference location-specific channel responses before or during its operation as a positioning system. A terminal device 454 may be placed at a first position P1 within a venue 470, which can be, e.g., a room, an office, a hall way, a classroom, a house, a hotel, a building, a barn, a museum, a convention center, an amusement park, a stadium, a subway station, a train station, an airport, a shopping mall, an underground terrain, a cruise ship, a tunnel, or a region having several structures or buildings, and the like. The terminal device 454 may send a channel probe signal to a locator 452 through multiple propagation paths, such as 472a, 472b, 472c, 472d (only a few paths are shown in the figure, but there can be additional paths). The venue 470 may have several objects (not shown in the figure), such as walls and furniture that can reflect and/or scatter the probe signal. The locator 452 may receive the multipath signal and determine the channel response CR1 associated with the position P1.

A reference position measurement system (not shown in the figure), such as laser interferometer position measurement system, may determine the coordinates (e.g., $(x1, y1, z1)$) of the position P1 relative to a reference point 478. The reference point 478 can be arbitrarily selected, such as the center of the venue 470, or a corner of the venue 470. A Cartesian coordinate system can be used, in which the reference point 478 is at the origin (having coordinates $(0, 0, 0)$) of the coordinate system, the x-axis, y-axis and z-axis all being mutually orthogonal. Other coordinate systems, such as polar coordinate systems, spherical coordinate systems, geographic coordinate systems, and the like, can also be used. The locator 452 may store the coordinates $(x1, y1, z1)$ of the position P1 and the associated channel response signal CR1 in a database.

In an exemplary embodiment, a terminal device 454 may be placed at a second position P2 within the venue 470 and may send a probe signal to the locator 452 through multiple propagation paths, such as 474a, 474b. The locator 452 may receive the multipath signal and determine the channel response CR2 associated with the position P2. The reference position measurement system may determine the coordinates $(x2, y2, z2)$ of the position P2 relative to the reference point 478. The locator 452 may store the coordinates $(x2, y2, z2)$ of the position P2 and the associated channel response CR2 in a database.

In an exemplary embodiment, a terminal device 454 may be moved to a third position P3 within the venue 470 and may send a probe signal to the locator 452 through multiple propagation paths, such as 476a, 476b. The locator 452 may receive the multipath signal and determine the channel response CR3 associated with the position P3. A reference position measurement system may determine the coordinates $(x3, y3, z3)$ of the position P3 relative to the reference point 478. The locator 452 may store the coordinates $(x3, y3, z3)$ of the position P3 and the associated channel response CR3 in a database.

In exemplary embodiments, a terminal device 454 may be placed at various positions in a venue so that a base station 452 can determine the channel responses associated with the positions. For example, the positions can be selected from an array of grid points, which can be spaced apart by a distance, such as 1000 wavelengths, 100 wavelengths, 10 wavelengths, one wavelength, one-half of the wavelength, or one-tenth of the wavelength of the carrier signal of the probe signal. The grid points may be spaced by, e.g., 0.1 mm, 0.5 mm, 1 mm, 1 cm, 10 cm, 1 m, 10 m, 100 m, or any amount between, e.g., 0.1 mm and 100 m. The grid points may be spaced more densely at places where higher precision is required, and spaced more sparsely at places where lower precision is acceptable. In some implementations, the position resolution may be finer than 0.1 mm or may be coarser than 100 m. For example, outdoor positioning systems, or position identification within large structures may have some applications that require resolutions of only a few hundred meters. Precision applications such as identifying surgical materials in a patient or identifying and probing silicon wafers may require resolutions on the order of a few nanometers. The technologies and techniques described in this disclosure can be adapted to meet the requirements for systems requiring from nanometer precision to multi-meter precision.

The grid points may span a three-dimensional space in the venue 470 so that the coordinates along x, y, and z axes can be determined. If the positioning system is mainly to determine the position of devices (e.g., cell phones) held by users walking in the venue 470, the grid points can be spaced more densely for a range of heights corresponding to the normal usage of the devices, e.g., from 1 foot to 6 feet above the floor. Thus, for example, if the venue is a convention center with a 20-foot high ceiling, it may not be necessary to measure the channel impulse responses associated with positions higher than 6 feet above the floor.

In embodiments, the placement of the devices during the measurement phase may be performed by human beings, by robots, by translation stages, by positioning systems and/or under computer control. For example, structures that allow devices to be placed at grid points 5 cm apart may be assembled in a venue. A human being or a machine may then move the devices to various positions on the structure so that measurements can be taken. For example, the structures may be designed to have a small impact on the channel responses. In some embodiments, robots, including known robots such as autonomous robotic vacuum cleaners, may carry devices used for measurements and may maneuver in a space so that measurements can be taken at various positions. The robot may move under its own control or may be remote controlled or computer controlled. The robot may be equipped with a pole that may hold devices at different distances from the floor so that 3-dimensional mapping of the venue may be achieved. Any of the techniques described above may be combined with other techniques or used individually.

In some implementations, if the positioning system is used to determine the positions of autonomous vehicles in a factory, and the terminal devices can be mounted on the vehicles, the grid points can be spaced more densely for a range of heights corresponding to the heights of the terminal devices mounted on the vehicles. The grid points can be spaced more densely for a range of x and y coordinates in the plane of motion corresponding to locations that the vehicles are designed to travel to.

In some implementations, if the positioning system is used to determine the positions of aerial vehicles (either manned or unmanned aerial vehicles (e.g., drones)) in a warehouse, and the terminal devices are mounted on the aerial vehicles, the grid points may extend over the entire range of heights corresponding to the possible flying heights of the aerial vehicles. The grid points can be spaced more densely for a range of x, y and z coordinates corresponding to locations in which the aerial vehicles are designed to travel.

In some implementations, a mapping between locations in a venue and corresponding channel responses may be established by computation, and mapping may then be used to determine the locations of the terminal devices within the venue. For example, a three-dimensional rendering of a venue may be stored or downloaded to a memory unit associated with the locator. If such data files are not available a priori, then they may be constructed by components at the locator. For example, a three dimensional (3D) model of a venue may be constructed using photos, images, videos, ranging techniques such as laser ranging, optical coherence tomography and the like, echo location, and/or other imaging techniques as well as computer vision and graphical techniques, and then importing the 3D model into a 3D electromagnetic (EM) simulator to generate a database of location-specific estimated channel responses in the environment. The 3D electromagnetic simulator may be a commercially available simulation suite such as COMSOL, ANSYS, MATLAB, NEC, AN-SOF, EMPro, XF-tdt, Wireless Insite, XGtd, Empire XPU, and the like. The 3D electromagnetic simulator may be custom developed to run on a locator, a base station, an access point and the like. The parameters such as reflection coefficients of different objects in the venue used by the 3D EM simulator to accurately predict the multiple channel paths between a transmitter and receiver in a venue can be trained and/or calibrated by measuring channel responses at a few locations and comparing the measured and predicted responses. In embodiments, parameters such as reflection coefficients of different objects in a venue may be preloaded and may have multiple values to account for environmental factors such as temperature, humidity, smog, and the like.

The information about a mapping between coordinates and channel responses can be stored in a table, such as Table 1 below.

Table 1

| Coordinates (inches) | Channel responses |
|---|---|
| (0, 0, 0) | CR1 |
| (0.5, 0, 0) | CR2 |
| (1,0,0) | CR3 |
| ... | ... |
| (0, 0.5, 0) | CRn |
| ... | ... |

After the mapping between coordinates and channel responses is established, the mapping can be used to determine the position of the terminal device within the venue 470. For example, the terminal device 454 can be placed at an unknown position in the venue 470, the terminal device 454 can send a probe signal that is received by the locator 452, and the locator 452 can determine the channel response CRx based on the received probe signal. The locator 452 can then compare the channel response CRx with the pre-stored channel responses in the table to identify a closest match. In this example, we assume that the pre-stored channel response CR3 most closely matches the channel response CRx. The locator 452 can determine that the terminal device 454 is at the coordinates (1, 0, 0) associated with the pre-stored channel response CR3.

In some embodiments, the locator may determine a value that represents how well a channel response CRx matches one, some or all of the pre-stored channel responses. If the closest matching pre-stored channel response is not a close enough match to the channel response CRx, then the locator may determine that the terminal device is not in the venue or is not positioned at a location in the database. The locator may make such a determination by requiring that a value that determines how well two channel responses match be above a certain value such as a threshold value.

A locator may also make a determination that some channel responses are not worth keeping or not worth using because the value resulting from comparison with other channel responses is below a certain value such as a threshold value. In embodiments, the threshold values may be user settable parameters and/or they may be values that result from calculations, the outputs of sets of instructions, feedback loops, other signals in the system and/or the venue and the like.

The efficacy of using location-specific signatures to determine position can rely on how well channel stationarity is maintained. Channel stationarity requires the channel response to be stationary between when the comparison signatures with known locations are generated and when the channel estimate for a device sending a probe signal to a locator is determined. In exemplary embodiments, the mapping between locations in a venue and corresponding channel responses may be updated, re-measured, re-computed, altered, processed, and the like, to maintain system performance when channel stationarity is not maintained.

Note that Table 1 above shows channel responses stored for different positional coordinates. As described above, the database may also associate channel responses with terminal device types, environmental parameters, the presence of certain people and/or objects in an area, measurement and/or calculation parameters such as probe signal bandwidth, carrier frequency, pattern, polarization, and the like. In some implementations, a positioning system may be able to determine and report that a person holding a particular type of mobile telephone (e.g., an iPhone®) is at position 1, a child holding a particular type of tablet computer (e.g., an iPad®) is at position 2, and a person holding a different type of mobile telephone (e.g., a Samsung Galaxy S6®) is at position 3, for example. The previous example is not meant to be limiting in any way. The number of devices and positions that may be identified may not be limited or may be limited by the storage size of the database and/or computational power of the components being used to do the data processing. In embodiments, the probe signal sent by different devices may comprise some sort of identification information such as a digital ID that may be able to be separately processed or derived from the estimated channel response. For example, if the ID is stored in a database such as exemplified in Table 1, a location system may also be able to determine and report the particular person and/or device is at a certain location within a venue.

In embodiments, positioning systems may be used to track movement of devices, people, vehicles, objects, structures and the like. For example, as a person walks through a mall, their position may be determined by the probe signals their device(s) send to a locator. As those positions change, the locator may keep track of the positions the person has been and may be able to store information related to the person's path through a mall. In some implementations (e.g., in a guidance application), a locator could determine that a user's path has taken them by a desired location, such as a shop or a set of restrooms, and then the locator may signal the user to turn around or change their path because they have passed their desired destination.

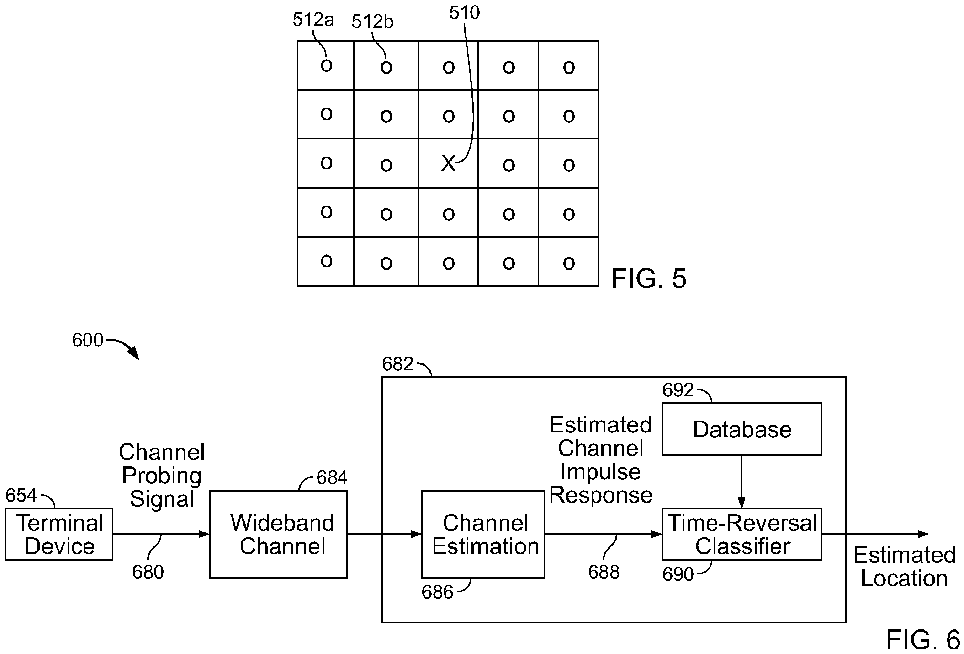

The following describes an exemplary training phase for building a database that has information on the mapping between position coordinates and channel responses. Referring to FIG. 5, in some implementations, for each intended location 510, we may obtain a series of channel responses at a set of locations (e.g., 512a, 512b) nearby the intended location 510 at different times. Specifically, for each intended location i, we may collect the channel impulse response information

$$\widetilde{h}_i = \{h_{i,1}(t = t_0), h_{i,2}(t = t_0), ..., h_{i,K}(t = t_0), h_{i,1}(t = t_1), h_{i,2}(t = t_1), ..., h_{i,K}(t = t_1), ..., h_{i,1}(t = t_M), h_{i,2}(t = t_M), ..., h_{i,K}(t = t_M)\}$$

(Equ. 2)

where $h_{i,j}(t = t_l)$ represents the estimated channel response information at neighbor $j$ at time $t_l$ and $h_{i,i}(t = t_l)$ represents the estimated channel response information at the intended location $i$ at time $t_l$. The database $D$ of channel impulse responses at various locations can be established as:

$$D = \{\bar{h}_i, \forall i\}$$

(Equ. 3)

Time-Reversal Classifier

The following describes an time-reversal classifier 690 as shown in FIG. 6. FIG. 6 shows an implementation of a time-reversal indoor positioning system (TRIPS) 600. In this example, a terminal device 654 periodically transmits channel probing signals 680 to a base station or an access point (AP) or a locator 682 through a channel 684. The access point 682 estimates the channel response (CR) by using a channel estimation component 686. The estimated channel response 688 is passed through a time-reversal classifier 690 to determine if there is a match to the location information stored in a database 692 to determine the location of the terminal device 654.

After obtaining the estimated channel impulse response information, the user (i.e., the terminal device 654) is localized by matching the estimated channel response information with the information stored in the database 692 using classification techniques. Because the dimension of the information for each location in the database 692 is high, classification based on the raw channel response information may take a long time. Therefore, it can be useful to pre-process the channel impulse response information to obtain important features to facilitate the classification.

As described above, because the waveforms received at the locator 682 undergo different reflecting paths and delays for terminal devices 654 at different locations, the channel response can be viewed as a unique location-specific signature. According to the invention the way to compare estimated channel responses from a device whose position is unknown with reference channel responses associated with known positions, is to time-reverse one of the channel responses and then convolve it with the other channel response. When convolving a time-reverse channel impulse response with a reference channel impulse response in the database 692, or when convolving a channel impulse response with a time-reverse reference channel impulse response, the convolution associated with the channel impulse response at the intended location will produce a large peak signal that can be used to indicate that the two channel responses are closely matched. Convolving the time-reverse version of one of the channel impulse responses, or a version of the channel impulse response related to a time-reverse version, with the comparison channel response, yields a mathematical function that has a large and tightly distributed peak when the responses are very similar to each other. The peak may become larger and more tightly distributed when the compared channel responses are more closely matched. In time-reversal imaging and communication systems, the peak that results from convolving a time reverse version of a channel impulse response with the channel itself is known as the spatial focusing effect. In exemplary embodiments, a positioning system 600 may use a time-reversal based dimension reduction approach to extract the effective feature for localization. Using time-reversed channel responses in calculations may be referred to as virtual focusing. The following describes an example of such a time-reversal based dimension reduction approach.

For ease of explanation, the collection of channel responses in Equation 2 can be simplified as

$$\tilde{h}_i = \{h_i(t=t_0), h_i(t=t_1),...,h_i(t=t_M)\}, \qquad \text{(Equ. 4)}$$

where $h_i(t=t_l)$ stands for the estimated channel impulse response information of location $p_i$ at time $t_l$. In Equation 4, the channel impulse response information at neighboring positions are not considered.

A time-reversal resonating strength, $\eta(h_1,h_2)$, between two channel impulse responses $h_1=[h_1[0],h_1[1],...,h_1[L-1]]$ and $h_2=[h_2[0],h_2[1],...,h_2[L-1]]$ can be defined as:

$$\eta(h_1,h_2) = \frac{\max_i \left| (h_1 * g_2)[i] \right|}{\sqrt{\sum_{i=0}^{L-1} |h_1[j]|^2} \sqrt{\sum_{i=0}^{L-1} |g_2[j]|^2}}, \qquad \text{(Equ. 5)}$$

where $g_2=[g_2[0],g_2[1],...,g_2[L-1]]$ is defined as the time reversed and conjugated version of $h_2$ as follows

$$g_2[k] = h_2^*[L-1-k], k=0,1;\cdot\cdot,L-1. \qquad \text{(Equ. 6)}$$

Equation 5 shows that the time-reversal resonating strength is the maximal amplitude of the entries of the cross-correlation between two complex channel impulse responses, which is different from the conventional correlation coefficient between two complex channel impulse responses where there is no max operation and the index $[i]$ in Equation 5 is replaced with index $[L - 1]$. One of the reasons for using the time-reversal instead of the conventional correlation coefficient is to increase the robustness for the tolerance of channel estimation error. Some channel estimation schemes may not be able to perfectly estimate the channel response. Instead, a few taps may be added or dropped during the channel estimation process. In such a case, the conventional correlation coefficient may not reflect the true similarity between two channel impulse responses, while the time-reversal resonating strength described above may be able to capture the real similarity by using the max operation and thus may increase the robustness of the results. In some embodiments, determining the conventional correlation coefficient may result in precise enough identification of similar channel responses and may be used in positioning systems as described herein. In some embodiments, the time-reversal techniques described and demonstrated below may be preferable.

The following describes an exemplary process for determining the position of a terminal device. Let $h$ be the channel impulse response that is estimated for the terminal device with unknown location. To match $h$ with the locations in a database of reference channel responses, we may first extract a feature using the time-reversal resonating strength for each location. Specifically, for each location $p_i$, we may compute the maximal time-reversal resonating strength, $\eta_i$, as follows

$$\eta_i = \max_{h_i(t=t_j)\in\tilde{h}_i} \eta(h, h_i(t=t_j)). \qquad \text{(Equ. 7)}$$

By computing $\eta_i$ for all possible locations, i.e., $\tilde{h}_i \in D$, we can obtain $\eta_1, \eta_2, ..., \eta_N$. Then, the estimated location, $\hat{p}_i$, can be the one that can give the maximal $\eta_i$, i.e., $\hat{i}$ can be derived as follows:

$$\hat{i} = \arg \max_i \eta_i. \qquad \text{(Equ. 8)}$$

In an exemplary embodiment, after the locator determines the location of the device, the locator may send the location coordinates of the device, as well as other information such as the type of device, to the device and/or another locator and/or a computer and/or a server in the cloud and/or any type of computing device. In embodiments, information from the device along with its location information may be sent to other systems such as advertising systems, tracking systems, payment systems, notification systems, monitoring systems and the like. Other systems may also send information to the device. For example, the device may receive "on-sale" information for stores in its vicinity and/or for items stored on a wish-list in the phone or based on bank account information on the phone. For example, stores selling expensive merchandise may send advertising information to users who have a history of purchasing higher cost items or who have considerable amounts of money in their bank accounts.

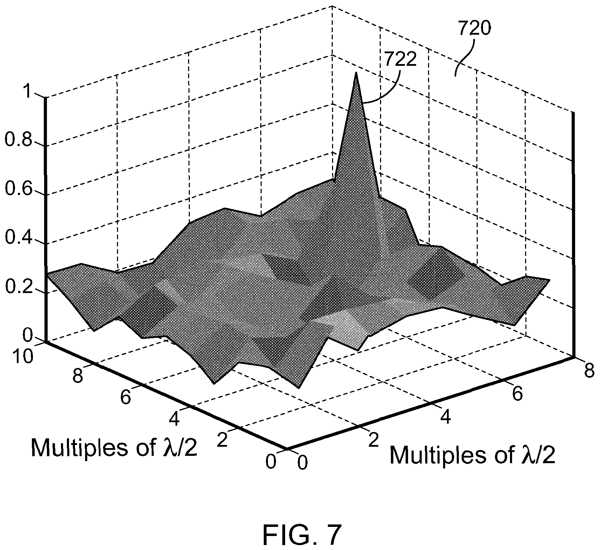

Referring to FIG. 7, a graph 720 showing an example of the results of convolving an exemplary time-reverse channel response with exemplary reference channel responses in a database (e.g., the database 692 of FIG. 6) for the intended location and locations in the vicinity of the intended location. At the intended location, there is a peak value 722. For the locations other than the intended location, there is little or no virtual focusing effect and the convolution values are much lower than the peak value. This indicates that the time-reversal based dimension reduction approach can be used to extract the effective feature for localization.

The following describes another example of time-reversal based dimension reduction approach, in which the collection of channel response information in Equation 2 is used. In Equation 2, the channel impulse response information at neighboring locations can be considered. Suppose the estimated channel impulse response is $h$ and the corresponding time-reverse signature is $g$, then for each location i in the database, we extract the feature

$$F_i = \{f_{i,1}(t = t_0), f_{i,2}(t = t_0), ..., f_{i,K}(t = t_0), f_{i,1}(t = t_1), f_{i,2}(t = t_1), ..., f_{i,K}(t =$$
$$t_1), ..., f_{i,1}(t = t_M), f_{i,2}(t = t_M), ..., f_{i,K}(t = t_M)\} \qquad \text{(Equ. 9)}$$

where $f_{i,j}(t = t_l)$ is defined as follows

$$f_{i,j}(t = t_l) = \max_n \left(g * h_{i,j}(t = t_l)\right)[n] \qquad \text{(Equ. 10)}$$

After obtaining the feature for each possible location in the database 692, the next step is to estimate the location of the terminal device 654. One straightforward approach is to match the location using the channel response that can provide the maximal feature value, i.e.,

$$i^* = \max_i \max_{\text{all features in } F_i} F_i$$

$$\text{(Equ. 11)}$$

Other classification algorithms, such as support vector machine (SVM), can also be used. Specifically, for every location $i$, we may first use the classification algorithms such as support vector machine to train a classifier $C_i$ by utilizing

the collected channel information in the database $\tilde{h}_i$. Then, by applying the classifier $C_i$ to each estimated channel impulse response $h$, a confidence score $s_i$ can be obtained. The estimated location can be the one with the highest confidence score $s_i$.

As shown in FIG. 7, the spatial focusing is approximately a half-wavelength focus spot in this example. If the time-reversal positioning system 600 is operated using wireless signals with carrier center frequencies of approximately 5 GHz frequency, then the full-width-at-half-maximum (FWHM) focus spot is around 3 cm, which means that the time-reversal positioning system 600 can achieve centimeter-level accuracy. As described above, the position accuracy of a system can be improved by placing scattering elements 302 around a transmitter antenna 304 of a wireless device 208, as shown in FIG. 2A-2C. By using the scattering elements 302, the localization accuracy of a positioning system can be improved to 1/30 of the carrier signal wavelength, which is about 2 mm when the time-reversal positioning system is operated at 5 GHz frequency.

Experimental Results

The following describes experiments that were performed using an experimental time-reversal positioning system that operates at 5.4 GHz band with a bandwidth of 125 MHz. In the experimental system, each device includes an antenna attached to a small cart with a radio frequency board and a computer installed on the cart. We tested the performance of the experimental system in a typical office environment.

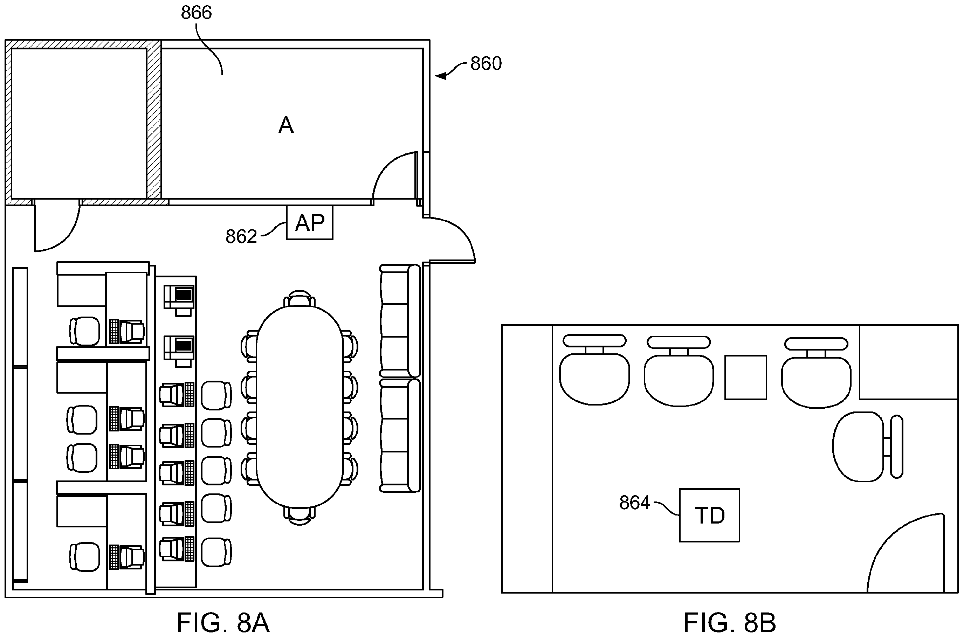

FIG. 8A shows the layout of the floor plan of an office environment 860 used to conduct the experiments, in which an access point 862, configured as the locator, is situated at the place with the mark "AP" and a terminal device 864 is located in a smaller office room (room A) 866. The floor layout of room A 866 is illustrated in FIG. 8B, which shows the terminal device 864 situated at the place with the mark "TD". With such a setting, the locator (AP) 862 is working in a non-line-of-sight condition with respect to the terminal device 864.

The following describes an evaluation of three important properties for real and virtual time-reversal systems: channel reciprocity, temporal stationarity, and spatial focusing. The channel reciprocity and temporal stationarity are two underlying assumptions of the time-reversal system, while spatial focusing is an important feature for the success of the time-reversal positioning system.

The channel reciprocity was evaluated by examining the channel response of the forward and backward link between the terminal device 864 and the locator 862. Specifically, the terminal device 864 first transmits a channel probing signal to the locator 862, and the locator 862 records the channel response of the forward link. Immediately or substantially immediately after that, the locator 862 transmits a channel probing signal to the terminal device 864, and the terminal device 864 records the channel impulse response of the backward link. Such procedures are repeated 18 times.

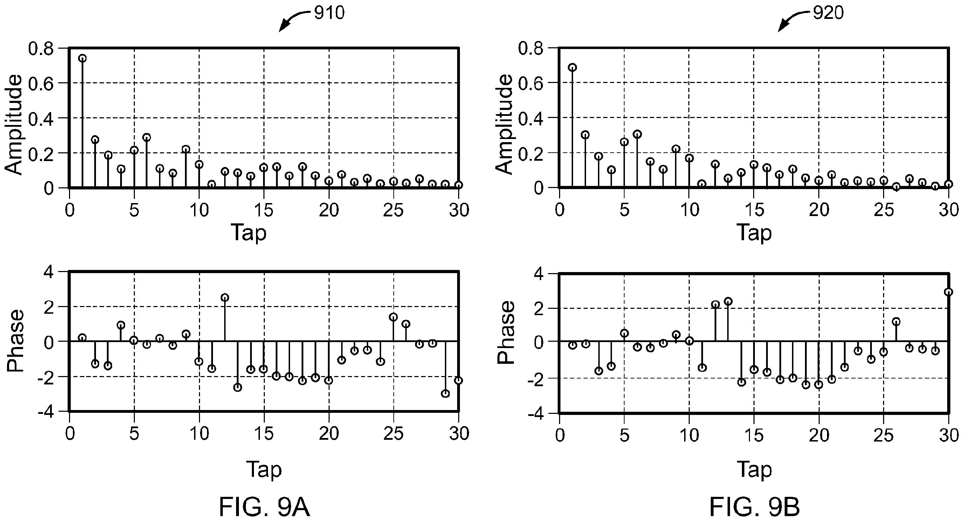

One pair of channel impulse responses for the forward and backward links are shown in FIGS. 9A and 9B, respectively. A first graph 910 shows the amplitude and phase of the estimated channel response for the forward channel, and a second graph 920 shows the amplitude and phase of the estimated channel impulse response for the backward channel. FIGS. 9A and 9B show that the forward and backward channels are very similar.

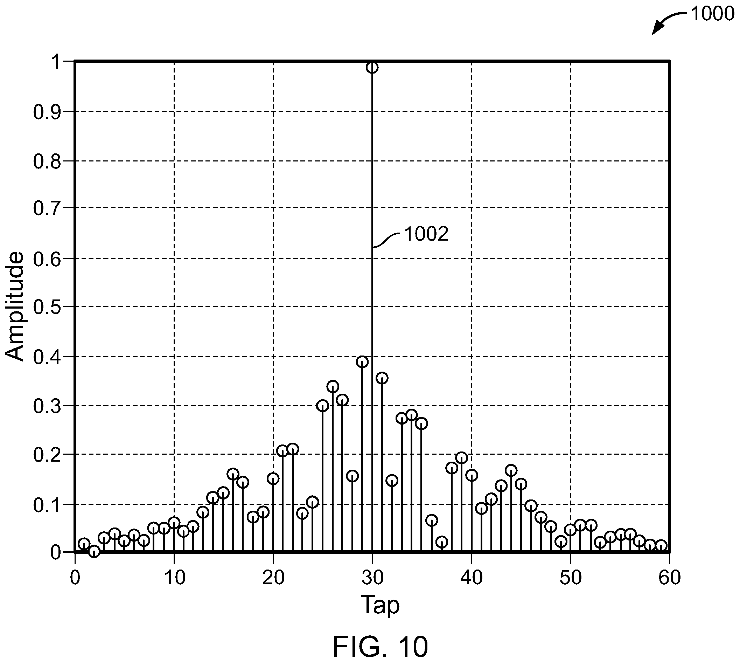

Referring to FIG. 10, a graph 1000 shows the cross-correlation between the channel impulse response of the forward link and that of the backward link. The center tap 1002 represents the time-reversal resonating strength between the channel impulse response of the forward link and that of the backward link. The graph 1000 shows that indeed the forward and backward channels are highly reciprocal.

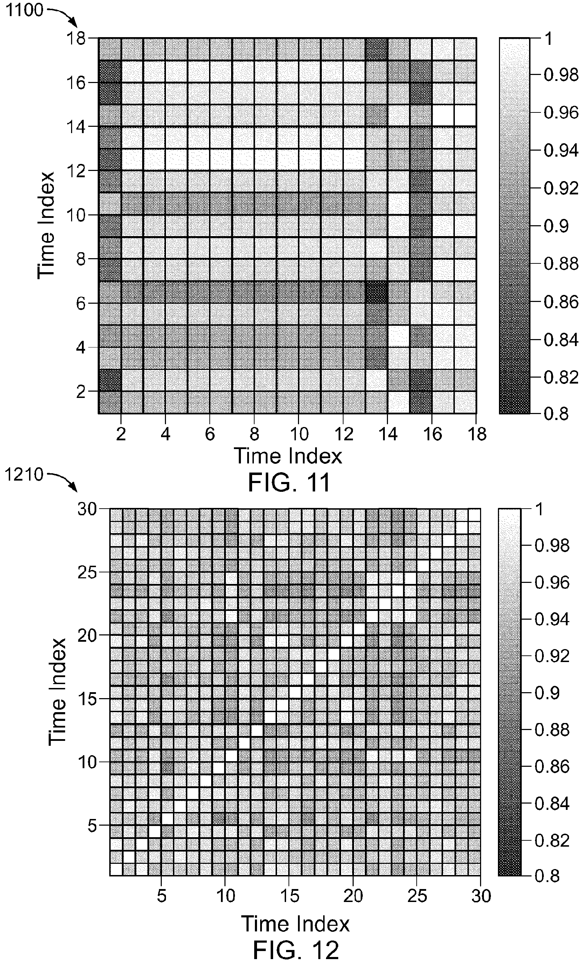

Referring to FIG. 11, where the horizontal and vertical axes denote the index of the 18 collected channel impulse responses of the forward channel and the backward channel, respectively, and each grid/color block represents the time-reversal resonating strength between each pair of the forward and backward channel impulse responses, a graph 1100 shows the the time-reversal resonating strength $\eta$ between any of the 18 forward and backward channel measurements with mean $\eta$ to be over 0.95. This result shows that the reciprocity is stationary over time.

We evaluated the temporal stationarity of the time-reversal system by measuring the channel impulse response of the link from the terminal device 864 to the locator 862 under three different settings: short interval, long interval, and dynamic environment with a person walking around. In the short interval experiment, we measured the channel response 30 times every two minutes. For the long interval experiment, we collected a total of 18 channel responses, one every hour interval from 9 a.m. to 5 p.m. over a weekend. For the dynamic environment, we measured the channel responses with a person walking randomly in the room. In this experiment we measured the channel impulse response 15 times, once every thirty seconds.

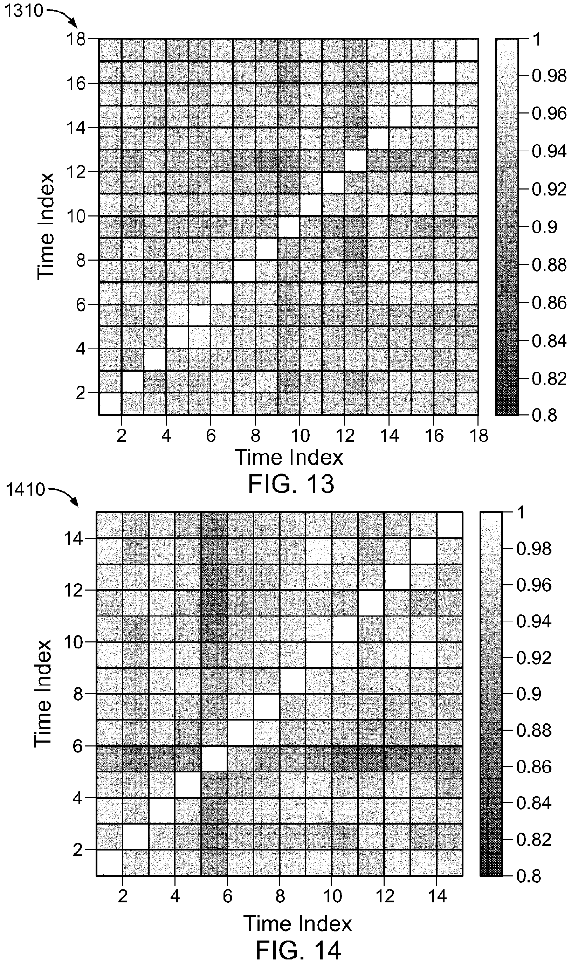

Referring to FIG. 12, a graph 1210 shows the time-reversal resonating strength $\eta$ between any two channel impulse responses from all 30 channel impulse responses of the link between the terminal device 864 and the locator 862 in the short interval experiment. In FIG. 13, a graph 1310 shows the time-reversal resonating strength between any two channel responses from the 18 channel responses collected in the long interval experiment. We can see that the channel responses at different time instances are highly correlated for both the short and long interval experiments, suggesting that the channel in an ordinary office does not vary much over time, even for relatively long durations between channel measurements. In FIG. 14, a graph 1410 shows the time-reversal resonating strength among the 15 collected channel responses under the dynamic environment with a person walking around randomly. The experimental result shows that even with a person walking around, the time-reversal resonating strength can remain high among all of the collected channel responses.

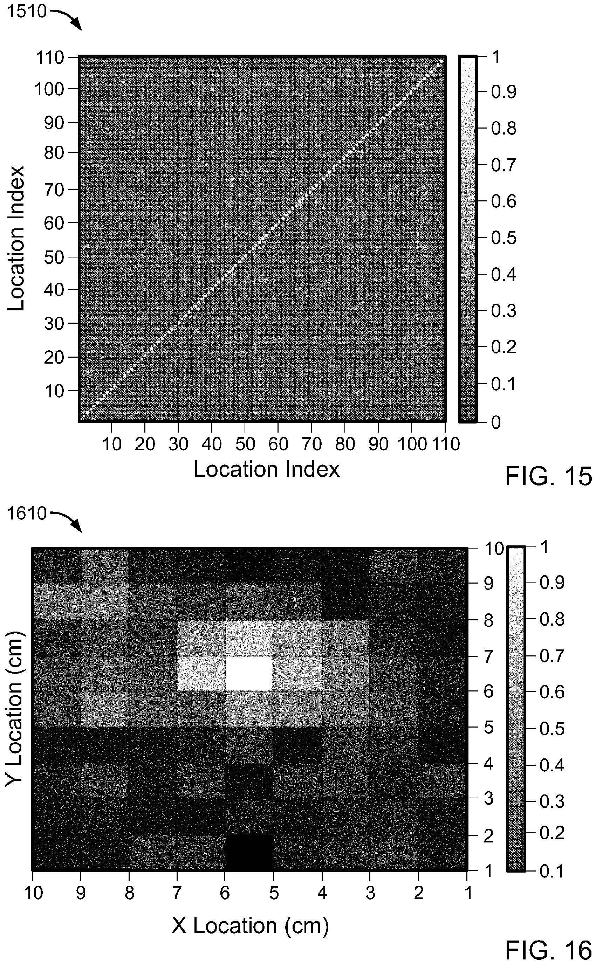

Another experiment was conducted by moving the locations of the terminal device 864 within a 1 m-by-0.9 m area in room A 866. In this experiment, the locator 862 remained stationary. The channel responses were collected at locations on a 9 x 10 cm grid, with measured locations 10 cm apart on the grid. These measurments yielded 110 estimated channel responses associated with the 110 evaluated locations in total. The graph 1510 in FIG. 15 shows the computed focusing gain which is defined as the square of the the time-reversal resonating strength, $\eta^2$, between each of the 110 channel responses and all the others. Each box in the graph 1510 represents the focusing gain for one grid point where two neighboring grid points. The horizontal and vertical axes are the location indices with one-dimensional (1D) representation. Each value in $(i, j)$ of the graph 1510 represents the focusing gain at location $j$ (location index with one-dimensional representation) when the intended location is $i$ (location index with one-dimensional representation).

The graph 1510 shows that the focusing gain at the intended location is much larger than that at the unintended locations. In other words, there exists very good virtual spatial focusing effect in this example.

The virtual spatial focusing effect was also evaluated on a finer (e.g., higher resolution) scale with 1 cm grid spacing, and the results are shown in FIG. 16. We can see that there is a reasonably graceful degradation in terms of the spatial focusing effect within a 5 cm-by-5 cm region, and this is consistent with the fact that channels may be uncorrelated at distances of approximately a half wavelength (the wavelength is around 5.5 cm when the carrier frequency is 5.4 GHz).

The results presented in FIGS. 9A to 16 show that the channel response acts as a location-specific signature for the multipath channel between the locator 862 and the terminal device 864, and that the channel impulse response changes measurably between a first location and a second location (e.g., even if the locations are only 10 centimeters away).

The experimental results and discussions above show that the time-reversal positioning system can provide a good solution to the problem of determining positions in a multipath-rich environment, such as an indoor environment. The time-reversal positioning system can achieve a high localization accuracy using a simple algorithm and with low infrastructure cost. Some of the features of the time-reversal positioning system are summarized below.

- The experimental results show that, with a single locator working in the 5.4 GHz band under the non-line-of-sight condition, the time-reversal positioning system can achieve centimeter localization accuracy with a low error rate. The accuracy may be improved by, e.g., increasing the resolution of the database (i.e., reducing the distance between measurement points when establishing the channel impulse response database).
- In some implementations, as a result of the time-reversal technique, the matching algorithm in the time-reversal positioning system can be simplified so that it computes the time-reversal resonating strength between the time reverse of the estimated channel impulse response and the time reverse of the previously stored channel impulse responses in the database (in some implementations, the time reverse versions of previously measured channel impulse responses are stored in the database).
- In some implementations, the infrastructure cost of the time-reversal positioning system can be low. The localization performance can also be further improved by using multiple access points and/or multiple devices.
- In some implementations, the time-reversal positioning system can be used with bands other than the 5.4 GHz band. For example, the time-reversal positioning system can be applied to the ultra-wideband (UWB) band with a larger bandwidth, which may result in higher localization accuracy.

In embodiments, a time-reversal positioning system may operate continuosly, intermittently, periodically, and may operate automatically, under computer control and/or manually. In embodiments, a time-reversal positioning system may include the capabilities collect and record channel responses, reference channel responses, time-reversed channel responses, reference time-reversed channel responses, time-reversal resonating strengths, and/or focusing gains over periods of time. In embodiments, time-reversal positioning systems may be able to generate reports, plots, data files and the like that may indicate the detectable activities in an area over a period of time. In embodiments, a detectable activity may be an activity that results in a change of a channel response, a time-reversed channel response and/or a time-reversal resonating strength and/or focusing gain that is larger than some threshold and/or trigger and/or confidence level. In embodiments, a time-reversal positioning system may be able to communicate with a user, a processor, a computer, a router, an access point, a server, an alarm center, a remote processor, and the like to report detectable activities within an area. In embodiments, triggers and/or thresholds may be set that may be used in feedback systems and/or that may be used to initiate communication between a time-reversal system and another system or service such as a monitoring system or service, an alarm system or service, a communication system or service and the like.

In embodiments, a time-reversal system may have access to remote resourses such as computers, processors, servers, routers, storage units, and the like, arranged as part of a network. In some cases, such resources may be referred to as being in "the cloud". Note that networks such as the Internet, carrier networks, internet service provider networks, local area networks (LANs), metro area networks (MANs), wide area networks (WANs), storage area networks (SANs), backhaul networks, cellular networks, satellite networks and the like, may be referred to as "the cloud". Also note, that certain processes may be referred to as taking place in the cloud and devices may be described as accessing the cloud. In these types of descriptions, the cloud should be understood to be a type of network comprising networking and communication equipment and wireless and/or wired links. In embodiments, multiple time-reversal systems may communicate and/or send and receive data over wired and/or wireless networks to remote storage and processing resources.

Channel Probing Using Conventional Wireless Signals

As described above, the location of objects in a space can be accurately determined using a wideband wireless signal to probe the wireless channel and a wideband receiver to receive the multipath waveforms and process them. An exemplary system using wideband signals with bandwidths of approximately 125 MHz is disclosed. That system achieves location resolutions of approximately 5 cm. We disclose that even wider band signals and receivers, for example with bandwidths of approximately 250 MHz, 500 MHz, 1 GH, 2 GHz, 5 GHz, 10 GHz, for example, may yield even more precise location resolutions. These wideband signals may have wider bandwidths than those typically utilized in conventional radio-frequency based wireless systems, such as those based on Wi-Fi, ZigBee, Bluetooth, and/or cellular signals.

In some embodiments, relatively narrowband conventional radio signals such as a 10 MHz or a 20 MHz or a 40 MHz radio signal may be used to yield location accuracies of approximately 1 m x 1 m x 1 m. In some applications, this relatively coarse location resolution may be acceptable. However, in other applications, it may be desirable to use conventional wireless signals and equipment alone or in combination with new equipment disclosed in this document to obtain more precise location accuracy. In some applications, a relatively coarse location resolution technique may be used in combination with a finer location resolution technique. Multiple lower-bandwidth conventional radio signals can be used to probe a wireless channel and to produce multiple lower-bandwidth channel estimates that may be processed in exemplary ways such that a composite channel response and/or the combination of channel responses may be determined, and classified in such a way as to yield higher location precision than any of the lower bandwidth conventional radio signals would yield on their own. Such techniques are described in greater detail below.

In exemplary embodiments, multiple wireless channel responses may be estimated and collected using a single transmit antenna and a single receive antenna (single input single output or SISO) and using different frequency bands (e.g. channel tuning, channel hopping) in the system to generate the multiple channel response estimates. In other exemplary embodiments, multiple wireless channel response estimates may be collected using multiple antennas at either the transmitter or receiver (single input, multiple output or SIMO, or multiple input, single output, or MISO) or at both the transmitter and receiver (multiple input, multiple output or MIMO), with the multiple antennas using the same frequency bands or multiple frequency bands to generate the multiple channel response estimates. In embodiments, single antennas operating both as transmit and receive antennas may be used to collect the multiple probe signals and determine the multiple channel response estimates.

We describe exemplary embodiments where a composite channel response may be processed in a manner as described previously in this disclosure. In embodiments, a composite channel response may be determined from any two or more channel responses. In embodiments, the localization accuracy may improve as the number of channel responses in the composite channel response increases. In embodiments, the localization accuracy may improve as the bandwidth of any of the channel responses in the composite channel response increases. In embodiments, the localization accuracy may be tuned by adding or subtracting or changing the multiple channel responses included in the composite channel response.

In the following descriptions, performance capabilities and exemplary embodiments of the invention based on existing WiFi systems and technologies that conform to the IEEE 802.11 wireless communication standard are highlighted. However, it should be understood that the invention is not limited to WiFi and/or 802.11 implementations. The apparatuses, methods and techniques described herein may be applied to any wireless transmission system, including the wideband systems described above. Exemplary embodiments based on WiFi technologies may be particularly interesting today, because WiFi is currently widely deployed and so these inventive techniques and technologies may be adopted using commercial off-the-shelf equipment. However, WiFi channel bandwidths may increase over time, and that future versions or higher bandwidth versions of the exemplary embodiments may still take advantage of the performance gains described herein. Also, alternate wireless transmission systems such as those based on Bluetooth signaling, ZigBee signaling, cellular signaling, 3G signaling, 4G signaling, LTE signaling and like may also benefit from the apparatuses, methods and techniques described herein.

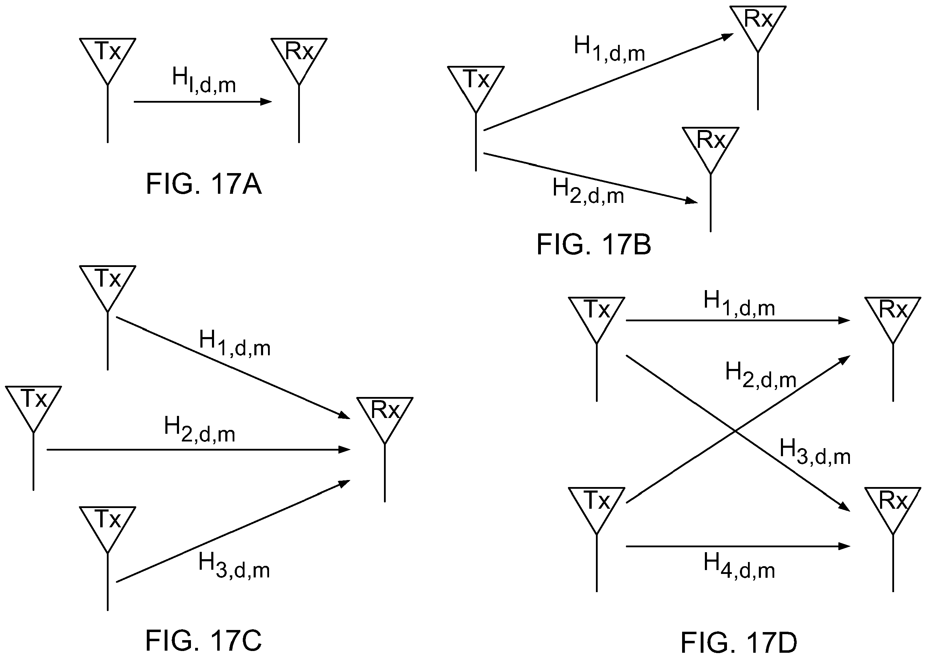

FIGS. 17A-D show four exemplary wireless communication links between one or more wireless transmit antennas and one or more wireless receiver antennas. For example, FIG. 17A shows an exemplary link between one transmit antenna and one receive antenna, FIG. 17B shows exemplary links between one transmit antenna and two receive antennas, FIG. 17C shows exemplary links between three transmit antennas and one receive antenna, and FIG. 17D shows exemplary links between two transmit antennas and two receive antennas. Typical wireless networking components are able to both transmit and receive wireless signals, and may comprise one or more transmit antennas and one or more receive antennas and the links may also be bi-direction links. In exemplary embodiments, the implementations shown in FIGS. 17A-D may be achieved using a single wireless device comprising a number of transmit and/or receive antennas that are used concurrently, in parallel, intermittently, in a synchronized fashion and/or independently. In embodiments, a single antenna may be used to both transmit and receive signals, and the transmit and receive signals may be separated in electronic circuits to perform transmit signal processing or receive signal processing.

In an exemplary embodiment, a first wireless device may send wireless signals to a second wireless device. The bandwidth of the wireless signals may be approximately F MHz. F MHz may represent the 3-dB (FWHM) bandwidth of the signals, the 1/e bandwidth of the signals, or any other characterization of the bandwidth of the signals. The second wireless device may receive a wireless signal from the first wireless device and may be able to determine certain characteristics about the channel between itself and the first wireless device. For example, the second wireless device may receive and monitor the received signal strength (RSS) of the signal from the first wireless device. The received signal strength may give some indication of the distance between the first and second device as the signal may be attenuated and/or dispersed as it travels over the wireless channel. The received signal strength may also give some indication of objects that may be positioned between the first and second wireless device that may attenuate and scatter the wireless signal.

In an exemplary embodiment, the wireless signal between a first wireless device and a second wireless device may be configured to interoperate with devices that follow some version of the IEEE 802.11 protocol. Wireless receivers that interoperate with some version of the IEEE 802.11 protocol may receive 802.11 packets of information wirelessly and may process those packets to determine the RSS. The RSS determined by processing an 802.11 data packet is sometimes referred to as the RSS indicator or RSSI. ZigBee® systems also monitor RSSI, and many other wireless or radio systems and protocols monitor the received signal strength in one form or another. Some location systems use the RSSI between two wireless devices to characterize the distance between the two devices. However, sub-meter accuracy has not been demonstrated using RSSI techniques alone.

As described above, centimeter resolution accuracy of the relative position between at least two wireless devices may be achieved using the channel response information determined by wideband signaling. Experimental results were presented above for a wideband system using wireless signals with an approximate bandwidth, F, of 125 MHz. The wideband signal may be received by a wideband receiver and processed using high-speed ADCs and DACs, such as 500 MHz ADC/DAC devices. In embodiments, it may be preferable to utilize narrower band channel response information that can be received and processed using standards-based communication equipment to determine relative positions between two or more wireless devices.

In embodiments, high precision location determination using wireless signatures can be achieved if the wireless signals from closely spaced devices can be reliably distinguished. In wideband systems, a large number of multipaths of an RF (or microwave frequency) signal may be captured and processed. As the number of captured multipaths increases, either because the environment includes more scatterers or because the wideband signal is extended to even wider bandwidths, e.g. >125 MHz, 250 MHz, 500 MHz, 1 GHz, 5 GHz, >5 GHz, or anything in between, the location resolution may increase.

In some examples, in a given environment there may be a finite number of multipaths that may contribute to a channel response between two wireless devices such that the effect produced by increasing the signal bandwidth becomes less pronounced when the bandwidth increases beyond a certain point. Increasing the number of scatterers may improve the resolution and/or accuracy of the positioning system, but the improvement may also become less pronounced when the number of scatterers increases beyond a certain point. When a user deploys a positioning system in a new environment, the user may calibrate the positioning system to select a signal bandwidth and a scatterer configuration that results in a desired positioning resolution.

In exemplary embodiments, the number of multipaths that may contribute to a channel response between two wireless devices may be increased by capturing multiple relatively narrow bandwidth wireless signals with different center frequencies, different channel bandwidths, different frequency bands and/or using multiple displaced antennas and combing the multiple lower bandwidth channel responses into a higher resolution composite channel response and/or processing a group of related channel responses. In embodiments, two or more channel responses may be combined to yield a composite channel response. In embodiments, two or more channel responses may contribute to a location specific signature and may be processed using matching and/or classification algorithms described throughout this disclosure. Combining multiple lower bandwidth channel responses effectively increases the number of multipaths used to determine the location specific signature and increases the richness of channel information, potentially resulting in a higher positioning resolution.

In some examples, a positioning accuracy of the positioning system is based at least in part on the center frequencies of the probe signals. For example, probe signals that have center frequencies around 2.4 GHz are able to achieve a 5.5 cm positioning accuracy. In some examples, when probe signals have center frequencies around 2.4 GHz, it is preferable to use a probe signal that has a bandwidth that is more than 50 MHz or several probe signals that span a collective bandwidth that is more than 50 MHz in order to achieve 5.5 cm positioning accuracy. For example, for probe signals that comply with IEEE 802.11 standard, if each signal has a bandwidth of 22 MHz, it is preferable to use three or more probe signals that span a collective bandwidth that is more than 50 MHz. Techniques for using multiple probe signals having narrower bandwidths to achieve a wider collective bandwidth are described below.

In some embodiments, the positioning system uses a collective bandwidth B that is greater than 50 MHz. The collective bandwidth can be achieved in several ways. For example, in some implementations, a transmitter sends a single probe signal to a receiver, and the probe signal has a bandwidth B greater than 50 MHz. For example, the transmitter may have a filter that filters the output signals, the receiver may have a filter that filters the input signals, in which each of filters has a bandwidth equal to B.

In some implementations, a transmitter sends, using a single antenna, two or more wireless probe signals to a receiver that has a single antenna, in which the two or more wireless signals have different center frequencies, each of the two or more wireless signals has a bandwidth less than 50 MHz, and the two or more wireless signals have a collective bandwidth greater than 50 MHz. The collective bandwidth refers to the overall bandwidth spanned by the two or more wireless signals. For example, a first signal s1 may have a center frequency f1 and a bandwidth B1, and a second signal s2 may have a center frequency f2 and a bandwidth B2. The first signal s1 may occupy a first frequency band f1-B1/2 to f1+B1/2, and the second signal s2 may occupy a second frequency band f2-B2/2 to f2+B2/2. Assuming that f1 < f2, if f1+B1/2 < f2-B2/2, such that the two frequency bands do not overlap, then the first and second signals s1 and s2 span a collective bandwidth of B1+B2. If f1+B1/2 > f2-B2/2, such that the two frequency bands overlap, then the first and second signals s1 and s2 span a frequency range from f1-B1/2 to f2+B2/2 with a collective bandwidth of f2 - f1 + B1/2 + B2/2.

Similarly, if a single transmitter antenna sends three or more signals to a single receiver antenna, and the three or more signals have different center frequencies, the collective bandwidth spanned by the three or more signals is the bandwidth (if every frequency band overlaps the adjacent frequency band(s)) or the sum of bandwidths (if at least one frequency band does not overlap any other frequency band) covered by the frequency bands of the three or more signals. For example, suppose a transmitter that complies with 802.11b/g/n protocol sends signals s1, s2, and s3 using a single transmitter antenna, and a receiver receives the signals s1, s2, and s3 using a single receiver antenna. Assume the first signal s1 occupies a frequency band $2412 \pm 11$ MHz, the second signal s2 occupies a frequency band $2422 \pm 11$ MHz, and the third signal s3 occupies a third frequency band $2447 \pm 11$ MHz. The three signals s1, s2, and s3 span a collective frequency range of 2401 MHz to 2433 MHz and 2436 MHz to 2458 MHz, and thus span a collective bandwidth of 54 MHz. Suppose a first channel response is derived from the received signal s1, a second channel response is derived from the received signal s2, and a third channel response is derived from the received signal s3. As described in more detail below, a composite channel response determined by the first, second, and third channel responses spans the collective bandwidth 54 MHz. For example, a composite channel response can be determined using Equation 12 below.

A positioning system can determine information about one or more macroscopic objects in the environment (e.g., information about location or orientation of one or more of the objects) from a composite channel response derived from multiple narrow-band signals (e.g., signals each having a bandwidth less than 50 MHz), in which the composite channel response spans a collective bandwidth that is more than 50 MHz.

In some implementations, a transmitter sends, using two or more antennas, two or more wireless signals to a receiver that has one antenna, each signal being sent from a different antenna. The two or more wireless signals can have the same or different center frequencies, each of the two or more wireless signals has a bandwidth less than 50 MHz, and the two or more wireless signals have a collective bandwidth greater than 50 MHz. In this example in which multiple transmitter antennas are used, the collective bandwidth refers to the sum of the bandwidths spanned by the two or more signals transmitted by the multiple transmitter antennas. For example, the first antenna may transmit a first signal $s_{11}$ that has a center frequency f1 and a bandwidth B1, and the second antenna may transmit a second signal $s_{21}$ that has a center frequency f1 and a bandwidth B1. The first and second signals $s_{11}$ and $s_{21}$ span a collective bandwidth of $2 \times B1$, even though the signals $s_{11}$ and $s_{21}$ occupy the same frequency band. As another example, the first antenna may transmit a first signal $s_{11}$ that has a center frequency f1 and a bandwidth B1, and the second antenna may transmit a second signal $s_{21}$ that has a center frequency f2 and a bandwidth B2. In this case, the first and second signals $s_{11}$ and $s_{21}$ span a collective bandwidth of B1 + B2, regardless of whether the frequency bands occupied by the signals $s_{11}$ and $s_{21}$ overlap. A composite channel response can be derived from the channel responses determined from the first and second signals $s_{11}$ and $s_{21}$, in which the composite channel response spans the collective bandwidth of B1 + B2.

In some implementations, a transmitter broadcasts, using a single antenna, a single wireless signal in multiple directions, in which the broadcast signal is received by two or more antennas. The transmit signal can have a bandwidth less than 50 MHz, and the two or more signals received at the two or more antennas can have a collective bandwidth greater than 50 MHz. In this example in which multiple receiver antennas are used, the collective bandwidth refers to the sum of the bandwidths spanned by the two or more signals received by the multiple receiver antennas. For example, the transmitter may transmit a signal that has a center frequency f1 and a bandwidth B1. Assume there are two receiver antennas. A first signal $s_{11}$ received at the first receiver antenna and a second signal $s_{12}$ received at the second receiver antenna span a collective bandwidth of $2 \times B1$ even though the signals $s_{11}$ and $s_{12}$ occupy the same frequency band. The signals $s_{11}$ and $s_{12}$ travel from the transmitter antenna to the receiver antennas through different sets of multipaths. A composite channel response can be derived from the channel responses that are determined from the first and second received signals $s_{11}$ and $s_{12}$, in which the composite channel response spans the collective bandwidth of $2 \times B1$.

In some implementations, a transmitter broadcasts, using a single antenna, two or more wireless probe signals that are received by two or more antennas of a receiver. Each wireless signal can have a bandwidth less than 50 MHz, and the four or more signals received at the two or more receiver antennas (each receive antenna receives two or more signals from the transmitter) can have a collective bandwidth greater than 50 MHz. For example, assume the transmitter broadcasts signals s1 and s2, and there are two receiver antennas. The portion of the signal s1 received at the first receiver antenna is represented as signal $s1_{11}$, and the portion of signal s1 received at the second receiver antenna is represented as signal $s1_{12}$. The portion of the signal s2 received at the first receiver antenna is represented as signal $s2_{11}$, and the portion of signal s2 received at the second receiver antenna is represented as signal $s2_{12}$. Assume that the signal s1 has a center frequency f1 and a bandwidth B1, the signal s2 has a center frequency f2 and a bandwidth B2, and f1 < f2.

If s1 and s2 occupy frequency bands that do not overlap, the signals $s1_{11}$ and $s2_{11}$ span a collective bandwidth of B1 + B2. The signals $s1_{12}$ and $s2_{12}$ also span a collective bandwidth of B1 + B2. The four signals $s1_{11}$, $s2_{11}$, $s1_{12}$, and $s2_{12}$ span a collective bandwidth of $2 \times (B1 + B2)$.

If s1 and s2 occupy frequency bands that overlap, the signals $s1_{11}$ and $s2_{11}$ span a collective bandwidth of f2 - f1 + B1/2 + B2/2. The signals $s1_{12}$ and $s2_{12}$ also span a collective bandwidth of f2 - f1 + B1/2 + B2/2. The four signals $s1_{11}$, $s2_{11}$, $s1_{12}$, and $s2_{12}$ span a collective bandwidth of $2 \times (f2 - f1 + B1/2 + B2/2)$.

In general, when a transmitter sends n1 (n1 > 1) probe signals using a single transmit antenna, and the probe signals are received by n2 (n2 > 1) receiver antennas, the collective bandwidth is determined by calculating the collective bandwidth Bi spanned by the n1 signals received at the i-th receiver antenna, in which i ranges from 1 to n2, then calculating the sum of those collective bandwidths:

Total collective bandwidth $\mathrm{B} = \sum_{i=1}^{n2} Bi$.

In some implementations, a transmitter broadcasts, using two or more antennas, probe signals that are received by two or more receiver antennas, in which each transmitter antenna sends one signal that has a bandwidth less than 50 MHz, and the four or more signals received at the two or more receiver antennas (each receive antenna receives two or more signals from the two or more transmitter antennas) can have a collective bandwidth greater than 50 MHz. For example, assume the portion of the signal sent from the first transmitter antenna received at the first receiver antenna is represented as signal $s_{11}$, the portion of the signal sent from the first transmitter antenna received at the second receiver antenna is represented as signal $s_{12}$, the portion of the signal sent from the second transmitter antenna received at the first receiver antenna is represented as signal $s_{21}$, and the portion of the signal sent from the second transmitter antenna received at the second receiver antenna is represented as signal $s_{22}$. Assume that the signals $s_{11}$ and $s_{12}$ have a center frequency f1 and a bandwidth B1, the signals $s_{21}$ and $s_{22}$ have a center frequency f2 and a bandwidth B2, and f1 < f2. Regardless of whether the frequency bands occupied by $s_{11}$ and $s_{21}$ overlap, the signals $s_{11}$, $s_{12}$, $s_{21}$, and $s_{22}$ span a collective bandwidth of $2 \times (B1 + B2)$.

In general, when there are n1 (n1 > 1) transmitter antennas that each sends a probe signal, and the probe signals are received by n2 (n2 > 1) receiver antennas, the collective bandwidth of the signals received at the n2 antennas is determined by calculating the collective bandwidth Bi spanned by the n1 signals received at the i-th receiver antenna, in which i ranges from 1 to n2, then calculating the sum of those collective bandwidths:

Total collective bandwidth $\mathrm{B} = \mathrm{n2} \times \sum_{i=1}^{n1} Bi$.

in which Bi is the bandwidth of the signal sent from the i-th transmitter antenna.

In some implementations, a transmitter broadcasts, using two or more antennas, probe signals that are received by two or more receiver antennas, in which each transmitter antenna sends two or more signals that each has a bandwidth less than 50 MHz, and the eight or more signals received at the two or more receiver antennas (each receiver antenna receives two or more signals from each of the two or more transmitter antennas) can have a collective bandwidth greater than 50 MHz. For example, assume there are two transmitter antennas and two receiver antennas, the first transmitter antenna sends two signals s11 and s12, the second transmitter antenna sends two signals s21 and s22. The portion of the signal s11 received at the first receiver antenna is represented as signal $s11_{11}$, the portion of the signal s11 received at the second receiver antenna is represented as signal $s11_{12}$, the portion of the signal s12 received at the first receiver antenna is represented as signal $s12_{11}$, the portion of the signal s12 received at the second receiver antenna is represented as signal $s12_{12}$, the portion of the signal s21 received at the first receiver antenna is represented as signal $s21_{21}$, and the portion of the signal s21 received at the second receiver antenna is represented as signal $s21_{22}$, the portion of the signal s22 received at the first receiver antenna is represented as signal $s22_{21}$, and the portion of the signal s22 received at the second receiver antenna is represented as signal $s22_{22}$.

Assume that the signals s11, s12, s21, and s22 have center frequencies f11, f12, f21, f22, respectively, and bandwidths B11, B12, B21, and B22, respectively. Assume that f11 < f12 and f21 < f22. If the signals s11 and s12 (sent from the first transmitter antenna) occupy frequency bands that do not overlap, the signals $s11_{11}$ and $s12_{11}$ received at the first receiver antenna span a collective bandwidth B11 + B12, and the signals $s11_{12}$ and $s12_{12}$ received at the second receiver antenna span a collective bandwidth B11 + B12. If the signals s11 and s12 (sent from the first transmitter antenna) occupy frequency bands that overlap, the signals $s11_{11}$ and $s12_{11}$ received at the first receiver antenna span a collective bandwidth f12 - f11 + B11/2 + B12/2, and the signals $s11_{12}$ and $s12_{12}$ received at the second receiver antenna span a collective bandwidth f12 - f11 + B11/2 + B12/2. If the signals s21 and s22 (sent from the second transmitter antenna) occupy frequency bands that do not overlap, the signals $s21_{21}$ and $s22_{21}$ received at the first receiver antenna span a collective bandwidth B21 + B22, and the signals $s21_{22}$ and $s22_{22}$ received at the second receiver antenna span a collective bandwidth B21 + B22. If the signals s21 and s22 (sent from the second transmitter antenna) occupy frequency bands that overlap, the signals $s21_{21}$ and $s22_{21}$ received at the second receiver antenna span a collective bandwidth f22 - f21 + B21/2 + B22/2, and the signals s2122 and s2222 received at the second receiver antenna span a collective bandwidth f22 - f21 + B22/2 + B21/2. The eight signals $s11_{11}$, $s12_{11}$, $s11_{12}$, $s12_{12}$, $s21_{21}$, $s22_{21}$, $s22_{21}$, and $s22_{22}$ received at the two receiver antennas span a collective bandwidth that is the sum of the collective bandwidth of $s11_{11}$ and $s12_{11}$, the collective bandwidth of $s11_{12}$ and $s12_{12}$, the collective bandwidth of $s21_{21}$ and $s22_{21}$, and the collective bandwidth of $s21_{22}$ and $s22_{22}$.

In general, when there are n1 (n1 > 1) transmitter antennas that each sends one or more probe signals, and the one or more probe signals are received by n2 (n2 > 1) receiver antennas, the collective bandwidth of the signals received at the n2 antennas is determined by calculating, for each pair of transmitter antenna and receiver antenna, the bandwidth or collective bandwidth of the signal or signals sent from the transmitter antenna to the receiver antenna, then calculate the sum of all the previously calculated bandwidth(s) and collective bandwidth(s).

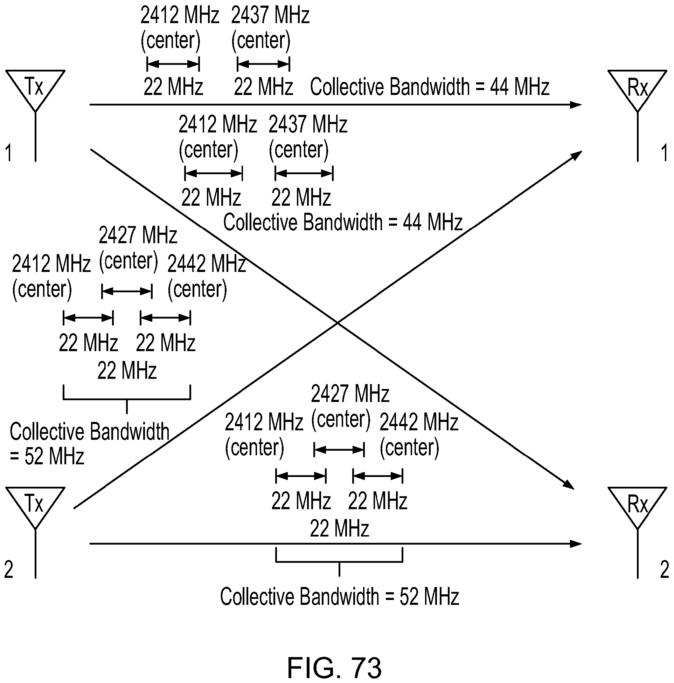

For example, referring to FIG. 73, suppose there are two transmitter antennas and two receiver antennas, the first transmitter antenna sends a first signal having a center frequency 2412 MHz and a bandwidth 22 MHz, and a second signal having a center frequency 2437 MHz and a bandwidth 22 MHz. The second transmitter antenna sends a first signal having a center frequency 2412 MHz and a bandwidth 22 MHz, a second signal having a center frequency 2427 MHz and a bandwidth 22 MHz, and a third signal having a center frequency 2442 MHz and a bandwidth 22 MHz. For the signals transmitted from the first transmitter antenna and received by the first receiver antenna, the collective bandwidth is 44 MHz (the two signals occupy frequency bands that do not overlap). For the signals transmitted from the first transmitter antenna and received by the second receiver antenna, the collective bandwidth is also 44 MHz. For the signals transmitted from the second transmitter antenna and received by the first receiver antenna, the collective bandwidth is 52 MHz (the three signals occupy frequency bands that overlap). For the signals transmitted from the second transmitter antenna and received by the second receiver antenna, the collective bandwidth is also 52 MHz. The total collective bandwidth is 44 + 44 + 52 + 52 = 192 MHz.

The positioning system includes a processor that is configured to compare information (e.g., channel response or composite channel response) derived from the received one or more wireless signals to information (e.g., channel response or composite channel response) in a database. The processor can be configured to determine, based on the comparison, information about a position of at least one of the wireless transmitter(s) and/or the wireless receiver(s) (e.g., using similar techniques as those described above). The processor is also configured to generate an output based on the determined information. The information derived from the received one or more wireless signals that is compared to the information in the database spans the collective bandwidth B. In other words, the entirety of the collective bandwidth B is utilized to express the derived information.

Time-Reversal Classification of Composite Channel Responses

One way to represent the composite channel response is as a vector comprising multiple independent channel responses. In exemplary embodiments, a wireless channel between two antennas *i* and *j* may be represented by the channel response $H_{ij}$. The channel response function notation may include either or both indices as a subscript. For example, if a single access point is receiving signals from multiple devices, *i*, the channel response may be indicated as $H_i$ in the frequency domain. If multiple access points, j, are receiving signals from multiple devices, *i*, the channel response may be indicated as $H_{ij}$ in the frequency domain. In embodiments where a single antenna is both transmitting a probe signal and receiving a probe signal waveform, the indices $i$ and $j$ may represent time slots, frequencies, polarizations and the like. Note that the time domain representation of the channel response, $h_{ij}$, and the frequency domain representation of the channel response, $H_{ij}$, are related by the Fourier Transform. Time-reversal classification techniques may be described in either the time domain or the frequency domain and equations described using time domain descriptions can be converted to frequency domain versions by Fourier Transforming the variables and functions in the equations and vice versa. FIG. 1C, which will be described in detail later, also shows a frequency domain description of the time-reversal process and that $\omega = 2\pi f$.

In embodiments, a first wireless device may send a first wireless signal to a second wireless device with a center frequency of $f_1$ GHz. In embodiments, the first wireless signal may be a channel probe signal, a pulse signal, a frame signal, a PN sequence, a preamble signal, and the like. In embodiments, the bandwidth of the first wireless signal may be approximately 10 MHz, 20 MHz, 40 MHz, 60 MHz, 125 MHz, 250 MHz, 500 MHz, 1 GHz and the like. In embodiments, the bandwidth of the first wireless signal may be between 1 MHz and 10 GHz. In embodiments, the first wireless device may send a second wireless signal to the second device with a center frequency of $f_2$ GHz. In embodiments, the wireless signal may be a channel probe signal, a pulse signal, a frame signal, a PN sequence, a preamble signal, and the like. In embodiments, the bandwidth of the second wireless signal may be approximately 10 MHz, 20 MHz, 40 MHz, 60 MHz, 125 MHz, 250 MHz, 500 MHz, 1 GHz and the like. In embodiments, the bandwidth of the second wireless signal may be between 1 MHz and 10 GHz. In embodiments, the frequency spectrum of the first wireless signal and the second wireless signal may include overlapping frequencies. In some embodiments, there may be no overlapping frequencies between the two wireless signals. In some embodiments, the frequency spectra of the different wireless signals may be separated by so-called guard-bands or guard-band frequencies. The channel response for the channel between the first wireless device and the second wireless device at probe frequency $f_1$ may be represented as $H_{ij}(f_1)$. The channel response for the channel between the first wireless device and the second wireless device at probe frequency $f_2$ may be represented as $H_{ij}(f_2)$. In embodiments, more than two probe frequency signals may be used to probe the channel. The more than two probe frequency signals may have some overlapping frequencies or they may have no overlapping frequencies.

In embodiments, a first wireless device may use channel tuning and/or frequency hopping to tune to different wireless signal carrier frequencies to probe a wireless channel. In some embodiments, a wireless device may tune to different channels within a specified frequency band to probe the wireless channel. For example, if the first and second wireless devices are communicating using an 802.11 WiFi protocol, a wireless device may first tune to one channel within the WiFi signaling bandwidth and then to another channel within the WiFi band. The frequency tuning may be from one channel to the next in a sequential fashion, but it may also hop from one channel to another in a random fashion anywhere within the WiFi band. In embodiments, the different channels may have different channel bandwidths.

A composite channel response comprising channel responses determined using different center frequency probe signals may be represented as

$$H_{composite} = \{H_{ij}(f_1) \quad H_{ij}(f_2) \quad H_{ij}(f_3) \quad ...H_{ij}(f_N)\}. \qquad \text{(Equ. 12)}$$

In exemplary embodiments, a wireless channel between two antennas may be represented by the channel response $H_{ij}$. In embodiments a first antenna, $i$, may send a first wireless signal to a second antenna, $j$. The second wireless antenna may be part of a device that may be able to estimate the channel response $H_{ij}$. In embodiments, the second wireless device may transmit the received waveform from the first wireless antenna to a remote device (e.g. processor, computer, server, access point, router, base station, network resource) and the remote device may be used to estimate the channel response. The first wireless antenna, $i$, may send a second wireless signal to a third wireless antenna, $r$, and the third wireless antenna may be part of a device that may be able to estimate the channel response $H_{ir}$. In some embodiments, the third wireless device may transmit the received waveform from the first wireless antenna to a remote device (e.g. processor, computer, server, access point, router, base station, network resource) and the remote device may be used to estimate the channel response.

In embodiments, the second and third antennas may be part of what may be considered a single device such as a wireless access point, router, base station, computer, base station, locator, mobile device and the like. The first wireless signal and the second wireless signal may be different portions of the same launched wireless signal. That is, the first wireless signal and the second wireless signal may be portions of the same signals (e.g., which are received at different locations). In embodiments, the first and second wireless signals may be signals generated using different protocols, different bandwidths, different channel frequencies. For example, a first wireless signal may be a wideband probe signal comprising a pseudorandom bit sequence and a second wireless signal may be a 10 MHz wide 802.11 WiFi signal. In embodiments, a first wireless signal may be in the 2.4 GHz region of the spectrum and the second wireless signal may be in the 5.8 GHz region of the spectrum. In embodiments, the first and second wireless signals may be generated using the same protocols, bandwidths and channel frequencies, but they may originate from different antennas that are at different positions. In embodiments, a first wireless signal and a second wireless signal may be portions of the same wireless signal (e.g., which are received at different locations). In embodiments, a first wireless signal may be a WiFi signal and a second wireless signal may be a ZigBee® signal. In embodiments, one wireless signal may be a cellular signal, such as are transmitted in nanocells, picocells and the like. In embodiments, one wireless signal may be a 3G signal, a 4G signal, an LTE signal, and the like.

In embodiments, wireless devices with multiple antennas may be used to estimate channel responses between two or more of their multiple antennas and another wireless device. In embodiments, composite channel responses may comprise multiple channel responses determined for different antennas in a multi-antenna device.

$$H_{composite} = \{H_{ij} \quad H_{ir} \quad H_{iq} \quad ...H_{iz}\}.$$

(Equ. 13)

In embodiments, composite channel responses may comprise combinations of channel responses determined using different center frequency signals, different bandwidth signals, different protocol signals and/or channel estimates from multiple antennas in either or both a first wireless device and a second wireless devices.

$$H_{composite} = \{H_{ij}(f_1 - \frac{F_1}{2}, f_1 + \frac{F_1}{2}) \quad H_{ir}(f_2 - \frac{F_2}{2}, f_2 + \frac{F_2}{2}) \quad ...H_{iz}(f_N - \frac{F_N}{2}, f_N + \frac{F_N}{2})\}.$$

(Equ. 14)

where $f$ represents the center frequency and $F$ represents the bandwidth.

As described above, a time-reversal resonating strength, $\eta$ $(H_{comp1}, H_{comp2})$, between two channel impulse responses can be defined as:

$$\eta\left(H_{comp1}, H_{comp2}\right) = \frac{max_\theta \sum_i H_{com1}[i]H^*_{comp2}[i]e^{j\,i\,\theta}}{\sqrt{\sum_{i=0}^{L-1}|H_{comp1}[i]|^{\wedge}2}\sqrt{\sum_{i=0}^{L-1}|H_{comp2}[i]|^{\wedge}2}}$$

(Equ. 15)

where $H^*_{comp2}$ is defined as the conjugated version of $H_{comp2}$, and $\theta$ is a parameter that indicates the phase that is searched.

Equation 15 shows the frequency domain representation of the time-reversal resonating strength. As described above, a time-reversal classification scheme may be more robust to channel estimation errors, but as described in other sections of this disclosure, there may be a number of ways to determine how well two channel responses match each other. For example, positioning systems may use correlation techniques, integration and subtraction techniques, SVM techniques and the like to determine how well certain channel responses and/or combinations of channel responses match each other. In some embodiments, determining the conventional correlation coefficient may result in precise enough identification of similar channel responses and may be used in positioning systems as described herein. In embodiments of the invention the time-reversal techniques are used. In some embodiments, machine learning based classification techniques may be used to determine how well certain channel responses and/or combinations of channel responses match each other. In some embodiments, more than one classification scheme may be used to analyze measured and/or stored and/or generated data sets.

The following describes an exemplary process for determining the position of a terminal device. Let $H_{comp}$ be the composite channel impulse response that is estimated for the terminal device with unknown location. To match $H_{comp}$ with the locations in a database of reference channel responses, we may first extract a feature using the time-reversal resonating strength for each location. Specifically, for each location $p_i$, we may compute the maximal time-reversal resonating strength, $\eta_i$ using Equation 15.

By computing $\eta_i$ for all possible locations, we can obtain $\eta_1, \eta_2, ..., \eta_N$. Then, the estimated location, $p_i$, can be the one that can give the maximal $\eta_i$, i.e., $i$ can be derived as follows:

$$i = \arg \max_i \eta_i. \qquad \text{(Equ. 16)}$$

In an exemplary embodiment, after a locator determines the location of the device, the locator may send the location coordinates of the device, as well as other information such as the type of device, to the device and/or another locator and/or a computer and/or a server in the cloud and/or any type of computing device. In embodiments, information from the device along with its location information may be sent to other systems such as advertising systems, tracking systems, payment systems, notification systems, monitoring systems and the like. Other systems may also send information to the device. For example, the device may receive "on-sale" information for stores in its vicinity and/or for items stored on a wish-list in the phone or based on bank account information on the phone. For example, a store selling expensive merchandise may send advertising information to users who have a history of purchasing higher cost items or who have considerable amounts of money in their bank accounts.

Channel Response Processing

In embodiments, a channel may be probed multiple times using a similar probe signal and multiple channel response estimates, one for each of the probe signals, may be determined. In embodiments, the multiple channel response estimates may be compared using any of the matching and/or classification schemes described throughout this disclosure. In some scenarios, it may be expected that a channel probed multiple times with a similar probe signal should be characterized by very similar channel estimates. In some cases, one or more channel estimates determined from a set of similar probe signals probing a similar channel may be different enough from the other channel estimates that they are deemed to be outliers or poor estimates of the channel and they may be deleted and/or discarded from further processing steps. Outlier channel estimates may be the result of receiving noisy signals, interference caused by other radio signals in the environment, problems with circuits, feedback loops, synchronization schemes and the like. In embodiments, multiple channel responses estimated from multiple similar probe signals probing a similar channel may be compared to each other to determine a resonating strength and/or focusing gain and the resonating strength and/or focusing gain may be compared to a threshold value. Channel responses associated with resonating strengths and/or focusing gains below the threshold may be deleted or discarded from a stored or useful set of estimated channel responses. In some embodiments, deleting or discarding channel responses that are determined to be deficient in some manner may be referred to as trimming.

In embodiments, the resonating strength and/or focusing gain threshold may be a variable and may be user settable or may be set by a computer algorithm or by the output signal levels of analog and/or digital circuits. In embodiments, the threshold may be adjusted to change the resolution of a positioning system or to change the computation time required for determining locations.

In embodiments, it may be preferable to probe a channel more than once. In embodiments, it may be preferable to probe a channel twice, three times, 30 times, 50 times or more than 50 times. In embodiments, a channel may be probed any number of times, including, but not limited to, between 1 and 200 times. In embodiments, channel responses may be determined for at least some of the received probe waveforms. In embodiments the channel may be probed multiple times over a short period of time or over a longer period of time. In embodiments, a channel may be re-probed occasionally, periodically, in response to a trigger, a timer, a counter, an algorithm, a sensed change and the like. In embodiments, when a channel is re-probed, it may be probed with a single probe signal or with multiple probe signals. In embodiments, the multiple probe signals may be replicas of each other or they may be different from each other. For example, different probe signals may be pseudo-random sequences with different lengths and/or that have been generated using different seeds. In embodiments, probe signals may be Golay sequences of different lengths.

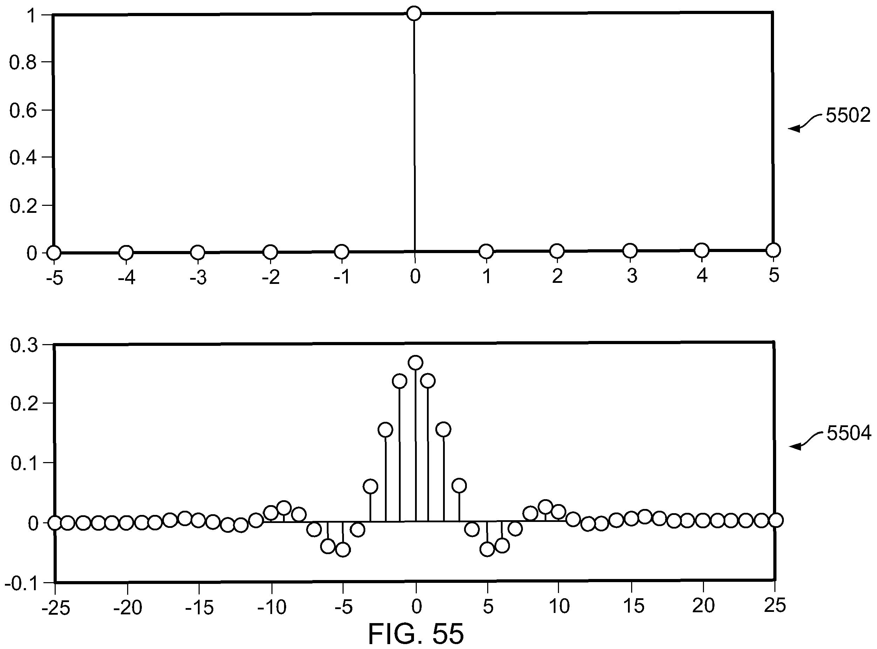

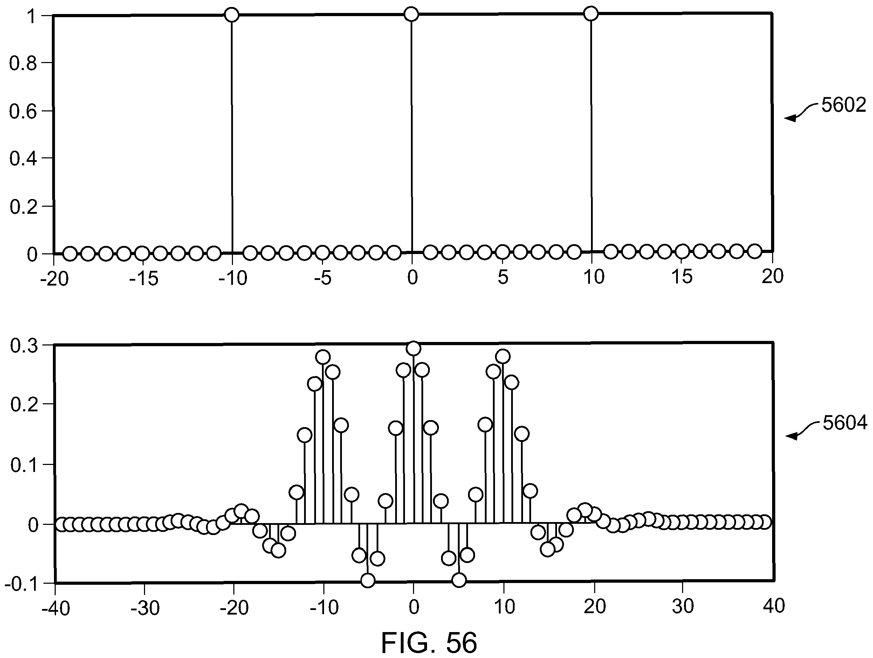

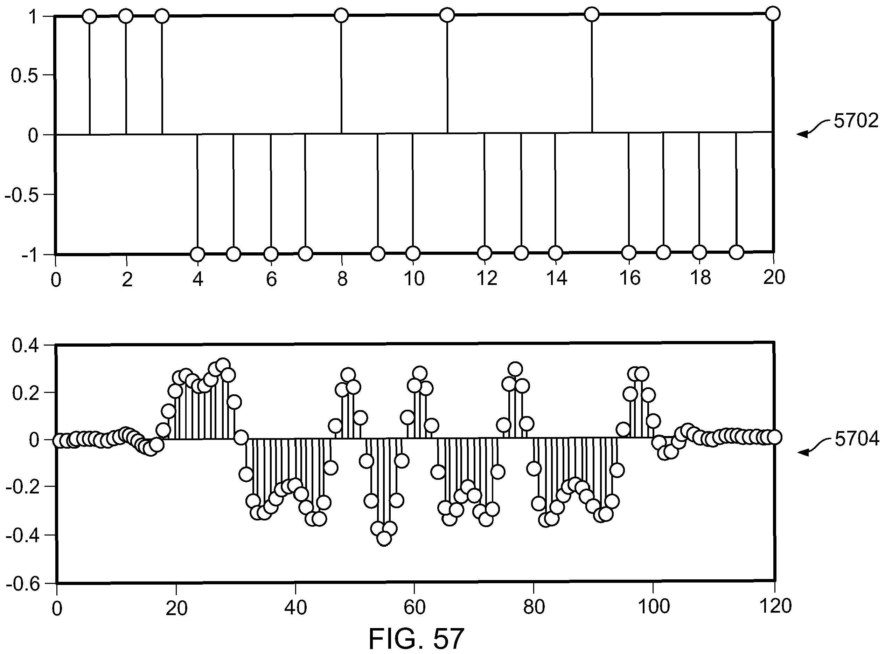

In embodiments, the number of bits in a data sequence that is used to probe a wireless channel may be tuned to achieve a certain signal-to-noise ratio and/or quality-of-signal of the received probe waveform. Examples of three channel probe signals and representations of the signals after they have been filtered by a root-raise-cosine filter are shown in FIGS. 55-57. The root-raise-cosine filter can be a low-pass filter that is used to ensure that the transmitted signal is within the bandwidth of the system. FIG. 55 shows a single impulse probe signal 5502 and its accompanying root-raise-cosine filtered signal 5504. FIG. 56 shows a periodic impulse probe signal 5602 and its accompanying root-raise-cosine filtered signal 5604. FIG. 57 shows a pseudo-random impulse probe signal 5702 and its accompanying root-raise-cosine filtered signal 5704.

In embodiments, multiple channel response estimates for the same channel may be averaged and/or combined into a single averaged or combined channel estimate. In embodiments, any number of channel estimates may be combined. For example, we have tested systems that combine and average 2 channel responses, 10 to 30 channel responses, 50 channel responses and 100 channel responses. In embodiments the number of channels that may be combined and/or averaged may be variable and may be determined by a user, by a computer algorithm and/or by the output signals from circuits in the wireless system.

In embodiments, channel responses may be processed locally, e.g., within a wireless device that may include the wireless antenna or antennas. In some embodiments, the received signal waveforms and/or estimated channel responses may be processed remotely, e.g., in a remote computer, server, access point, router and the like. In some embodiments, received signal waveforms and/or estimated channel responses may be sent to "the cloud" for processing, storage and the like. Resources in the cloud may include, but are not limited to, servers, computers, hard drives, switches, routers, storage units, databases, transmitters, receivers and the like.

In embodiments where a channel is being probed multiple times, it may be important to remove effects associated with the detection and processing of the received probe waveform so that variations in estimated channel responses can be associated primarily with variations in the channel itself. For example, some WiFi receivers may expose a complex vector that represents the channel attenuation and phase shift of each subcarrier signal within the WiFi channel band. Sometimes referred to as the channel frequency response, $H_{ij}(f)$, (CFR) or as the channel state information (CSI), this response may vary for subsequent probe channel measurements even if the channel itself has not substantially changed. One reason may be that the channel frequency offset (CFO) and/or sampling frequency offsets (SFO) used to measure the channel frequency response may vary from measurement to measurement and/or detection event to detection event. In such scenarios, sequential estimates of the channel response may vary even if the channel has not varied. In such scenarios, it may be more difficult to determine an averaged channel response and/or to determine which channel responses may be outliers that should be trimmed from a channel response set, collection, and/or database. In embodiments, received probe waveforms and/or estimated channel frequency responses (or CSIs) may be processed to remove shot-to-shot channel estimate errors due to carrier frequency offsets and sampling frequency offsets. In embodiments, reference phases may be used to align channel estimates derived from multiple channel probe signals. In embodiments, a reference phase is a phase chosen from one of the channel estimate that serves as the reference for other channel estimates. In embodiments, the multiple channel probe signals may be replicas of each other or they may vary in frequency, bandwidth, wireless path, and the like. In embodiments, composite channel responses may comprise multiple channel responses that have been estimated using a reference phase (e.g., a timing offset).

High Precision Location Determination using Composite Channel Responses

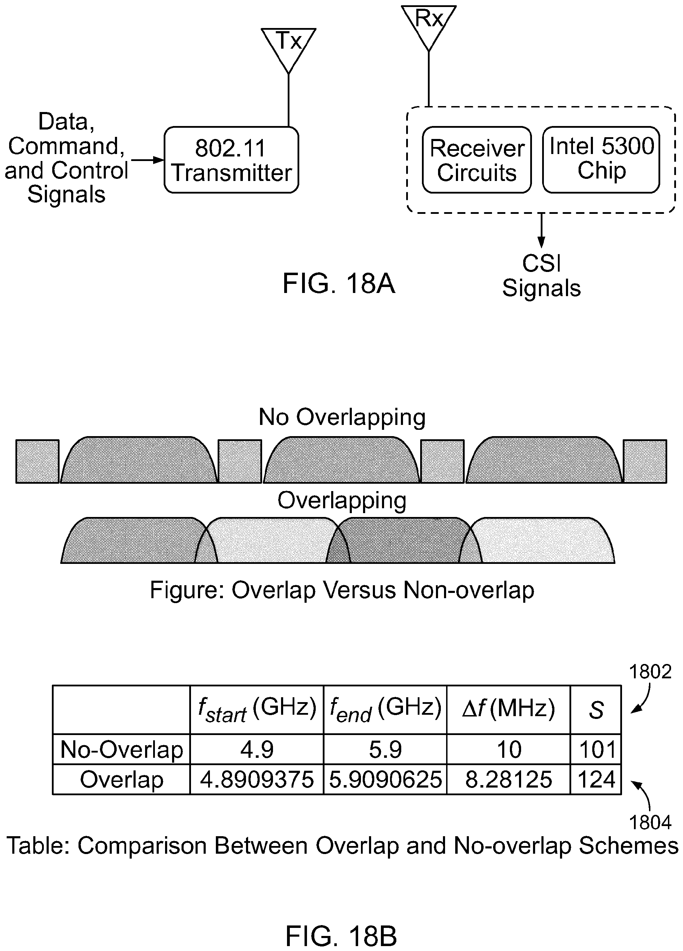

FIG. 18A shows a block diagram of an exemplary WiFi system capable of determining device location (e.g., with approximately 5 cm accuracy). The system described in the block diagram can be implemented using commercial-off-the-shelf WiFi equipment. Channel measurements can be performed using this equipment, and composite channel responses can be used to determine the position of a transmitting device. The resolution with which the location may be determined may be defined at least in part according to the number of lower-bandwidth channel estimates that are included in the composite channel response, as described above.

In a laboratory demonstration described below, the center frequency of the transmitter can be tuned to different 10 MHz channels within the standard 802.11 WiFi band. FIG. 18B shows examples of two channel tuning schemes - an exemplary non-overlapping scheme 1802 and an exemplary overlapping scheme 1804. In the non-overlapping scheme 1802, the frequency bands of the WiFi signal have substantially no overlapping frequencies and may be described as being separated by frequency guard-bands. In this example, the non-overlapping scheme 1802 includes 101 non-overlapping channels in which the spacing between the center frequencies of the channels is 10 MHz. A first channel has a center frequency of 4.9 GHz, and a last channel has a center frequency of 5.9 GHz. In the overlapping scheme 1804, adjacent frequency bands of the WiFi signal may include some of the same frequency components. In this example, the overlapping scheme 1804 includes 124 overlapping channels in which the spacing between the center frequencies of the channels is 8.28125 MHz. A first channel has a center frequency of 4.8909375 GHz, and a last channel has a center frequency of 5.9090625 GHz. In the preliminary experimental results described below, data are collected using both overlapping and non-overlapping frequency channels.

In an exemplary embodiment, a circuit may be used to capture the CSI for the wireless channel between a receiver and a transmitter. The CSI may be used to estimate the wireless channel response for each of the subcarriers in a wireless signal. The CSI may be a complex vector, comprising both amplitude and phase information related to the wireless channel. In some embodiments, only the channel amplitude information may be determined and/or exported and/or processed. In some embodiments, only the channel phase information may be determined and/or exported and/or processed. In preferred embodiments, both the channel amplitude and phase information may be determined and/or exported and/or processed as part of a positioning system application. In embodiments, CSI signals may be processed in a processor such as a microprocessor and/or a DSP, a computer, an FPGA, an ASIC, and the like, and may be processed locally, on resources integrated with, or in close proximity to, the chip or system that generates the CSI signals, and/or the CSI signals may be processed remotely at a distance computing device that may be configured for performing signal processing, and/or the CSI signals may be processed using at least some cloud resources.

In embodiments, the CSI may be determined by a standardized mechanism, such as exists for the 802.11 signaling protocol. In some embodiments, the CSI may be determined by monitoring and recording parameters in the radio receiver and/or by monitoring monitor and control signals passed between a receiver and a transmitter. In the laboratory demonstration, the circuit used to capture the CSI included a USRP (National Instruments' Universal Software Radio Peripheral platform) and/or an Intel 5300 chip.

In embodiments, certain portions of a wireless protocol packet structure may be used to estimate channel state information and/or the channel frequency response. In an exemplary 802.11 network, long preambles that follow short preambles may be used to determine the CSI. Exemplary 802.11 communication systems may utilize orthogonal frequency division multiplexing or OFDM. Each OFDM channel may include multiple subcarriers. An OFDM channel may include more than 20 subcarriers, more than 30 subcarriers, more than 40 subcarriers, 48 subcarriers, 56 subcarriers, 64 subcarriers, or 114 subcarriers, etc. In embodiments, some of the subcarriers in an OFDM signal may be null subcarriers or may be pilot subcarriers. In embodiments, only some of the subcarriers in an OFDM symbol may be data subcarriers.

In embodiments, a circuit may provide CSI for some or all of the subcarriers. For example, in some exemplary embodiments, the Intel 5300 chip and/or USRP may export the CSI for 30 subcarriers in the OFDM channel. In embodiments, further processing of the CSI may be performed to mitigate variations in the CSI owing to imperfect timing and/or frequency synchronization. In embodiments, the CSI from one sub-band may be arranged as a vector and may be referred to as an intra-band fingerprint. In some embodiments, the CSI from one sub-band may the average of multiple CSI determinations and some determinations may be trimmed or discarded. In embodiments, a sub-band CSI for a given channel may be measured and/or determined once, twice, ten times, 30 times, 50 times, 100 times and the like. In embodiments, some or all of the sub-band CSI information may be used to form an intra-band fingerprint.

The example provided above, where the CSI is reported for 30 subcarriers, is merely an example and is not meant to be limiting in any way. The CSI information from any number of subcarriers may be utilized in the positioning systems described herein. Also, the number of channel measurements that may be performed, or the number of WiFi packets that are exchanged in order to determine CSI and intra-band fingerprints, are exemplary and are not meant to be limiting in any way. For example, a positioning system that also tracks movement may constantly send probe signals that can be used to determine estimated channel responses and device positions. In such systems, probe signals may be sent thousands of times or millions of times per second and may continue to be sent as long as the positioning and/or tracking system is being used. The description of a channel probe signal being sent 30 times or 100 times may refer to the number of times a probe signal is sent before another type of wireless signal is sent by the system. For example, in some systems, there may be a channel probing phase and a data transmission phase. The channel probing phase may be as described in this disclosure and the data transmission phase may correspond to data being sent (e.g., such as location information, sales information, payment information, alerts, communication information, and the like). In some implementations, there may be little or no data that needs to be transmitted by a system, and a channel probing phase may go on indefinitely. In such implementations, the number of probe signals that may be sent and the number of received probe waveforms that may be detected, processed, stored, and the like may be huge.

In embodiments, multiple different center frequency, frequency bandwidth, and/or antenna intra-band fingerprints may be combined and/or concatenated into a composite or inter-band fingerprint. In embodiments, the inter-band finger print may form a composite channel response. This composite channel response may be used to determine the location of an antenna and/or wireless device in a positioning system. In embodiments, the location accuracy of a positioning system using a composite channel response may be higher than the accuracy achieved using a single intra-band fingerprint.

In an exemplary embodiment, two long preambles in an 802.11 frame can be used to determine the CSI for a wireless channel between the two devices. For example, one of the wireless devices may be a wireless router/access point and may support a wireless hotspot (e.g., at a home, or at a business). The wireless router/access point may be a standard device that has not been specifically modified and/or arranged to work with the systems and methods described herein. In other words, the systems and methods described herein can take advantage of such existing wireless devices and their methodologies to determine positional information. In this exemplary embodiment, when the second wireless device (e.g., a computer, a smart phone, a tablet, etc.) is in range of the router/access point, the second wireless device may receive WiFi signals from the router/access point and may process the long preambles included in the WiFi signals to determine a location/environment specific signature between itself and the router/access point. In some implementations, the second wireless device may include software and/or firmware for enabling the second wireless device to operate with the system. In some implementations, the second wireless device is not joined to the hotspot. Rather, the second wireless device may be a passive device that can receive the standard preamble information from the router/access point. In this way, the second wireless device may be referred to as a "sniffer." In embodiments, the two long preambles are sent in one frame, e.g., for each OFDM channel. In embodiments, the OFDM channels can have bandwidths of, e.g., 20 MHz or 40 MHz.

As described above, the system can determine CSI and associate the CSI with various locations. For example, in one instance, the second wireless device can store CSI and associate it with a particular location (e.g., "the chair in the front-right corner of Coffee Shop on 123 Main Street"). When the second device is subsequently in the particular location, it may provide an indication (e.g., an alert). In some implementations, when the second wireless device has access to the internet (e.g., by joining the WiFi network, the second wireless device may upload acquired location/environment information. The location/environment information may be uploaded to a resource (e.g., a cloud-based resource) such as one or more servers, hard drives, storage units, and/or databases that are configured to store such location information.

In some implementations, the first device (e.g., the routers/access points) may have already been mapped to a particular location. Such mapping may be relatively coarse. For example, the SSIDs or other network identifier of the router/access point may be associated with a particular location (e.g., a longitude and a latitude), and such coarse locational information can be used to assist in determining a more-precise location of the second wireless device. For example, such location information can be uploaded to the resource (e.g., a database in the cloud), and the information can be used to associate CSI/location specific signatures with known coarse locations of routers/access points. In some implementations, the router/access point is associated with more-detailed location information. For example, the router/access point may be associated with a 2D or 3D floor plan, and such information can be provided to the second device when the second device is in range of the router/access point. In some examples, a display of the second wireless device may present a floor plan based on such information. The second wireless device may be configured to receive an input from a user indicative of the current position (e.g., tapping a spot on the displayed floor plan), thereby causing CSI to be collected and correlated with that particular position. In some implementations, the information related to the floorplan may be stored locally on the second device and/or may be stored in a cloud-based database. In some implementations, a third wireless device that comes within range of the router/access point may have access to the floorplan information. If the database contains one or more signatures associated with the particular router/access point, the system may collect a location signature from the third wireless device, compare the signature to existing signatures stored in the database, and provide an indication to a user if there is a match. For example, if the third wireless device's location signature matches a stored signature that is associated with a particular position on a stored floor plan, a display of the third wireless device may present the floor plan along with an indication of the particular position.

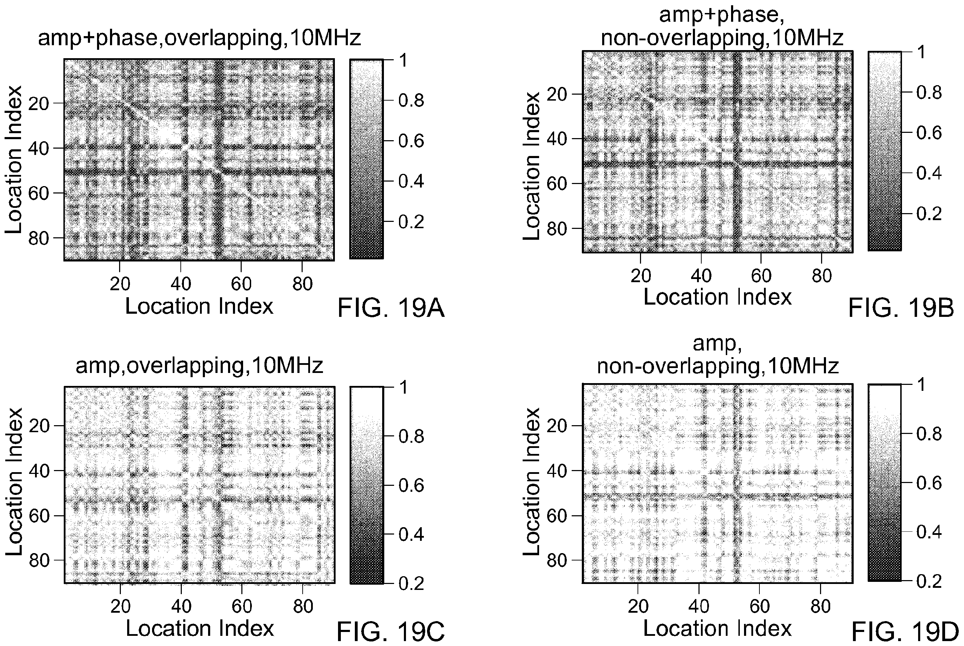

FIGS. 19-25 show experimental results obtained using a system similar to that shown in FIG. 18A. In this example, the WiFi channel bandwidth is approximately 10 MHz and the channel center frequencies may be arranged so that frequencies within adjacent channel bands overlap or are non-overlapping. In the experimental results, resonating strengths may be determined for a single 10 MHz WiFi channel or resonating strengths may be determined using composite channel responses comprising channel response information for two or more 10 MHz wide WiFi channels. As described previously, the composite channel responses may comprise channel responses associated with different channel probe signal frequencies, bandwidths, transmitter locations, paths, and the like. The composite channel responses assembled here comprise multiple channel responses determined from the long preambles of standards-based WiFi (802.11xx) packets at different channel center frequencies. These are exemplary composite channel responses and are not meant to be limiting in any way.

The plots of FIGS. 19-25 show the calculated resonating strength between a stored channel response for a certain one of 90 locations (indicated by an index number on the horizontal axes) and a newly measured channel response at a certain one of the same 90 locations (also indicated by an index number on the vertical axes). The locations are associated with grid points in the figures. In the presented data, measured and stored location indices having the same value indicates that the measured and stored channel responses are measured and/or stored for the same multipath channel or similar multipath channels (e.g., the same position or similar positions of transmitter and receiver). When the location indices differ by "1", the measured and stored channel responses are for channels where the location of the receiver relative to the transmitter has changed by approximately 5 cm. White grid points indicate a relatively high resonating strength for the corresponding location index, black grid points indicate a relatively low resonating strength for the corresponding location index, and grey grid points indicate an intermediate resonating strength for the corresponding location index that is proportional to the shade of grey (e.g., wherein lighter grey colors indicate relatively higher resonating strengths than darker grey colors). If a positioning system is accurately determining a position with a high confidence, the grid points along the line where the stored channel response index and the measured channel response index are the same will be white and the rest of the plot will be gray or black. As the resonating strengths of non-matching channel responses become darker (e.g., closer to black), the confidence that this grid position does not represent the same physical location is increasing. The matrix representation of the resonating strength shown in FIGS. 19-25 may be referred to as a confusion matrix. Plots may also be produced that plot the focusing gain that each combination of channel induces. The focusing gain plot may also be referred to as a confusion matrix.

FIGS. 19A-D show calculated resonating strengths for channel responses derived from different sets of CSI data. FIGS. 19A and 19B show resonating strengths determined from amplitude and phase data collected from CSI signals for a single 10 MHz channel from the overlapping set of channel center frequencies (FIG. 19A) and the non-overlapping set of channel frequencies (FIG. 19B). In this example, the channel center frequencies are different for the non-overlapping and overlapping frequency sets. FIGS. 19C and 19D show resonating strengths determined from amplitude-only data collected from CSI signals for a single 10 MHz from the overlapping set of channel center frequencies (FIG. 19C) and the non-overlapping set of channel frequencies (FIG. 19D).

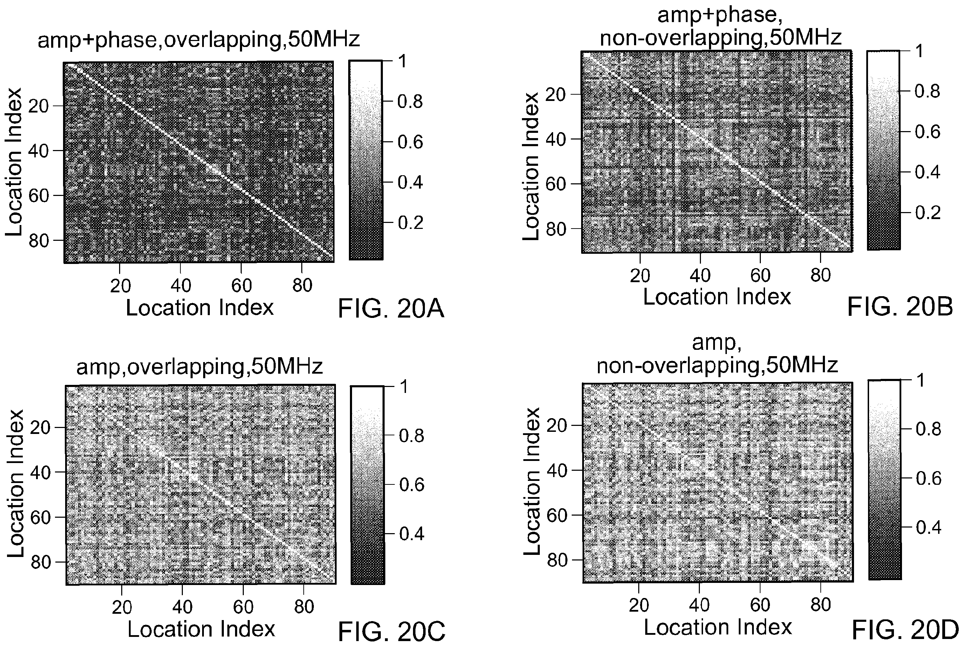

FIGS. 20A-20D show calculated resonating strengths for composite channel responses derived from different sets of CSI data. For these data, the composite channel response comprises channel response information or CSI from five (5) different frequency channels in the WiFi band. FIGS. 20A and 20B show resonating strengths determined from amplitude and phase data collected from CSI signals for five (5) 10 MHz channels from the overlapping set of channel center frequencies (FIG. 20A) and the non-overlapping set of channel frequencies (FIG. 20B). FIGS. 20C and 20D show resonating strengths determined from amplitude-only data collected from CSI signals for five (5) 10 MHz channels from the overlapping set of channel center frequencies (FIG. 20C) and the non-overlapping set of channel frequencies (FIG. 20D). In some examples, the position identification accuracy that may be determined using composite channel responses exceeds the position identification accuracy that may be determined using a single channel response. The improvement is evident in the sharper distinction in the resonating strengths between matching and non-matching positions.

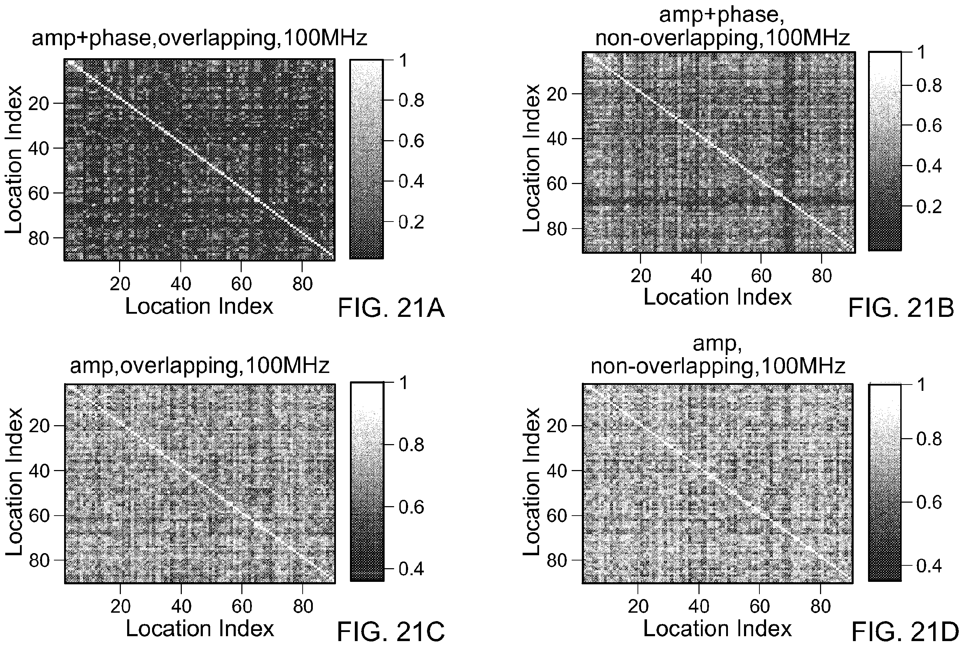

FIGS. 21A-21D show calculated resonating strengths for composite channel responses derived from different sets of CSI data. For these data, the composite channel response comprises channel response information or CSI from ten (10) different frequency channels in the WiFi band. That is, the inter-band fingerprint comprises ten intra-band fingerprints. FIGS. 21A and 21B show resonating strengths determined from amplitude and phase data collected from CSI signals for ten (10) 10 MHz channels from the overlapping set of channel center frequencies (FIG. 21A) and the non-overlapping set of channel frequencies (FIG. 21B). FIGS. 21C and 21D show resonating strengths determined from amplitude-only data collected from CSI signals for ten (10) 10 MHz channels from the overlapping set of channel center frequencies (FIG. 21C) and the non-overlapping set of channel frequencies (FIG. 21D). In some examples, the position identification accuracy that may be determined using composite channel responses comprising 10 channel responses exceeds the position identification accuracy that may be determined by a composite channel response comprising 5 or 1 channel response(s). The improvement is evident in the larger distinction in the resonating strength between matching and non-matching positions.

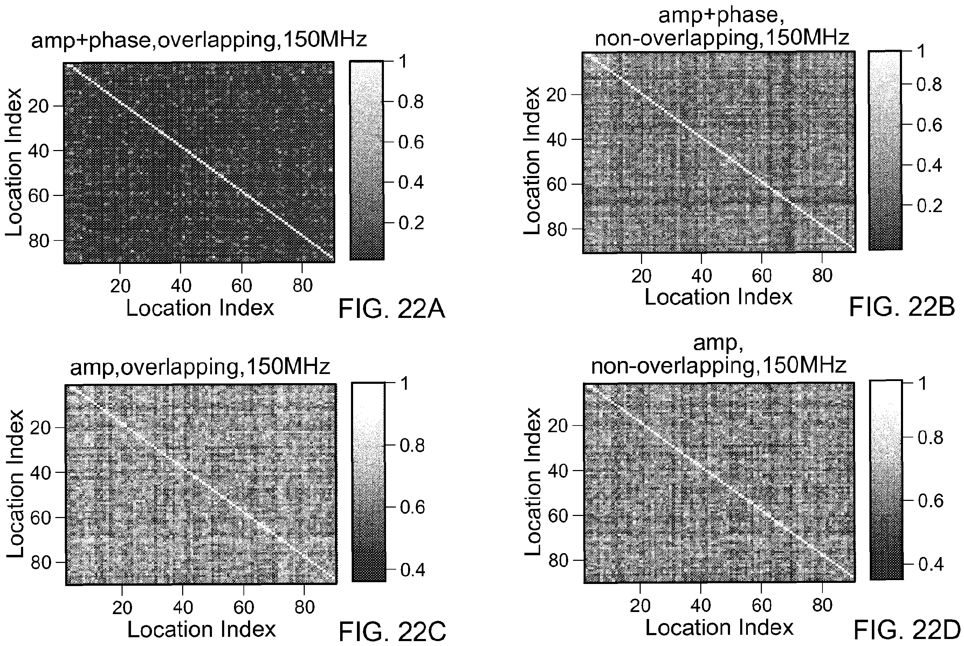

FIGS. 22A-22D show calculated resonating strengths for composite channel responses derived from different sets of CSI data. For these data, the composite channel response comprises channel response information or CSI from fifteen (15) different frequency channels in the WiFi band. That is, the inter-band fingerprint comprises fifteen intra-band fingerprints. FIGS. 22A and 22B show resonating strengths determined from amplitude and phase data collected from CSI signals for fifteen (15) 10 MHz channels from the overlapping set of channel center frequencies (FIG. 22A) and the non-overlapping set of channel frequencies (FIG. 22B). FIGS. 22C and 22D show resonating strengths determined from amplitude-only data collected from CSI signals for fifteen (15) 10 MHz channels from the overlapping set of channel center frequencies (FIG. 22C) and the non-overlapping set of channel frequencies (FIG. 22D). In some examples, the position identification accuracy that may be determined using composite channel responses comprising 15 channel responses exceeds the position identification accuracy that may be determined by a composite channel response comprising 10, 5, or 1 channel response(s). The improvement is evident in the larger distinction in the resonating strength between matching and non-matching positions.

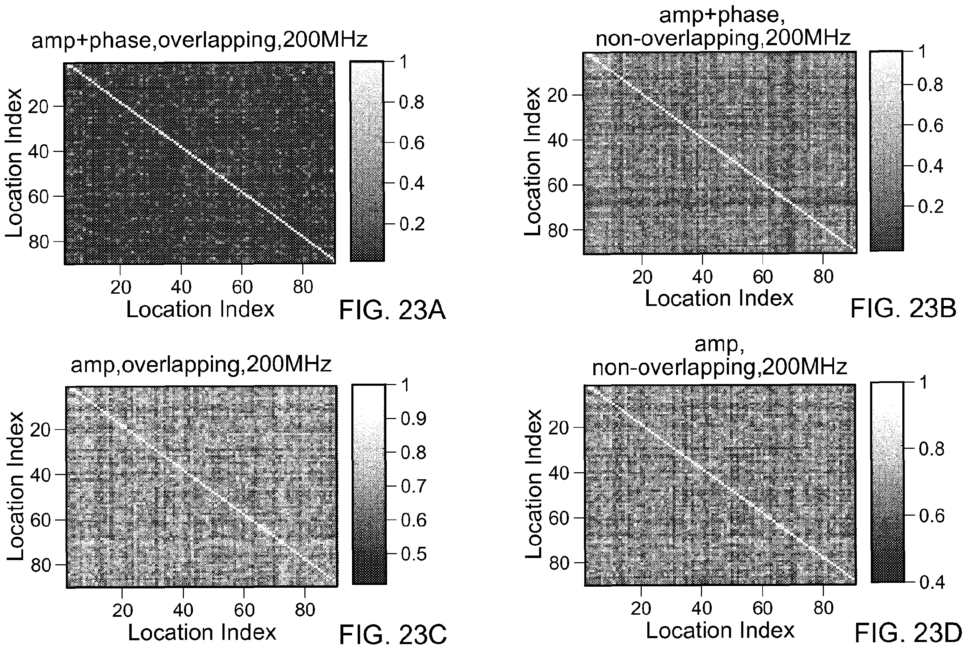

FIGS. 23A-23D show calculated resonating strengths for composite channel responses derived from different sets of CSI data. For these data, the composite channel response comprises channel response information or CSI from twenty (20) different frequency channels in the WiFi band. That is, the inter-band fingerprint comprises twenty intra-band fingerprints. FIGS. 23A and 23B show resonating strengths determined from amplitude and phase data collected from CSI signals for twenty (20) 10 MHz channels from the overlapping set of channel center frequencies (FIG. 23A) and the non-overlapping set of channel frequencies (FIG. 23B). FIGS. 23C and 23D show resonating strengths determined from amplitude-only data collected from CSI signals for twenty (20) 10 MHz channels from the overlapping set of channel center frequencies (FIG. 23C) and the non-overlapping set of channel frequencies (FIG. 23D). In some examples, the position identification accuracy that may be determined using composite channel responses comprising 20 channel responses exceeds the position identification accuracy that may be determined by a composite channel response comprising 15, 10, 5 or 1 channel response(s). The improvement is evident in the larger distinction in the resonating strength between matching and non-matching positions.

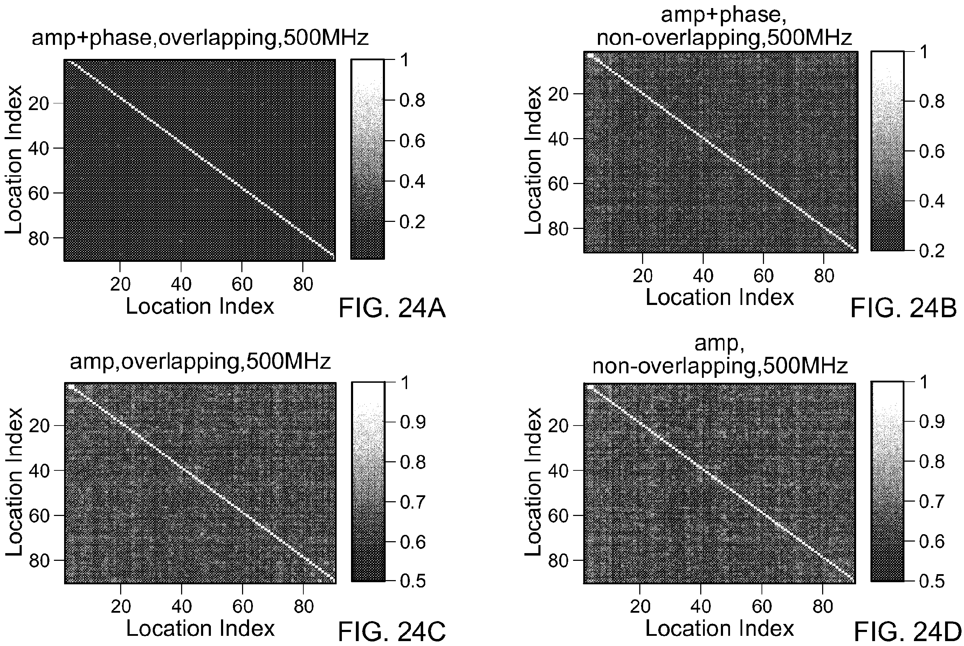

The data in FIGS. 24A-24D show calculated resonating strengths for composite channel responses derived from different sets of CSI data. For these data, the composite channel response comprises channel response information or CSI from fifty (50) different frequency channels in the WiFi band. That is, the inter-band fingerprint comprises fifty intra-band fingerprints. FIGS. 24A and 24B show resonating strengths determined from amplitude and phase data collected from CSI signals for fifty (50) 10 MHz channels from the overlapping set of channel center frequencies (FIG. 24A) and the non-overlapping set of channel frequencies (FIG. 24B). FIGS. 24C and 24D show resonating strengths determined from amplitude-only data collected from CSI signals for fifty (50) 10 MHz channels from the overlapping set of channel center frequencies (FIG. 24C) and the non-overlapping set of channel frequencies (FIG. 24D). Is some examples, the position identification accuracy that may be determined using composite channel responses comprising 50 channel responses exceeds the position identification accuracy that may be determined by a composite channel response comprising 20, 15, 10, 5 or 1 channel response(s). The improvement is evident in the larger distinction in the resonating strength between matching and non-matching positions.

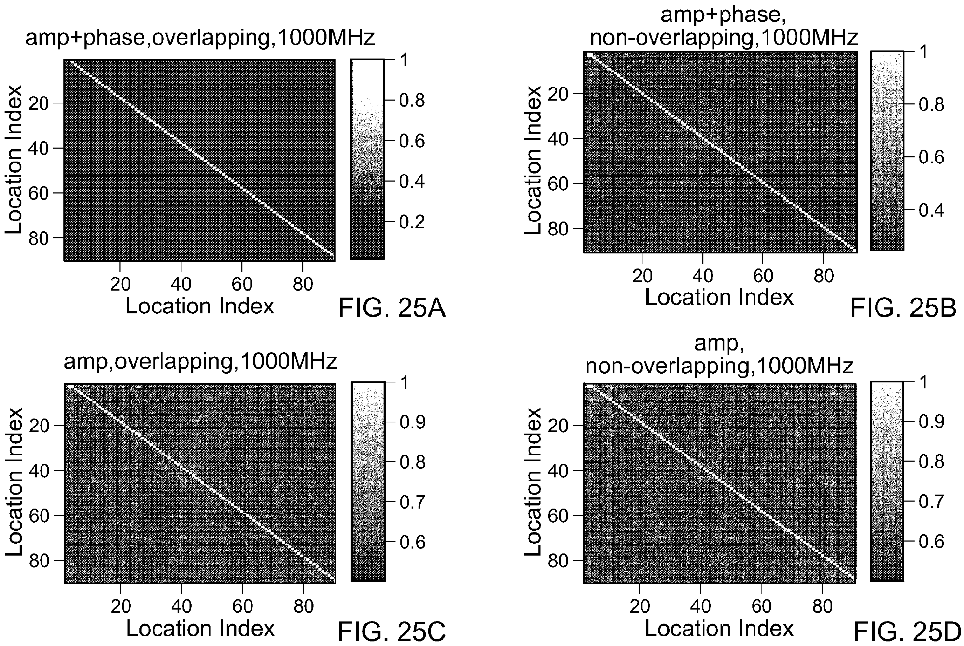

FIGS. 25A-25D show calculated resonating strengths for composite channel responses derived from different sets of CSI data. For these data, the composite channel response comprises channel response information or CSI from 100 (100) different frequency channels in the WiFi band. That is, the inter-band fingerprint comprises one hundred intra-band fingerprints. FIGS. 25A and 25B show resonating strengths determined from amplitude and phase data collected from CSI signals for one hundred (100) 10 MHz channels from the overlapping set of channel center frequencies (FIG. 25A) and the non-overlapping set of channel frequencies (FIG. 25B). FIGS. 25C and 25D show resonating strengths determined from amplitude-only data collected from CSI signals for one hundred (100) 10 MHz channels from the overlapping set of channel center frequencies (FIG. 25C) and the non-overlapping set of channel frequencies (FIG. 25D). In some examples, the position identification accuracy that may be determined using composite channel responses comprising 100 channel responses exceeds the position identification accuracy that may be determined by a composite channel response comprising 50, 20, 15, 10, 5 or 1 channel response(s). The improvement is evident in the larger distinction in the resonating strength between matching and non-matching positions.

In some examples, the improvement in position identification accuracy as more individual channel responses are added to the composite channel response is qualitatively similar to the improvement in position resolution associated with widening the bandwidth of the channel probe signal in the customized radio signaling system described previously in this disclosure. Note that as the bandwidth of the single channel responses increases from 10 MHz to 20 MHz or 40 MHz or higher, the number of individual channel responses that may be included in the composite channel response to achieve a desired location identification accuracy may be less.

While data for a composite channel response that comprise individual channel responses determined from different OFDM channel data have been presented in FIGS. 19-25, a variety of individual channel responses may be included in a composite channel response. By way of example, but not limitation, individual channel responses determined from different OFDM channels, center frequencies, bandwidths, and antennas may be included, and various combinations of such channel responses may be included. In embodiments, an access point or base station may include multiple closely spaced antennas, and each of these antennas may receive OFDM channel packets and determine CSIs for their channel to the transmitter. In the WiFi communication bands around 2.4 GHz and 5.8 GHz, the receiver antennas may only need to be separated by a relatively short distance (e.g., by a few centimeters) to yield independent CSIs from a single transmit antenna. In embodiments, the number of antennas preferably deployed in an access point or base station may be determined by the number of individual channel responses that may be preferably included in a composite channel response. In some embodiments, the number of antennas in an access point or base station may be increased to meet the number of individual channel responses that may be preferably included in a composite channel response. In embodiments, the transmitter may also have multiple antennas and WiFi packets transmitted from each transmit antenna to each receive antenna may be used to determine individual channel estimates that may be included in composite channel estimates.

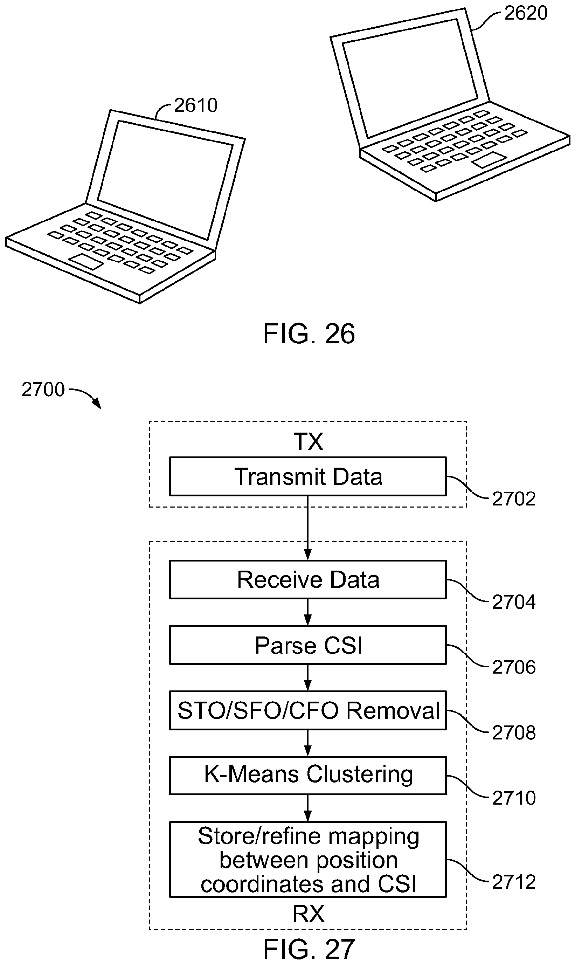

FIG. 26 shows another exemplary embodiment of the positioning system that includes two general purpose personal computers (PCs) 2610, 2620. Each computer 2610, 2620 includes one or more WiFi antennas. Each WiFi antenna can include zero or more transmitter (TX) antenna and zero or more receiver (RX) antenna. Each computer 2610, 2620, also includes a wireless adapter card (e.g., an Intel 5300 wireless adapter card) that is configured to determine channel state information for each TX and/or RX antenna pairing and for each WiFi packet sent between the two computers 2610, 2620. The example described here is for a system that was demonstrated in a laboratory and is not meant to be limiting. That is, not just PCs, but any device may comprise TX and/or RX antennas, and may comprise one, two or more than two antennas. Any wireless adapter card that can be used to determine the channel state information using any wireless protocol can be used to implement the devices, systems, techniques and methods described herein.

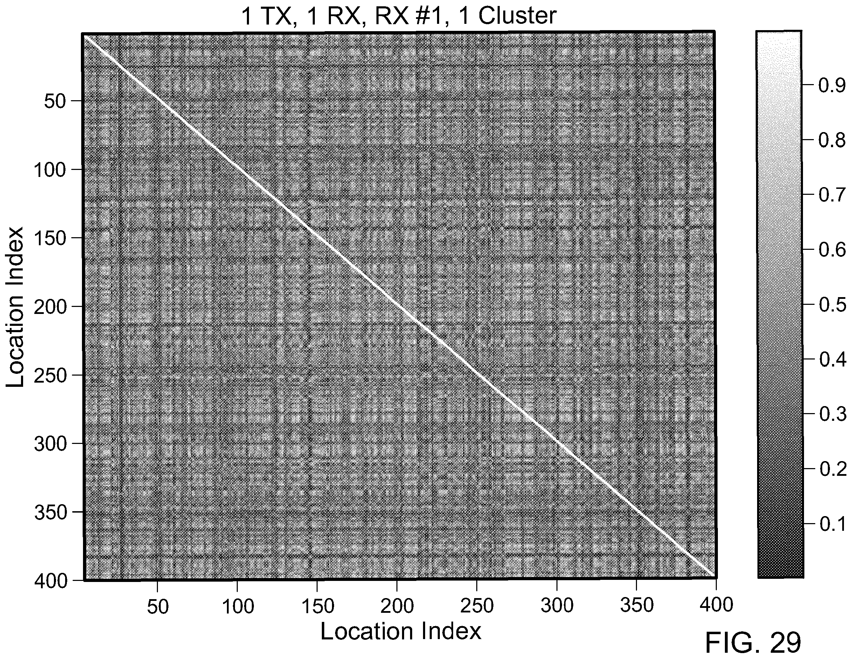

The first computer 2610 may send WiFi communication packets and/or data to the second computer 2620. In embodiments, the sending device may be referred to as a WiFi transmitter. The wireless adapter card (e.g., the Intel 5300 wireless adapter card) is configured to support multiple input, multiple output (MIMO) functionality. Using the MIMO capability of the wireless adapter card, the computers 2610, 2620 can use a variety of configurations to estimate channel state information, as described in more detail below with respect to FIGS. 29-40.

As described briefly above, the computers 2610, 2620 may undergo a training phase (e.g., for building a database that has information on the mapping between positional coordinates and channel state information). FIG. 27 shows a flow diagram 2700 illustrating a training phase methodology that is performed for each TX/RX antenna pair. For example, if the first computer 2610 has two TX antennas and the second computer 2620 has two RX antennas, the training phase is performed by using the first TX antenna to transmit first data and using the two RX antennas to receive the first data, then using the second TX antenna to transmit second data and using the two RX antennas to receive the second data. Each TX antenna transmits data (block 2702) that pass through a wireless multipath channel and are received by each RX antenna (block 2704). The transmissions can expose information that represents channel attenuation and phase shifts for each transmission, which is sometimes referred to as channel state information (CSI). The CSI of the transmissions is then parsed (block 2706).

In some implementations, the attenuations of the various CSIs may be substantially correlated, but the phase shifts of the CSIs may be significantly different from each other. In some implementations, the differences in the phase shifts across different CSIs may be due to synchronization issues between the TXs and the RXs, such as symbol timing offset (STO), residual sampling frequency offset (SFO), and residual carrier frequency offset (CFO). Such synchronization issues may degrade the correlation performance between the various CSIs (e.g., even if the CSIs are captured at the same locations). To minimize the synchronization issues, at least a portion of the STO and/or the SFO and/or the CFO is removed (block 2708). In some implementations, the STO and/or SFO and/or CFO is removed by performing a linear fitting on an unwrapped phase of the CSIs.

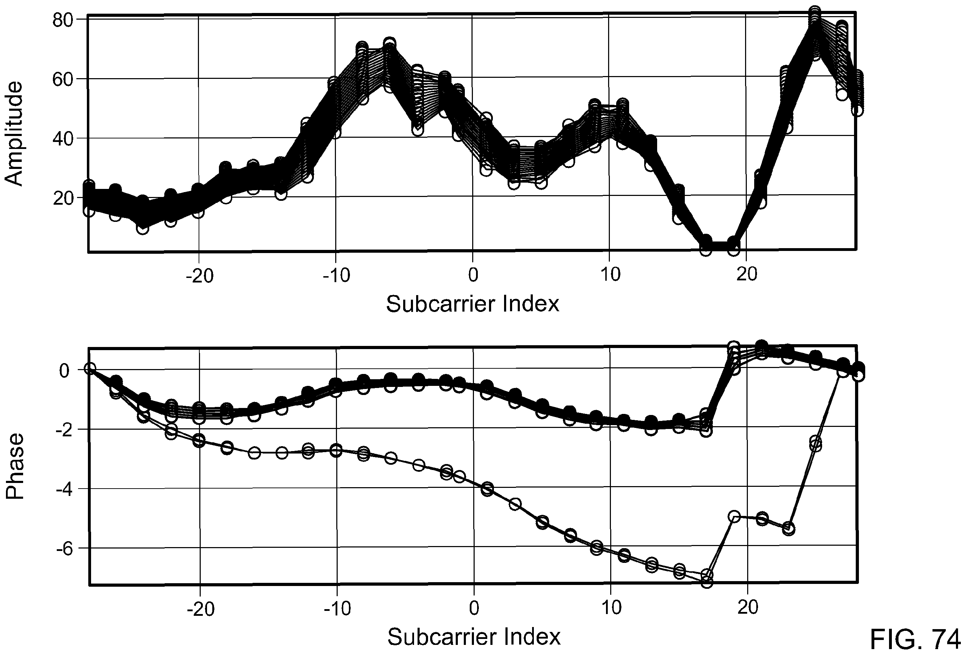

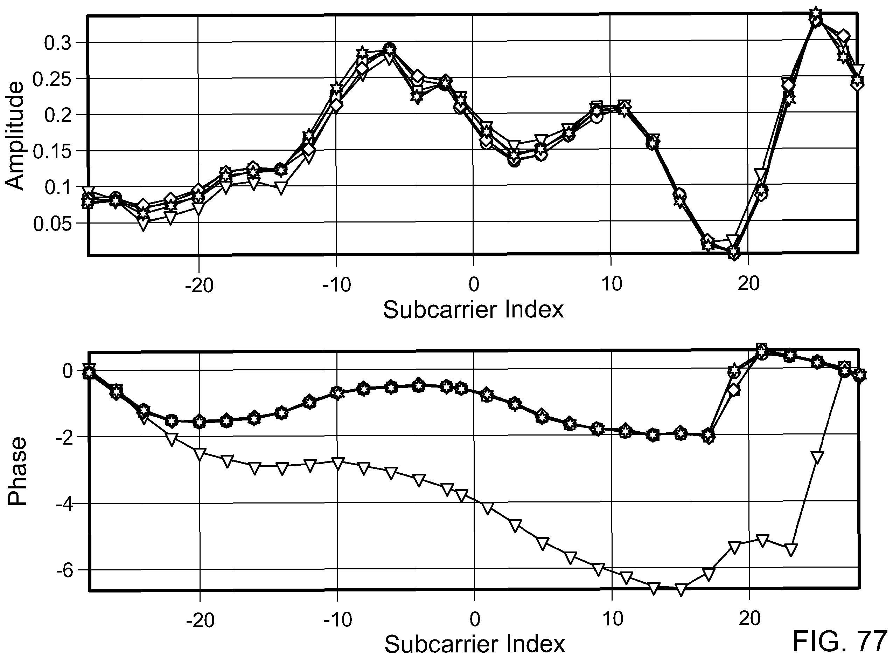

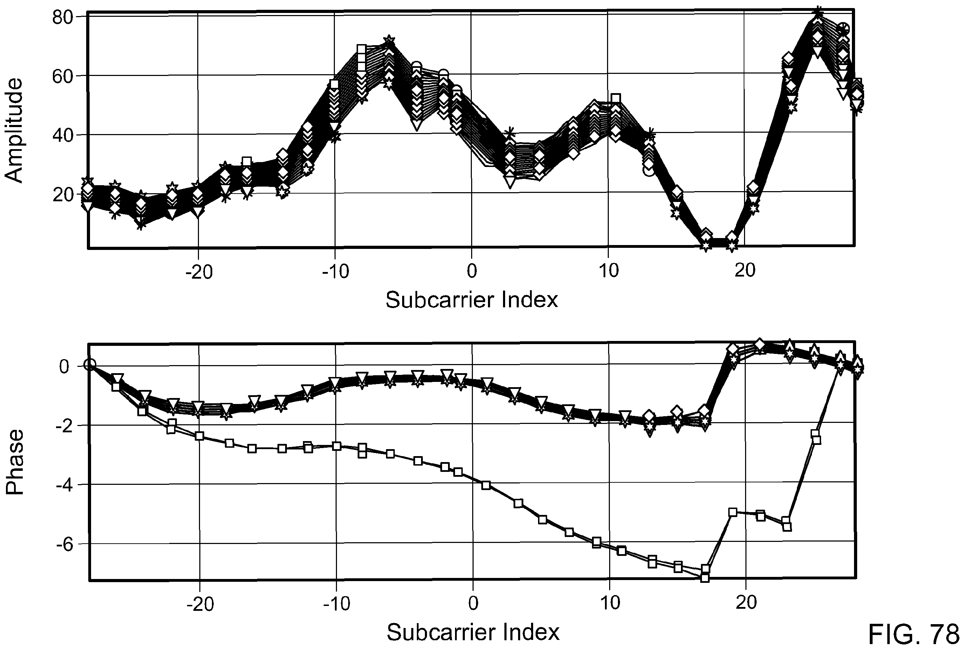

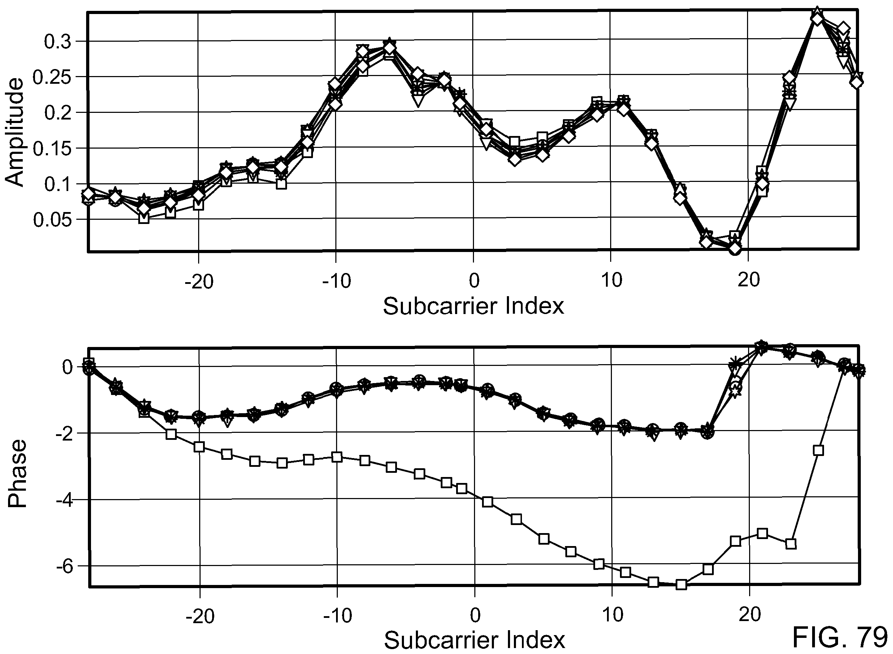

Following the STO/SFO/CFO removal (block 2708), K-means clustering is performed on the CSIs (block 2710). In some implementations, the phases of the CSIs can be classified into several groups. CSIs that are classified in the same group may be highly correlated with each other, while CSIs that are classified into different groups may be minimally correlated with each other. To fully describe the CSIs without losing any information, a K-means clustering algorithm can be applied to the CSIs. The K-means clustering algorithm is an unsupervised algorithm that can be used to classify data in any dimension. The algorithm starts by randomly identifying K centroids and measuring the distance between the remaining data and the centroids. This process can be performed iteratively, and the process may arrive at a specific clustering such that the distance inside one cluster is small, and the distance between two clusters is large. The parameter K may be finely tuned to achieve optimality in clustering as well as robustness against environmental change. Information related to mappings between position coordinates (e.g., the positional coordinates of the first computer 2610 and/or the second computer 2620) and the CSI is then stored and/or refined in a database (block 2712). In some implementations, the centroids can be kept as representative CSIs, and other CSIs may be discarded (e.g., to reduce the amount of information stored in the database). K-means clustering is described in more detail below with respect to FIGS. 74-79.

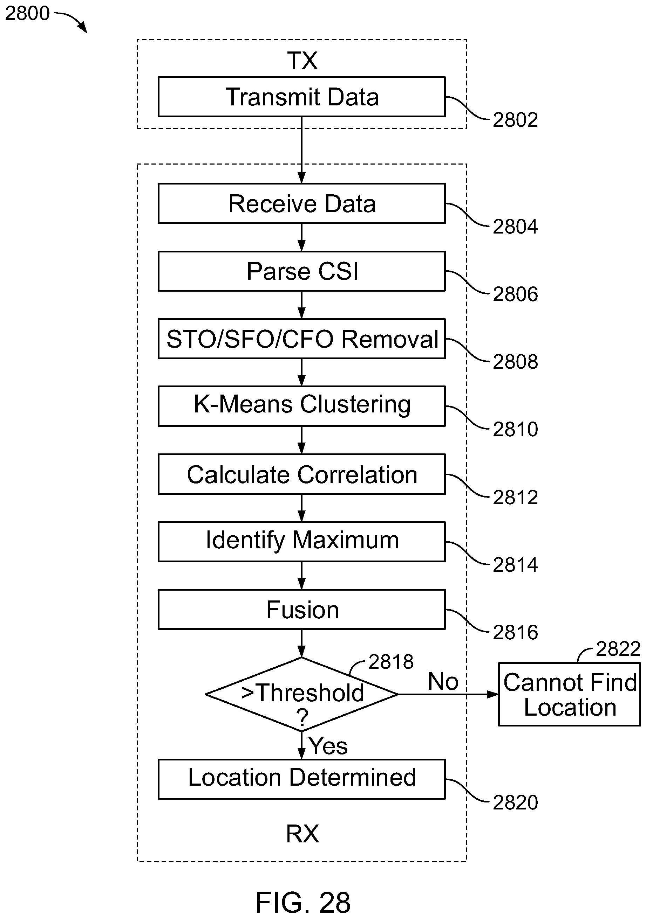

Following the training phase, the computers 2610, 2620 may undergo a localization phase (e.g., for determining a location of the first computer 2610 and/or the second computer 2620). FIG. 28 shows a flow diagram 2800 illustrating a localization phase methodology that is performed for each TX/RX antenna pair. Each TX antenna transmits data (block 2802) that passes through a wireless multipath channel and is received by each RX antenna (block 2804). The transmission can expose information that represents channel attenuation and phase shifts for each transmission (e.g., CSI). The CSI of the transmissions is then parsed (block 2806), at least a portions of the STO/SFO/CFO of the CSIs is removed (block 2808), and K-means clustering is performed on the CSIs (block 2810) (e.g., in a similar fashion as described above with reference to FIG. 27).

Following the K-means clustering (block 2810), each CSI from the localization phase is correlated with the CSIs from the training phase (block 2812) (e.g., which are stored in the database). The maximum value among the correlations between the various CSIs is identified (block 2814). Correlating each localization phase CSI with each training phase CSI in an interative fashion results in the formation of a confusion matrix. As mentioned above, the steps associated with blocks 2802-2814 are performed for each TX/RX antenna pair of the computers 2610, 2620, and a confusion matrix is formulated for each pair. For each transmitter antenna, the "transmit data" 2802 step is performed once and the steps 2804 to 2820 are performed with respect to each receiver antenna that receives the transmitted data. The confusion matrices are fused (e.g., averaged) to form one fused confusion matrix (block 2816). The highest correlation in the fused confusion matrix indicates the estimated current position of one or both of the computers 2610, 2620.

In some implementations, the correlations are represented by values that indicate the degree of correlation. The value may be a focusing gain or a resonating strength, as described in detail above. A threshold may be set such that the highest correlation in the fused confusion matrix needs to be greater than the threshold in order to accurately indicate the estimated position. If the value of the highest correlation in the fused confusion matrix satisfies the threshold (block 2818), accurate location information can be determined, and the localization phase is complete (block 2820). If the value of the highest correlation in the fused confusion matrix does not satisfy the threshold (block 2818), the positioning system generates an output indicating that accurate location information cannot be determined (block 2822).

FIGS. 29-40 show confusion matrices that represent resonating strengths according to various embodiments of the positioning system of FIG. 26. The confusion matrices may be formed according to the methodologies described above with reference to FIGS. 27 and 28.

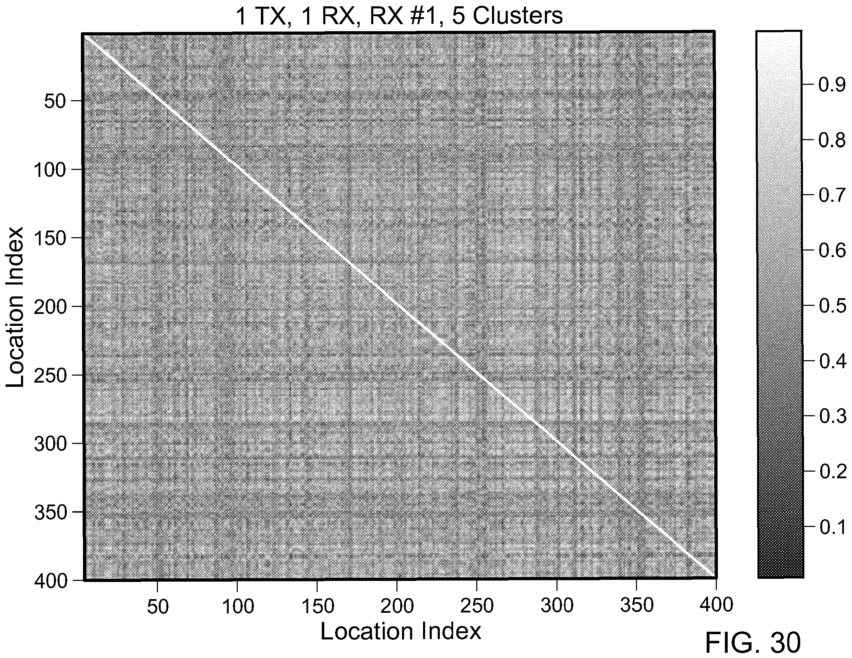

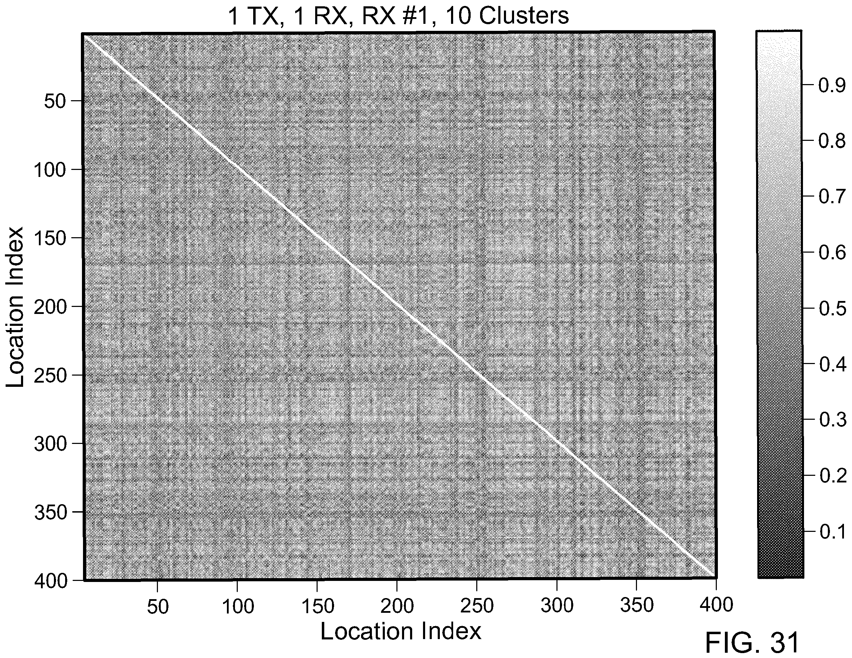

FIGS. 29-31 show confusion matricies for an embodiment of the positioning system of FIG. 26 in which the first computer 2610 has one TX antenna and the second computer 2620 has one RX antenna. FIG. 29 shows a confusion matrix that represents resonating strengths for correlations between locations corresponding to the localization phase CSIs (indicated by an index number on the horizontal axes) and locations corresponding to the training phase CSIs (indicated by an index number on the vertical axes). In this example, the K-means clustering algorithm identified one centroid, thereby resulting in one cluster of data. FIG. 30 shows a confusion matrix in which the K-means clustering algorithm identified five centroids, thereby resulting in five clusters of data. FIG. 31 shows a confusion matrix in which the K-means clustering algorithm identified ten centroids, thereby resulting in ten clusters of data. In the examples shown in FIGS. 29-31, there is no need for a fused confusion matrix because there is only one pair of TX/RX antenna.

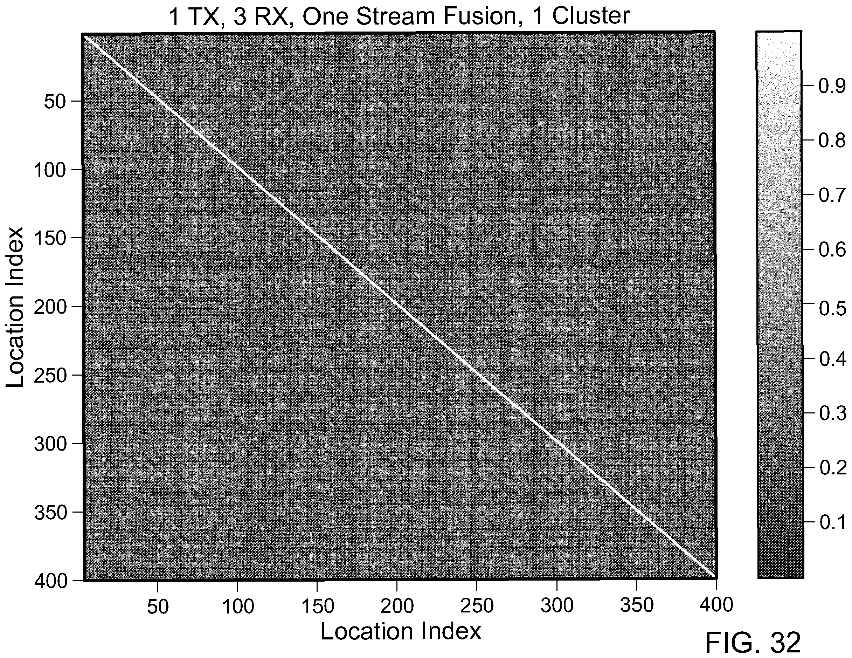

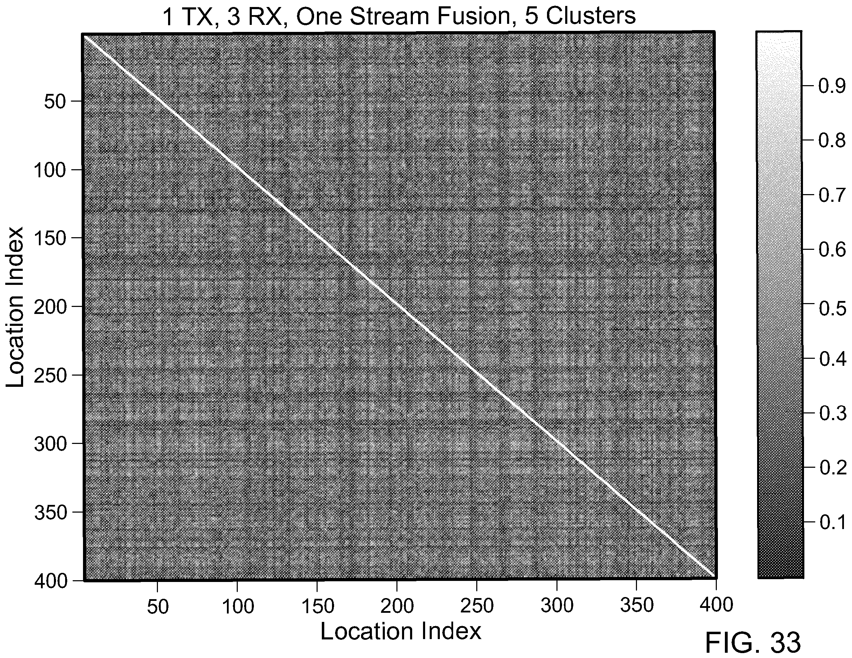

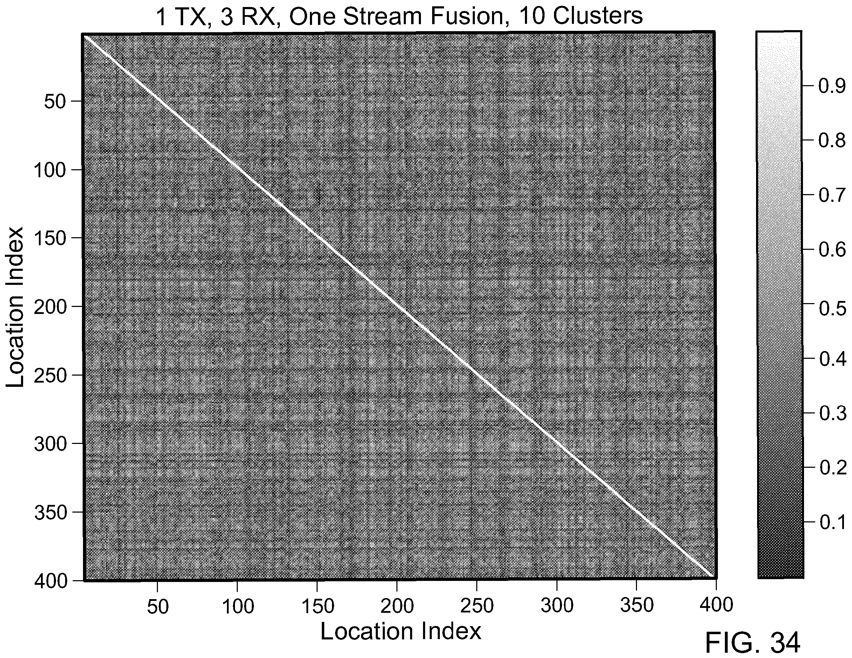

FIGS. 32-34 show fused confusion matrices for an embodiment of the positioning system of FIG. 26 in which the first computer 2610 has one TX antenna and the second computer 2620 has three RX antennas. In this example, the composite bandwidth of the measurement is three times larger than for the data shown in FIGS 29-31. FIGS. 32-34 show fused confusion matrices that represent resonating strengths for correlations between the localization phase CSIs and the training phase CSIs for the three TX/RX antenna pairs at various K-means clusterings. FIG. 32 shows a fused confusion matrix in which the K-means clustering algorithm identified one centroid, thereby resulting in one cluster of data. FIG. 33 shows a fused confusion matrix in which the K-means clustering algorithm identified five centroids, thereby resulting in five clusters of data. FIG. 34 shows a fused confusion matrix in which the K-means clustering algorithm identified ten centroids, thereby resulting in ten clusters of data. In the examples shown in FIGS. 32-34, each of the fused confusion matrices is a fusion of confusion matrices related to each TX/RX antenna pair (e.g., $TX_1/RX_1$; $TX_1/RX_2$; $TX_1/RX_3$) according to the corresponding K-means clustering. Because the CSIs are derived from three different TX/RX antenna pairs, the fused confusion matrices (in FIGS. 32-34) have more information and there is a higher probability that the confusion matrics can be used to accurately identify the location (e.g., as compared to the confusion matrices shown in FIGS. 29-31).

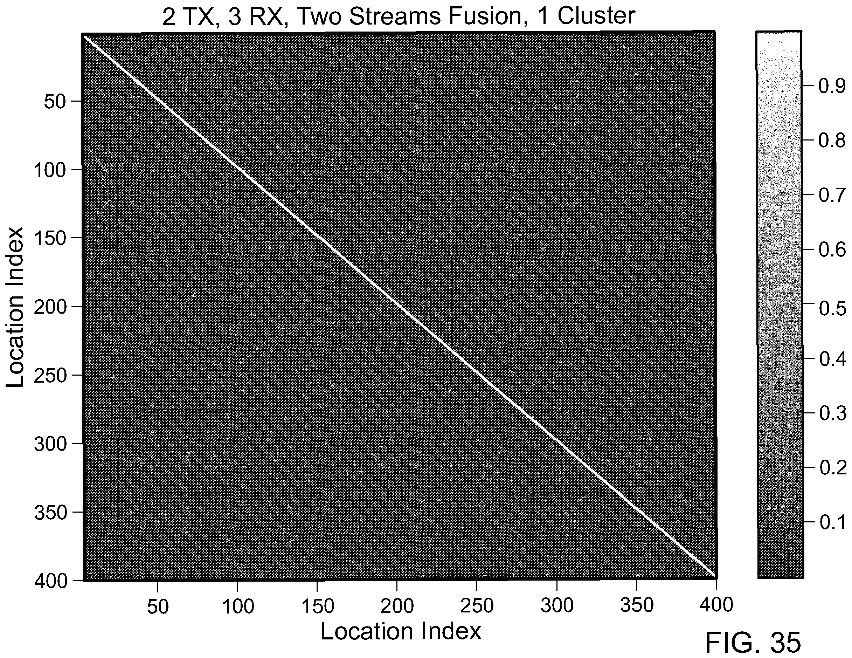

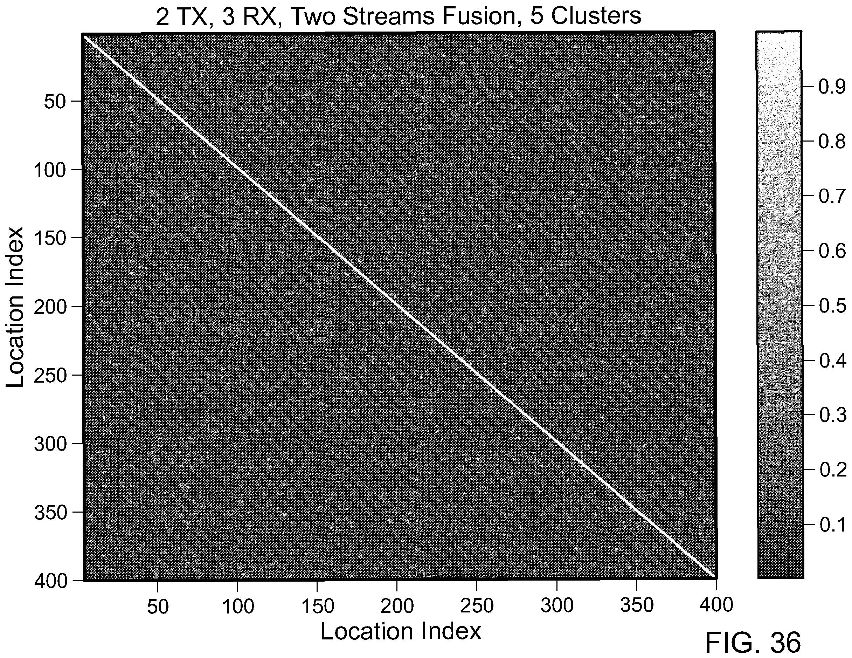

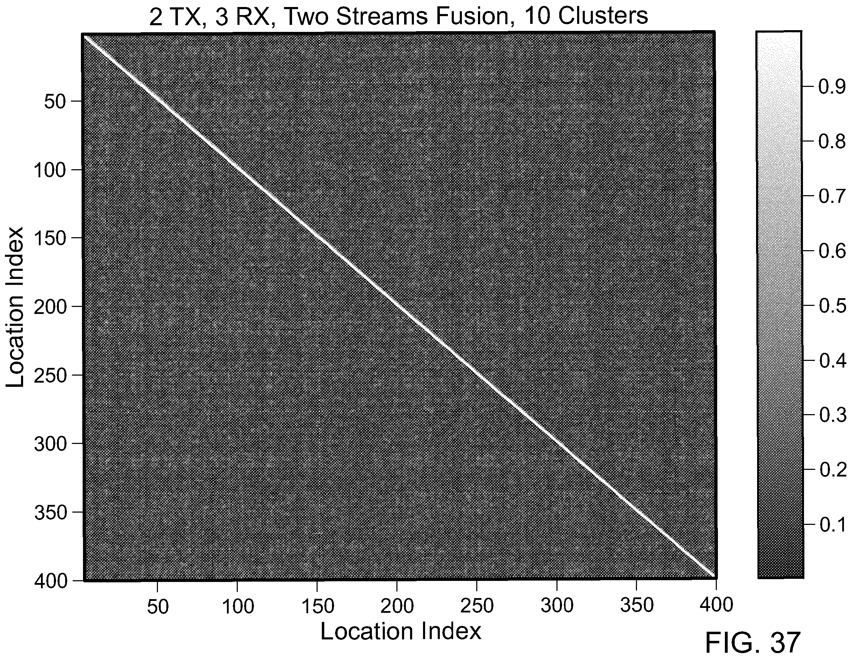

FIGS. 35-37 show fused confusion matricies for an embodiment of the positioning system of FIG. 26 in which the first computer 2610 has two TX antenna and the second computer 2620 has three RX antenna. In this example, the composite bandwidth of the measurement is six times larger than for the data shown in FIGS 29-31, and twice as large as the composite bandwidth in FIGS 32-34. FIGS. 35-37 show fused confusion matrices that represent resonating strengths for correlations between the localization phase CSIs and the training phase CSIs for the six TX/RX antenna pairs at various K-means clusterings. FIG. 35 shows a fused confusion matrix in which the K-means clustering algorithm identified one centroid, thereby resulting in one cluster of data. FIG. 36 shows a fused confusion matrix in which the K-means clustering algorithm identified five centroids, thereby resulting in five clusters of data. FIG. 37 shows a fused confusion matrix in which the K-means clustering algorithm identified ten centroids, thereby resulting in ten clusters of data. In the examples shown in FIGS. 35-37, each of the fused confusion matrices is a fusion of confusion matrices related to each TX/RX antenna pair (e.g., $TX_1/RX_1$; $TX_1/RX_2$; $TX_1/RX_3$; $TX_2/RX_1$; $TX_2/RX_2$; $TX_2/RX_3$) according to the corresponding K-means clustering. Because the CSIs are derived from six different TX/RX antenna pairs, the fused confusion matrices (in FIGS. 35-37) include more information and there is a higher probability that the confusion matrics can be used to accurately identify the location (e.g., as compared to the confusion matrices shown in FIGS. 29-31 and FIGS. 32-34).

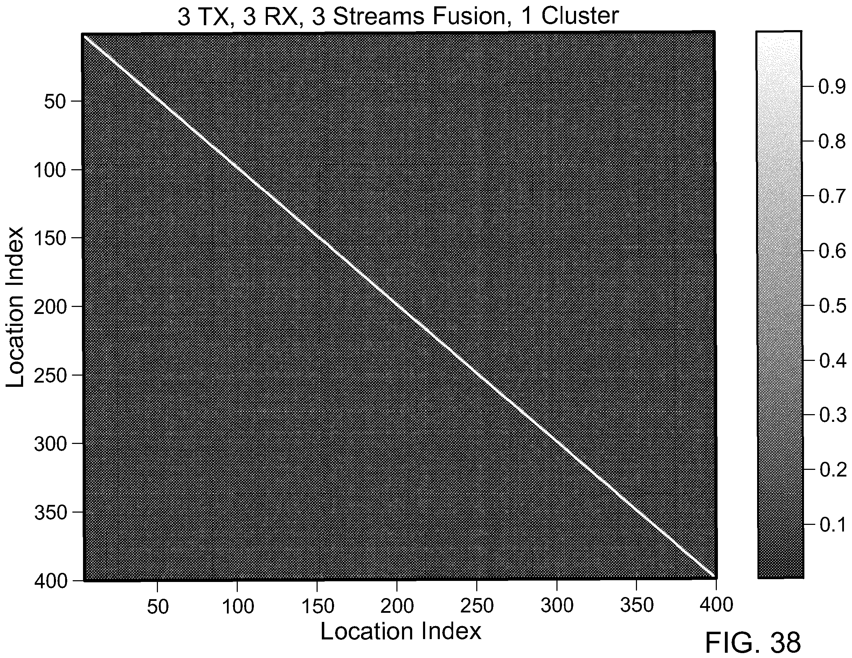

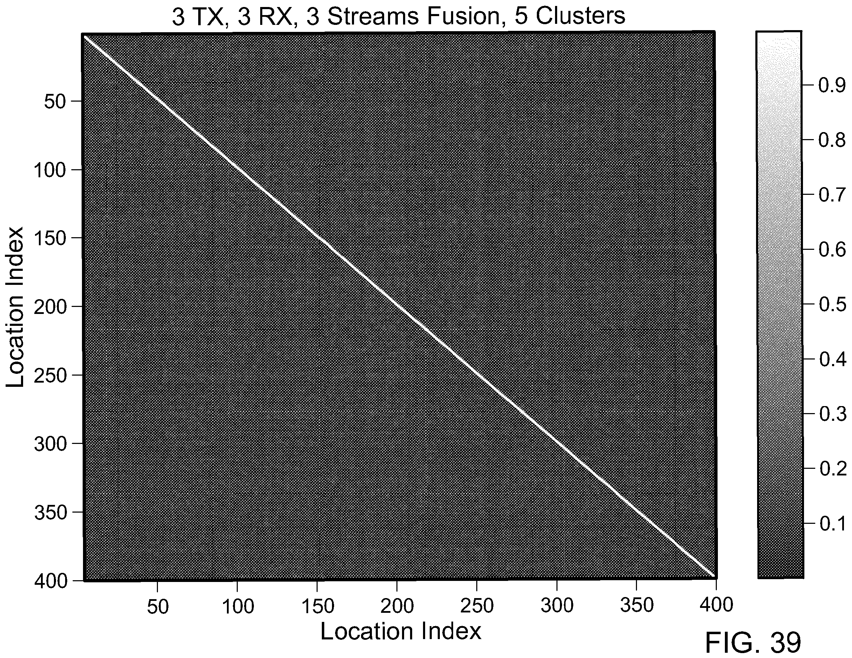

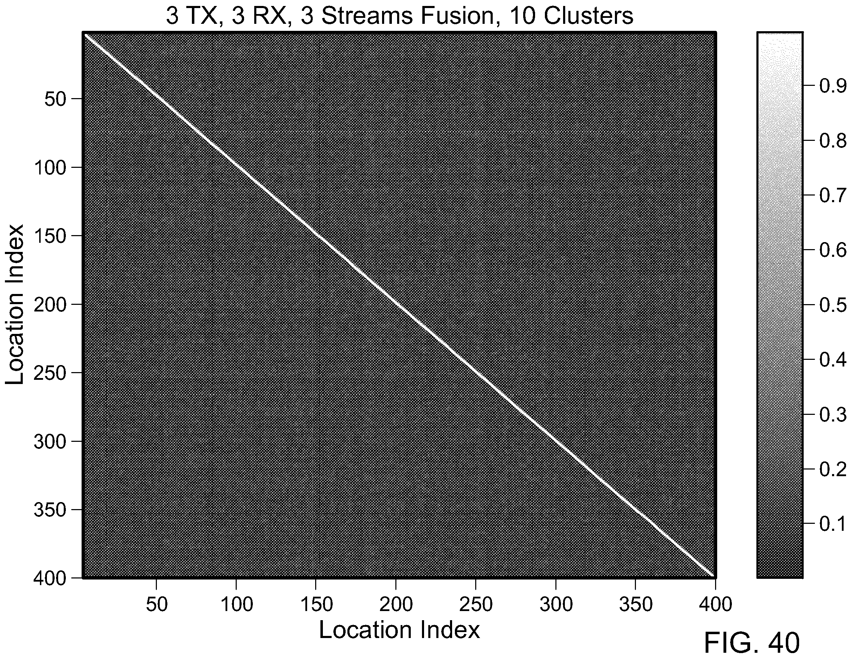

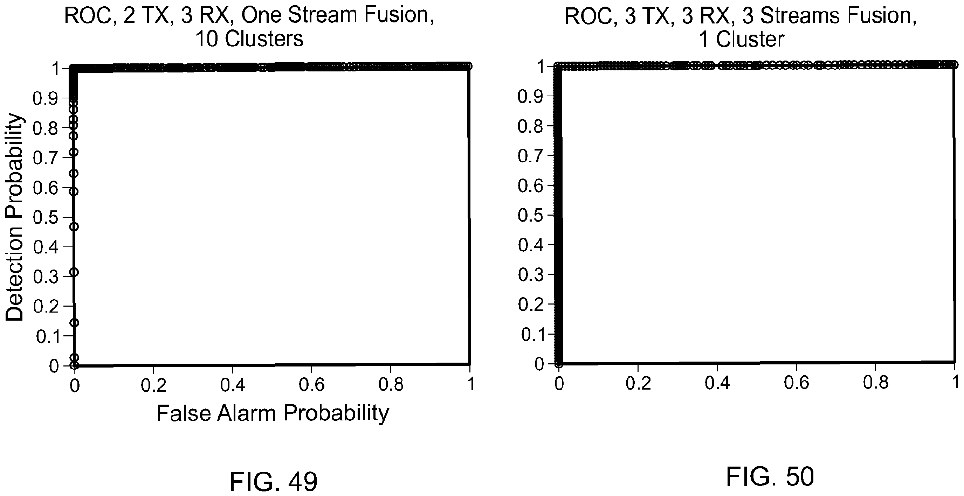

FIGS. 38-40 show fused confusion matricies for an embodiment of the positioning system of FIG. 26 in which the first computer 2610 has three TX antenna and the second computer 2620 has three RX antenna. In this example, the composite bandwidth of the measurement is nine times larger than for the data shown in FIGS 29-31, three times as large as the composite bandwidth in FIGS 32-34 and 50% larger than the composite bandwidth in FIGS 35-37. FIGS. 38-40 show fused confusion matrices that represent resonating strengths for correlations between the localization phase CSIs and the training phase CSIs for the nine TX/RX antenna pairs at various K-means clusterings. FIG. 38 shows a fused confusion matrix in which the K-means clustering algorithm identified one centroid, thereby resulting in one cluster of data. FIG. 39 shows a fused confusion matrix in which the K-means clustering algorithm identified five centroids, thereby resulting in five clusters of data. FIG. 40 shows a fused confusion matrix in which the K-means clustering algorithm identified ten centroids, thereby resulting in ten clusters of data. In the examples shown in FIGS. 38-40, each of the fused confusion matrices is a fusion of confusion matrices related to each TX/RX antenna pair (e.g., $TX_1/RX_1$; $TX_1/RX_2$; $TX_1/RX_3$; $TX_2/RX_1$; $TX_2/RX_2$; $TX_2/RX_3$; $TX_3/RX_1$; $TX_3/RX_2$; $TX_3/RX_3$) according to the corresponding K-means clustering. Because the CSI is derived from nine different TX/RX antenna pairs, the fused confusion matrices (in FIGS. 38-40) contain more information and there is a higher probability that the confusion matrics can be used to accurately identify the location (e.g., as compared to the confusion matrices shown in FIGS. 29-31, FIGS. 32-34, and FIGS. 35-37).

In some implementations, one or both of (i) the number of TX/RX antenna pairs and (ii) the number of centroids/clusters identified by the K-means clustering algorithm can impact the performance of the positioning system of FIG. 26. For example, in general, the larger the number of TX/RX pairs and centroids/clusters, the higher the probability that the positioning system can accurately identify the location. Similarly, in some examples, the larger the number of TX/RX pairs and/or centroids/clusters, the more precise the identified location can be.

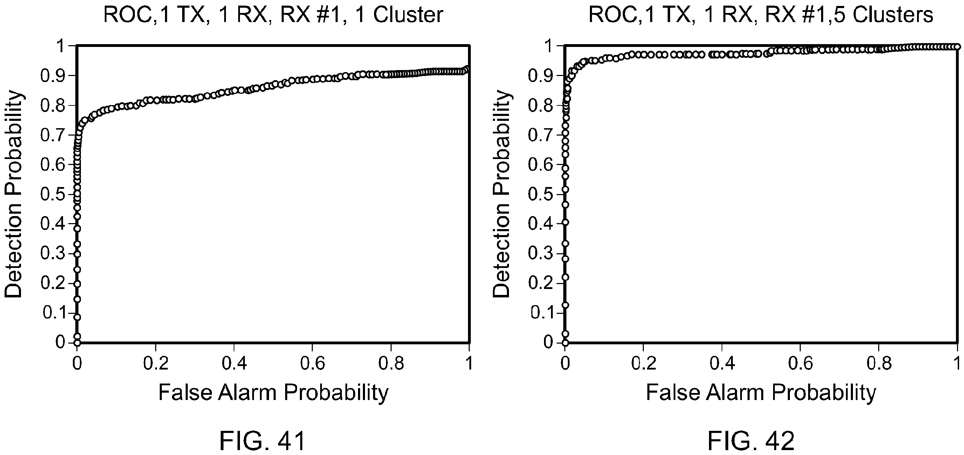

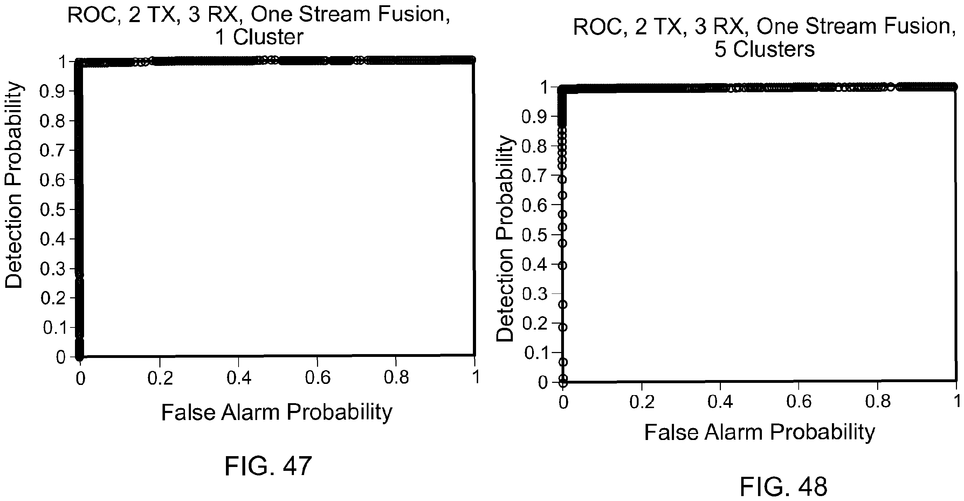

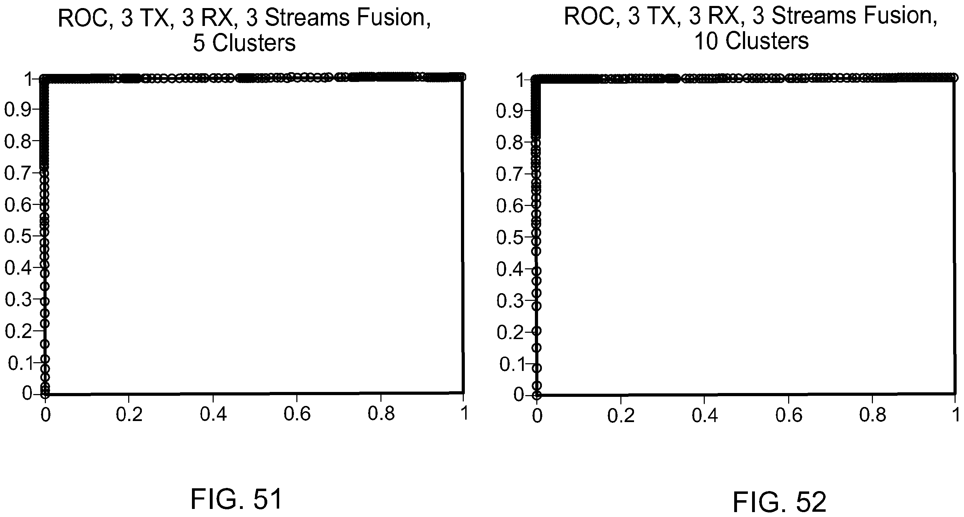

FIGS. 41-52 show receiver operating characteristic (ROC) curves that illustrate the performance of the positioning system of FIG. 26 according to the various embodiments described above with respect to FIGS. 29-40. For example, FIG. 41 shows an ROC curve for the embodiment in which the first computer 2610 has one TX antenna, the second computer 2620 has one RX antenna, and the K-means clustering algorithm identified one centroid and cluster (which corresponds to FIG. 29); FIG. 42 shows an ROC curve for the embodiment with one TX antenna, one RX antenna, and five centroids/clusters (which corresponds to FIG. 30); and so on.

The ROC curves of FIGS. 41-52 illustrate the performance of the positioning system as its discrimination threshold is varied. That is, the ROC curves plot the detection probability against the false positive probability. The detection probability is the probability that the correlation at the intended location is identified. For example, in cases in which the correlation is represented by a value, the detection probability is the probability that the value of the correlation i) is higher than values of correlations at locations other than the indended location, and ii) satisfies a threshold value (e.g., block 2822 of FIG. 28). The false alarm probability is the probability of false positives, in which a false positive is the occurrence of a correlation higher at another location than the intended one and the correlation exceeds the threshold. In other words, the false alarm probability is the probability that the target is falsely identified as being positioned at a known location when it is actually positioned at an unknown location.

If the value of the correlation satisfies the threshold value, a location is identified. Thus, the detection probability is inversely related to the threshold value; the lower the threshold value, the higher the probability that the target is correctly identified as being positioned at a known location when it is at the known location. However, the false alarm probability is also inversely related to the threshold value; the lower the threshold value, the higher the probability that the target is falsely identified as being positioned at a known location when it is actually positioned at an unknown location.

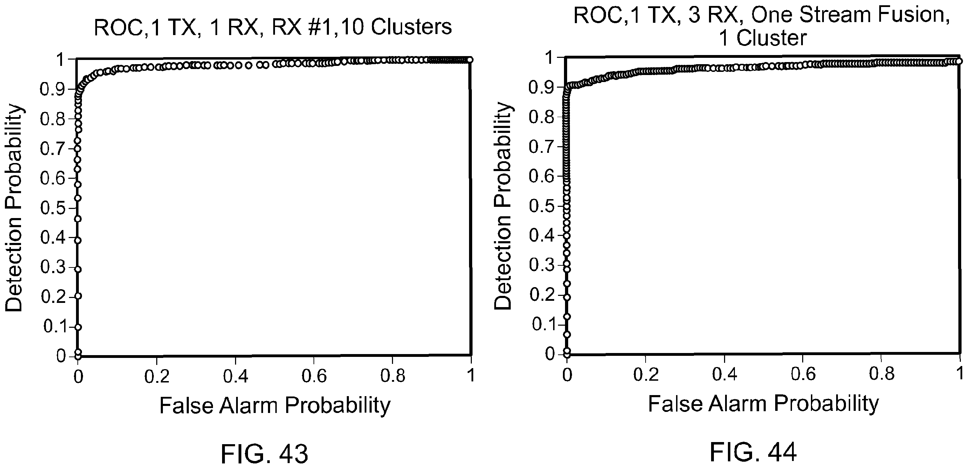

Referring to FIG. 41, the implementation of the positioning system that includes one TX antenna, one RX antenna, and one centroid/cluster does not perform as well (e.g., generally has a smaller detection probability and a higher false alarm probability) as the implementation of FIG. 42, in which the positioning system includes one TX antenna, one RX antenna, and five centroids/clusters. The implementation of FIG. 43, in which the positioning system includes one TX antenna, one RX antenna, and ten centroids/clusters performs even better than the previous two. Thus, as the number of centroids/clusters identified by the K-means clustering algorithm increases, the performance of the positioning system can improve.

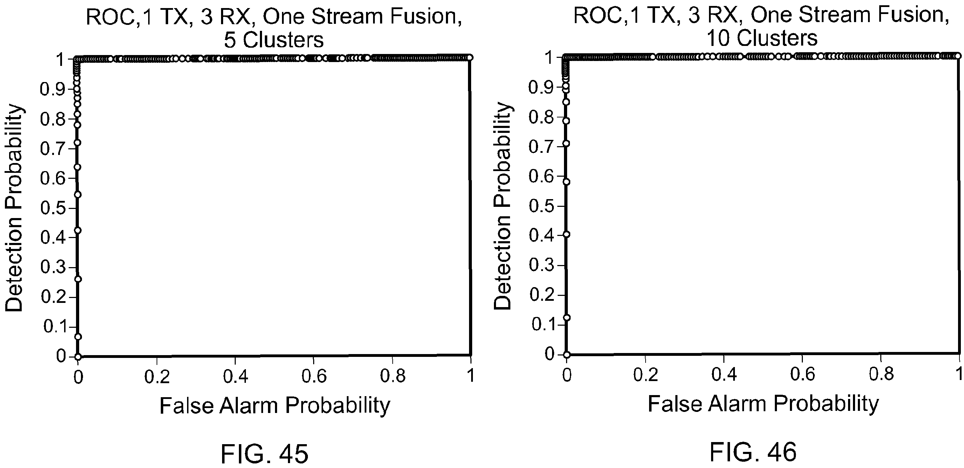

Similarly, the performance of the positioning system can also improve as the number of TX and/or RX antennas increases. For example, referring to FIG. 44, the implementation that includes one TX antenna, three RX antennas, and one centroids/clusters can have approximately 90% detection probability with approximately 0% false alarm probability. However, referring to FIG. 45, if five centroids/clusters are used instead one, the detection probability rises to approximately 100% with approximately 0% false alarm probability. FIGS. 46-52 illustrate ROC curves according to the embodiments of the positioning system described above with respect to FIGS. 34-40 that represent similar, and in some cases even better performance characteristics than those of FIG. 45.

Stored and/or Generated Channel Responses

In embodiments, a database of reference channel responses and/or reference time-reversed channel responses may be established. An exemplary database may include reference channel responses for a venue in multiple configurations. For example, a database may include channel responses for the venue with and without people, with doors/windows/objects oriented in certain positions and/or poses, and the like. In exemplary embodiments, a database may include venue information such as floorplans, 3-dimensional "floorplans" (3D floorplans), location of the venue within a larger venue, street address, GPS coordinates, and location information derived from other indoor positioning systems such as those based on received signal strength measurements/predictions, time-of-flight measurements/predictions, angle-of-arrival measurements/predictions, differential time-of-flight and/or angle-of-arrival measurements/predictions, electromagnetic field measurements/predictions, stray signature measurements/predictions, position-dependent signature measurements/predictions, motion sensors, pressure sensors, Bluetooth sensors, Near-Field Communication (NFC) sensors, thermal sensors, light sensors, RF sensors, and the like.

In embodiments, a database may include reference channel responses for multiple venues. For example, indoor position information may be obtained by devices at various locations, and the devices may send measured and/or predicted reference channel responses along with the indoor position information to a database and the database (or, e.g., multiple coordinated databases) may store this information. In embodiments, a database may receive and store information when venues are calibrated and/or precalibrated. Such calibration or pre-calibration may be performed when locators are installed and may be performed using any and all of the calibration techniques discussed above.

In embodiments, a database may receive information when floorplans and/or 3-D floorplans of a venue are available and calculations are performed to estimate reference channel responses in the venue. In embodiments, a database of reference channel responses and/or reference time-reversed channel responses may be stored at one or more locations in a network and may be accessible to multiple users and/or indoor positioning systems located throughout the world. In embodiments, a database may store reference channel responses that have been processed in anticipation of being used in a classification and/or data pattern matching scheme. For example, classification schemes can include similarity or matching or correlation of waveforms, virtual time reversal processing techniques, pattern recognition and/or matching techniques, linear and/or nonlinear support vector machines and/or support vector networks techniques, machine learning techniques, data mining techniques, statistical classification techniques, tagging techniques, and/or kernel tricks and the like.

In embodiments, indoor positioning systems may transmit received waveforms and/or channel responses and/or time-reversed channel responses and/or time-reversal resonating strengths and/or classification techniques and/or data and/or results to an information repository over wired and/or wireless network resources. In embodiments, the information repository may include databases that can be accessed by at least two locators.

Additional Embodiments

As briefly mentioned above, a time-reversed version of the estimated channel response may be used for communication in addition to positioning applications. FIG. 1C shows a view of operational principles of an exemplary time-reversal communication system. Before a first transceiver 158 transmits information to a second transceiver 156, the second transceiver 156 first sends a probe signal 152 to the first transceiver 158 through a multipath channel 160. These actions may be referred to as the channel probing phase. The probe signal 152, after propagating through the channel 160, may become a waveform 154 that is received at the first transceiver 158. The transceiver 158 time-reverses (and conjugates if the signal is complex) the received waveform 154, and uses a time-reversed version 164 of the waveform 154 to transmit information back to the second transceiver 156. These actions may be referred to as the time-reversal transmission phase.

In an exemplary time-reversal (TR) communication system, when channel reciprocity and stationarity are fairly well maintained, an emitted time-reversal signal 164 may retrace the incoming paths and form a constructive sum of signals at the intended location (i.e., the location of the second transceiver 156), resulting in a peak 162 in the signal-power distribution over the space, which is referred to as the spatial focusing effect. Because time-reversal may use the multipaths as a matched filter, the transmitted signal may be focused in the time domain as well, which is referred to as the temporal focusing effect. Moreover, by using the environment as matched filters, the transceiver design complexity (e.g., of the first transceiver 158 and the second transceiver 156) can be significantly reduced.

Both real time-reversal communication and positioning systems may differ from "idealized" systems in a number of ways. For example, in embodiments, the number of multipath signals that can be captured at a device may be a subset of the total number of multipaths generated by the environment. In embodiments, a first device may detect, digitize (or sample) and process a portion of a transmitted signal that travels directly along a line-of-sight between a first device and a second device. In embodiments, a first device may detect, digitize (or sample) and process one or more multipath signals that arrive at the device within a time delay of the direct, line-of-sight signal. Such a time delay may be referred to as a time delay window or a channel length. In embodiments, the time delay window may be variable and may be controlled by hardware and/or software in a device. In embodiments, a first device may detect, sample and process one or more multipath signals with particular amplitudes. In embodiments, the particular amplitude may be an amplitude above a threshold amplitude and the threshold amplitude may be fixed or may be variable. In embodiments, the particular amplitude may be controlled by hardware and/or software in a device. In exemplary systems, different devices my collect different numbers of multipath signals and may have different settings for the time delay window or channel length and/or the amplitude threshold.

In embodiments, analog-to-digital converters (ADCs) and digital-to-analog converters (DACs) may be used in interfaces between analog and digital circuitry. In embodiments, the ADCs and/or DACs may utilize up to two (2) bits of resolution, up to four (4) bits of resolution, up to six (6) bits of resolution, up to eight (8) bits of resolution, up to ten (10) bits of resolution, up to twelve (12) bits of resolution or more bits of resolution. In embodiments, the ADCs and/or DACs may adaptively adjust the number of bits of resolution that are being used to digitize a signal. In exemplary embodiments, an ADC or DAC in a device may utilize 4 bits of resolution under normal operating conditions but may increase the number of bits of resolution to improve the temporal and/or spatial focusing effect of the system. In some exemplary embodiments, an ADC or DAC in a device may utilize 8 bits of resolution under normal operating conditions but may decrease the number of bits of resolution to reduce the power utilization of the device. The number of bits of resolution of either or both of ADCs and DACs may be an adjustable parameter in a wireless transmitter and/or receiver. The number of bits of resolution of either or both of ADCs and DACs may be adjusted by a feedback loop and/or under software control. The number of bits of resolution may be a user settable parameter and may be accessed and/or set using a user interface and/or and application running on a device of a wireless positioning and/or communication system. In some embodiments, the number of bits of resolution may be based on one or more characteristics of a particular environment of the wireless positioning and/or communication system.

In embodiments, wide bandwidth systems may benefit from analog-to-digital converters (ADCs) and digital-to-analog converters (DACs) with relatively high sampling rates. For example, a wireless positioning and/or communication system with a 125 MHz receiver bandwidth might use ADCs and DACs with sampling rates higher than 250 MHz. In some implementations, a wideband indoor positioning system may use customized radio transmitters and receivers and ADCs and DACs with quoted sampling rates of 500 MHz. In some implementations, broader band operation of systems may use ADCs and DACs with GHz sampling rates.

In exemplary embodiments, devices may have single input antennas or receivers and/or single output antennas or transmitters. In embodiments, devices may have multiple input antennas or receivers and/or multiple output antennas or transmitters. In this disclosure, it should be understood that first and second devices may include single or multiple input and/or output antennas and/or single or multiple receivers and/or transmitters. In some implementations, different antennas, transmitters, receivers, and/or transceivers may be designed to operate at similar carrier frequencies or in similar regions of the electromagnetic spectrum, or they may be designed to operate at different carrier frequencies or in different regions of the electromagnetic spectrum. Antennas, transmitters, receivers, and/or transceivers may have different bandwidths and may comprise different hardware components, circuits, processors, software, firmware and the like.

In some embodiments (e.g., with multiple antennas, transmitters, receivers, and/or transceivers), the multiple antennas, transmitters, receivers, and/or transceivers may operate completely independently of each other or they may operate in conjunction with each other. In embodiments, a subset of antennas, transmitters, receivers, and/or transceivers in a device may operate independently of others or in conjunction with others. In some embodiments, the multiple antennas, transmitters, receivers, and/or transceivers may share one or more hardware components and/or software code. In some embodiments, the multiple antennas, transmitters, receivers, and/or transceivers may operate simultaneously, independently or in a synchronized manner. For example, one or more of the antennas, transmitter, receivers, and/or transceivers may utilize frequency hopping techniques, and the frequency hopping may be coordinated amongst the various antennas, transmitters, receivers, and/or transceivers.

In this disclosure, the use of the term device and/or terminal device may mean a device with single or multiple transmitters and/or with single or multiple receivers and/or with single or multiple antennas. The term receiver may mean a single receiver or multiple receivers and/or a single antenna or multiple antennas. The term transmitter may mean a single transmitter or multiple transmitters and/or a single antenna or multiple antennas. The term transceiver may mean a single transceiver or multiple transceivers and/or a single antenna or multiple antennas. In some examples, a device may be any of a transmitter, a receiver, and a transceiver (a combination of a transmitter and a receiver).

In embodiments, it is envisioned that wireless networks using the disclosed technology may comprise at least one device, and such networks may comprise two devices, three devices, or more. In some embodiments, devices may be identified as transmitters or receivers, but it should be understood that the devices could also be transceivers, radios, software radios, handsets, mobile devices, computers, routers, modems, and the like. Devices may be fully bi-directional or they may be configured to have more functionality as transmitters or as receivers or to support different data rates, protocols, power levels and the like in the transmit and receive modes. Multiple access points may communicate back and forth with each other, and multiple terminal devices may communicate back and forth with each other. In some embodiments, an access point may be a fixed module that allows wireless devices to be connected to a network (e.g., a wired network, another wireless network, etc.). Access points may support a wide variety of networking protocols and/or transmission protocols and may include or may be connected to additional computing engines and/or devices to achieve enhanced performance. Access points may be routers, modems, transmitters, repeaters, and the like, and may be the signal source to support hot spots, local area networks, cells, microcells, nanocells, picocells, femtocells, and the like. Access points may support multiple wireless transmission standards, formats and protocols including, but not limited to time-reversal protocols, WiFi, 802.11xx, Bluetooth, Bluetooth LE, Zigbee, Near Field Communications (NFC), infrared communications, orthogonal frequency division multiple access (OFDMA), code division multiple access (CDMA), and the like.

In some implementations, probe signals may be wirelessly transmitted using either omnidirectional or directional antennas, and the probe signal can produce a multipath channel response signal at a locator and/or receiver. In some implementations, placing reflectors (e.g., such as the scattering element 302 of FIG. 3) around an antenna to purposely reflect or scatter a signal in many directions or in a preferred direction may increase the number of propagation paths and may improve signal quality in the wireless systems described herein.

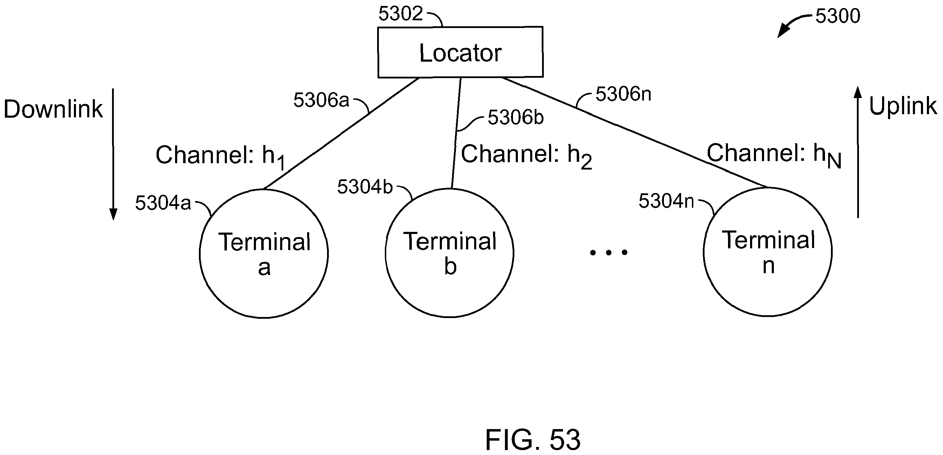

In some implementations, multiple devices can communicate simultaneously with a locator or access point or base station. In exemplary embodiments, a single locator may be used to determine the position of more than one device. For example, FIG. 53 shows an exemplary multi-user positioning system 5300 that includes a locator 5302 and multiple terminal devices (e.g., 5302a, 5302b, 5302n, collectively 5304). Each of the terminal devices 5304 is associated with a multipath wireless channel (e.g., 5306a, 5306b, 5306n, collectively 5306) between itself and the locator 5302. Each multipath wireless channel 5306 represents two or more multiple signal propagation paths between the corresponding terminal device 5304 and the locator 5302. In some implementations, all the devices (including the locator 5302 and the terminal devices 5304) can operate at the same frequency band, and the system 5300 can operate in multipath environments. For the downlink to the terminal devices 5304, the locator 5302 can send multiple messages (either independent or non-independent) simultaneously to multiple selected terminals 5304. In some examples, the locator 5302 can transmit data to the terminal devices 5304a, 5304b, 5304n, and can also determine the positions of the terminal devices 5304a, 5304b, and 5304n.

In some implementations, the terminal device 5304 can be a movable device, such as a mobile phone, a camera, a laptop computer, a tablet computer, a wearable computing device, a pair of eyeglasses, a helmet, a pair of goggles, a car, a personal transportation device, a robot, a robotic arm, an unmanned aerial vehicle, a radio, an audio player, a health monitor, a speaker, a pair of headphones, an appliance, a security system, a piece of art, an object, a piece of luggage, a weapon, an identification device, an object tracker, a name tag, a clothing tag, a merchandise tag, a packaging box, a card, a credit card, a pen, a stylus, a watch, a bracelet, a necklace, a thing on the Internet of Things (IoT), a cart, a thermostat, a monitoring device, a sensor, a computer peripheral, and the like. In some implementations, the terminal device 5304 can be a module that is attached to a device, e.g., such as one or more of the movable devices described above. For example, the terminal device 5304 can be a dongle attached to a movable electronic device.

When a terminal device (e.g., one of the terminal devices 5304) experiences a change in orientation (e.g., such that the antenna points to different directions), the multiple paths propagated by the probe signals may be different. Thus, even if the terminal device 5304 is at the same or a very similar location, a change in orientation of the terminal device 5304 may cause the locator 5302 to calculate different channel impulse responses based on the received probe waveforms. If the terminal device 5304 is intended to be held at multiple orientations (e.g., users may hold mobile phones at various orientations), then during the training phase, the terminal device 5304 may be held at various orientations, and the locator 5302 may determine channel impulse responses that correspond to the various orientations. The coordinates of each position may map to a set of channel impulse responses corresponding to different orientations of the terminal device at the position.

Different models of terminal devices may have different types of antennas that may have different antenna patterns and/or signal lobes. In some implementations, the positioning system 5300 may be designed to support multiple types of terminal devices (e.g., several models of mobile phones and tablet computers from several manufacturers). In some implementations, during the training phase, various types of terminal devices may be placed at each position so that the locator 5302 can determine the channel impulse response for each type of terminal device. In this way, for each position in a venue, a database (e.g., a database that stores location information, such as database 692 in FIG. 6) can include information on the channel impulse responses associated with the various types of terminal devices.

In some implementations, when using a terminal device 5304 to perform position determination, the terminal device 5304 may perform a handshaking process with the locator 5302 to allow the locator 5302 to obtain channel information and timing information. The terminal device 5304 may also send information about the particular type (e.g., make and model) of the terminal device 5304 to the locator 5302. During the matching process, the locator 5302 may compare the measured channel impulse response with pre-stored channel impulse responses associated with the particular type of terminal device to find a match.

In some implementations, one or more persons may occupy a venue in which the positioning system 5300 is used. Due to movements of the people, the channel impulse response associated with a particular position may vary over time. Thus, during the training phase, for each position, the channel impulse responses may be measured at various time periods of the day to account for such differences, and the multiple channel impulse responses may be stored in the database.

In some implementations, the locator 5302 can be part of a mobile or stationary device. For example, the locator 5302 can be implemented as part of a sensor module, a controller, a mobile phone, a laptop computer, a desktop computer, a modem, a router, an access point, a base station, or an electronic appliance that communicates wirelessly with multiple other devices.

In some implementations, the locator 5302 and terminal devices 5304 can include one or more processors and one or more computer-readable mediums (e.g., RAM, ROM, SDRAM, hard disk, optical disk, and flash memory). The one or more processors can perform various calculations described above. The calculations can also be implemented using application-specific integrated circuits (ASICs). The term "computer-readable medium" refers to a medium that participates in providing instructions to a processor for execution, including without limitation, non-volatile media (e.g., optical or magnetic disks), and volatile media (e.g., memory) and transmission media. Transmission media includes, without limitation, coaxial cables, copper wire, fiber optics and free space.

The features described above can be implemented advantageously in one or more computer programs that are executable on a programmable system including at least one programmable processor coupled to receive data and instructions from, and to transmit data and instructions to, a data storage system, at least one input device, and at least one output device. A computer program is a set of instructions that can be used, directly or indirectly, in a computer to perform a certain activity or bring about a certain result. A computer program can be written in any form of programming language (e.g., C, Java), including compiled or interpreted languages, and it can be deployed in any form, including as a stand-alone program or as a module, component, subroutine, a browser-based web application, or other unit suitable for use in a computing environment.

Suitable processors for the execution of a program of instructions include, e.g., both general and special purpose microprocessors, digital signal processors, and the sole processor or one of multiple processors or cores, of any kind of computer. Generally, a processor will receive instructions and data from a read-only memory or a random access memory or both. The essential elements of a computer are a processor for executing instructions and one or more memories for storing instructions and data. Generally, a computer will also include, or be operatively coupled to communicate with, one or more mass storage devices for storing data files; such devices include magnetic disks, such as internal hard disks and removable disks; magneto-optical disks; and optical disks. Storage devices suitable for tangibly embodying computer program instructions and data include all forms of non-volatile memory, including by way of example semiconductor memory devices, such as EPROM, EEPROM, and flash memory devices; magnetic disks such as internal hard disks and removable disks; magneto-optical disks; and CD-ROM and DVD-ROM disks. The processor and the memory can be supplemented by, or incorporated in, ASICs (application-specific integrated circuits).

While this specification contains many specific implementation details, these should not be construed as limitations on the scope of any inventions or of what may be claimed, but rather as descriptions of features specific to particular embodiments of particular inventions. Certain features that are described in this specification in the context of separate embodiments can also be implemented in combination in a single embodiment. Conversely, various features that are described in the context of a single embodiment can also be implemented in multiple embodiments separately or in any suitable subcombination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the embodiments described above should not be understood as requiring such separation in all embodiments, and it should be understood that the described program components and systems can generally be integrated together in a single software product or packaged into multiple software products.

Thus, particular embodiments of the subject matter have been described. In some cases, the actions recited in the claims can be performed in a different order and still achieve desirable results. In addition, the processes depicted in the accompanying figures do not necessarily require the particular order shown, or sequential order, to achieve desirable results. In certain implementations, multitasking and parallel processing may be advantageous.

For example, the devices that communicate with the locator or base station can be different from those shown in the figures and exemplary embodiments. Also, the time-reversal positioning system 600 can operate at a radio frequency in a range between 0.1 GHz to 100 GHz. That is, when the terminal device 654 sends the probe signal, the carrier frequency of the probe signal can be in a range between 0.1 GHz to 100 GHz. For example, the bandwidth of the probe signal can be equal to or greater than 20 MHz.

The time-reversal positioning systems described herein (e.g., the time-reversal positioning system 600 of FIG. 6) can be used in combination with other positioning systems, such as those based on Wi-Fi, Bluetooth, and/or cellular signals. For example, a mobile phone may determine a coarse position within a venue based on Wi-Fi and/or Bluetooth and/or cellular signals with an accuracy of several meters and then use the time-reversal positioning system to determine a fine position with an accuracy of a few centimeters or millimeters. When a coarse position is available, a time-reversal classifier (e.g., the time-reversal classifier 690) can access a database (e.g., the database 692) and retrieve pre-stored information associated with the coarse position and positions in the vicinity of the coarse position, thereby significantly reducing the number of convolution operations that need to be performed.

In some implementations, the terminal devices described herein (e.g., the terminal device 654) may be used such that the height of the terminal device is more likely to be within certain ranges. By using known information about the likely position of the terminal device in the z-direction, it may be possible to reduce the amount of computation required at the locator (e.g., the locator 682) in order to provide a location estimate to the terminal device. For example, in order to determine the position of a terminal device within a room with 10 cm accuracy, a database can be established that includes channel impulse responses for all possible locations where the terminal device may be located. The locations can be represented by grid points spaced 10 cm apart. Assuming that the terminal device can be held by the user at a height from slightly above ground to 6 feet above ground, the database can have about 18 or more data points in the z-direction for each (x, y) coordinate in the room. If the terminal device is typically held within a certain range of heights, the time-reversal classifier can first compare the received channel impulse response with pre-stored channel impulse responses that correspond to grid points in the vicinity of the likely range of heights. This initial comparison may reduce the amount of time needed to determine the location of the terminal device.

For example, suppose the terminal device is a smart watch, and the user accesses an indoor positioning application to determine his or her location in a shopping mall. The watch may include multi-axis accelerometers and other motion sensors that allow the operating system of the watch to determine whether the user is standing or sitting or lying down. When the user is standing and raises the hand to view the screen on the watch, the watch may be typically held within a certain range of heights. Different users may hold the watch at different heights, but for a given user, the watch may be typically held within a certain range of heights in order for the user to be able to view the watch screen comfortably. The watch may store information about such a height range, either from past measurements performed by the indoor positioning application, or from a different application. The indoor positioning application may have a configuration menu that allows the user to input values representing the customary range of heights for various activities, such as standing and sitting.

When the watch sends the probe signal to the locator, the watch can also send information regarding a likely range of heights. For example, the watch may send information to the locator indicating that the watch is likely at a height within a range of, e.g., 110 cm to 130 cm. The locator may then compare the received channel impulse response signal with pre-stored channel impulse response signals in the database that correspond to the height range of 110 cm to 130 cm. If a strong correlation is found between the received channel impulse response signal and a pre-stored channel impulse response signal associated with a height within the height range of 110cm to 130cm, the locator may send the coordinates associated with the pre-stored channel impulse response signal to the watch as a preliminary location estimation. The locator may continue to compare the received channel impulse response signal with pre-stored channel impulse response signals in the database that correspond to the height range outside of 110 cm to 130 cm to confirm the accuracy of the preliminary location estimation.

In this way, instead of searching the database for locations that have a relatively large variation of heights (e.g., heights from 10 cm to 180 cm, which correspond to 18 grid points in the z direction in this example), the locator may be able to provide preliminary location information to the watch by searching for locations varying in height from 110 cm to 130 cm (e.g., which correspond to 3 grid points in the z direction), potentially reducing the response time by half or more, resulting in a better user experience.

In some implementations, multiple locators can be used. Each locator can determine the coordinates of the position of the terminal device. The multiple locators can send the coordinates to the terminal device, and the terminal device can determine the final coordinates of the position based on the coordinates provided by the multiple locators (e.g., by averaging the coordinates).

In some implementations, during the training phase, a robot can carry the terminal device to each of the multiple positions, and the probe signal may be transmitted to the base station from each position. In some examples, the terminal device can be part of the robot, the robot can move to each of the multiple positions, and the probe signal can be transmitted from the robot to the base station from each position.

In some implementations, during the training phase, an unmanned aerial vehicle can carry the terminal device to each of the multiple positions, and the probe signal may be transmitted to the base station from each position. In some examples, the terminal device can be part of the unmanned aerial vehicle, the unmanned aerial vehicle can move to each of the multiple positions, and the probe signal can be transmitted from the unmanned aerial vehicle to the base station from each position.

In some implementations, during the training phase, an automatic guided vehicle can carry the terminal device to each of the multiple positions, and the probe signal may be transmitted to the base station from each position. In some examples, the terminal device can be part of the automatic guided vehicle, the automatic guided vehicle can move to each of the multiple positions, and the probe signal can be transmitted from the automatic guided vehicle to the base station from each position.

In some implementations, a terminal device can determine its position based on pre-stored channel responses downloaded from a server. In some implementations, the pre-stored channel responses can be downloaded from the locator. In some examples, the terminal device may download the entire database D of channel responses of, e.g., a shopping mall, convention center, or airport terminal from a server to facilitate navigation within the indoor venue. In some examples, the terminal device may download a portion of the database D covering locations in the vicinity of the terminal device (e.g., to reduce the download file size). The terminal device can determine a coarse position based on, e.g., Wi-Fi, Bluetooth, or cellular signals, and send data about the coarse position to the server. The terminal device may then download, from the server, information about channel responses associated with positions at or near the coarse position. The terminal device can receive a channel probing signal from a beacon and estimate a channel response based on the received channel probing waveform. The terminal device can determine a time-reversed signal based on the estimated channel response, and determine a fine position of the terminal device based on the time-reversed signal and the downloaded channel responses. One of the advantages of such an approach is that only the terminal device knows its own precise location, while the server may only know that the terminal device is within the geographical region covered by the downloaded database. This may be useful in preserving privacy of the user.

In some implementations, the locator may broadcast a combined signal that is a combination of multiple downlink signals, in which each downlink signal has coordinate data associated with a particular position, and the downlink signal has a waveform configured to focus at the particular position. The locator may perform a handshake process with a terminal device to provide channel response information and timing information useful for the terminal device to determine the timing of the broadcast of the combined signal. The handshaking process may occur periodically so that up-to-date information is maintained. The terminal device may determine its location based on the coordinate data broadcast by the locator. The locator may broadcast coordinate data to a subset of locations in a room at a time, and broadcast coordinate data to different subsets of locations in the room at different times, such that coordinate data are broadcast to every intended location in the room over a period of time. One of the advantages of such an approach is that the locator may not need to determine the location of the terminal device, and only the terminal device may know its own precise location. This may be useful in preserving privacy of the user.

In some examples, each subset of locations may cover a small region in the room, in which different locations within the subset may be close to each other. Each subsequent broadcast from the locator may cover a different region in the room. Similar to scanning a spotlight across different regions of the floor of a room, the locator may broadcast the coordinates to various locations within a small region at a time, and scan the region across the three-dimensional room such that after a period of time, the coordinate data have been broadcast to all grid points in the room. For example, in a 10 m by 10 m by 3 m room with 10 cm spacing between grid points, the base station may broadcast coordinate data to 10 x 10 x 10=1000 locations in a 90 cm by 90 cm region at a time, in which the distance between adjacent targeted locations is 10 cm. Subsequently, the locator may broadcast coordinate data to an adjacent 90 cm by 90 cm region, and so forth. In this example, broadcasting coordinate data to all 100 x 100 x 30 grid points may require about 10 x 10 x 3=300 broadcasts.

In some examples, each subset of locations may cover a large region in the room, in which different locations within the subset are spaced farther apart from each other (e.g., as compared to the previous example). Each subsequent broadcast from the base station may also cover a large region that is shifted slightly in a certain direction (e.g., in the x-, y-, or z-direction). The locator may broadcast the coordinates to various locations within a large region at a time and shift the region slightly in each subsequent broadcast such that the coordinate data are broadcast to all grid points in the room. For example, in a 10 m by 10 m by 3 m room, with 10 cm spacing between grid points, the base station may broadcast coordinate data to 10 x 10 x 3=300 locations in a 9 m by 9 m by 2 m region at a time, in which the distance between adjacent targeted locations in the 9 m by 9 m by 2 m region is about 1 m. Subsequently, the locator may broadcast coordinate data to another 9 m by 9 m by 2 m region, shifted from the previous region by 10 cm, and so forth, first shifting in the x-direction, then shifting in the y-direction, then shifting in the z-direction. After about 10 x 10 x 10 =1000 broadcasts, the coordinate data have been broadcast to all 100 x 100 x 30 grid points in the room.

In some implementations, he locator may be used in connection with motion sensors in the venue such that the locator starts to broadcast the coordinate data upon detection of movement in the room (e.g., people moving in the room). There may be several motion sensors in the venue, each covering a portion of the venue, and when one or more particular motion sensors are activated, the locator broadcasts coordinate data only to the regions associated with the activated motion sensors. Such techniques may prevent unnecessary broadcasts by the locator.

In some implementations, during the training phase, the terminal device does not necessarily have to be placed at grid points of an array. For example, the terminal device can be placed at random positions, and the database can store the coordinates of those positions and their associated channel responses. The information in the database can be sorted according to the coordinates to facilitate faster retrieval.

Additional examples of positioning systems based on time-reversal technology are described in the article "A Time-Reversal Paradigm for Indoor Positioning System," which is part of U.S. patent application 62/025,795. The article also provides experimental results of a positioning system based on time-reversal technology. The positioning technology discussed in this document can be implemented in devices used in various time-reversal communication systems, such as those described in the articles "Time-Reversal Massive MIMO: Utilizing Multipaths as Virtual Antennas," "Time-Reversal with Limited Signature Precision: Tradeoff Between Complexity and Performance," and "Joint Waveform Design and Interference Pre-Cancellation for Time-Reversal Systems," which are also included in U.S. patent application 62/025,795. The positioning technology discussed in this document can also be implemented in devices used in various time-reversal communication systems described in U.S. patent application 13/706,342, titled "Waveform Design for Time-Reversal Systems," filed on December 5, 2012, U.S. patent application 13/969,271, published as US 2015/0049745 titled "Time-Reversal Wireless Systems Having Asymmetric Architecture," filed on August 16, 2013, PCT patent application PCT/US2014/051148, titled "Time-Reversal Wireless Systems Having Asymmetric Architecture," filed on August 14, 2014, U.S. patent application 13/969,320, published as US 2015/0049792 titled "Multiuser Time-Reversal Division Multiple Access Uplink System With Parallel Interference Cancellation," field on August 16, 2013, U.S. patent application 14/262,153, published as US 2015/0312081 titled "Quadrature Amplitude Modulation For Time Reversal Systems," filed on April 25, 2014, U.S. patent application 14/202,651, published as US 20150/257167 titled "Time-Reversal Wireless Paradigm For Internet of Things," filed on March 10, 2014.

Event Recognition Systems

As mentioned above, in addition to determining the position of an object, the positioning schemes described herein may be used to determine changes in an environment, to recognize gestures, and to monitor a venue for events that may be tracked, stored and/or used to trigger other actions, calculations, communications, alarms, and the like.

An exemplary change in an environment may be the opening or closing of a door. In embodiments, multiple channel responses (e.g., estimated channel responses) may be measured under different environmental conditions. For example, a device that includes a transmitter and a receiver may be positioned in a venue. A first channel response for the venue may be determined when a door in the vicinity is open. For example, while the door is open, the transmitter may emit a wireless signal that propagates through a wireless channel and arrives at the receiver (e.g., as a multipath wireless signal). The received wireless signal may be processed to yield the first channel response. A second channel response for the venue may also be determined when the door in the vicinity is closed. For example, while the door is closed, the transmitter may emit a wireless signal that propagates through a wireless channel and arrives at the receiver (e.g., as a multipath wireless signal). The received wireless signal may be processed to yield the second channel response. At some later point in time, a third channel response may be determined using the same technique to determine whether the door is open or closed. The third channel response can be compared to the first and second channel responses (and, e.g., one or more other previously obtained channel responses) to determine whether the third channel response is sufficiently similar to one of the other channel responses. For example, if the third channel response is sufficiently similar to the first channel response, it may be determined that the door is open. In contrast, if the third channel response is sufficiently similar to the second channel response, it may be determined that the door is closed. If the third channel response is sufficiently similar to some other channel response, it may be determined that an environmental condition associated with the other channel response was present when the third channel response was obtained. In embodiments, an object may be considered to be in the vicinity if a change in that object's position, orientation, pose, presence, state, and the like changes a channel response associated with the venue or vicinity.

In embodiments, there may be more than one door in the vicinity, and the system may be calibrated to determine other positions for any of the various doors. For example, the database of channel responses may include entries associated with a door being opened halfway and/or for a door forming an angle of 10 degrees, 20 degrees, 30 degrees, and the like with the door frame. In addition to doors, the database may include channels responses for windows being up or down or partially open, shades being up or down or positioned somewhere in between, drawers being opened or closed or positioned somewhere in between. In embodiments, the doors that are monitored may be room doors, closet doors, cabinet doors, garage doors, and the like.

In embodiments, an object (e.g., a macroscopic object) in an arrangement of objects can be monitored by such positioning systems. For example, a movement within and/or removal of objects from a venue may be detected by the positioning system. In some embodiments, such objects may comprise a pinger and/or a device capable of sending a channel probe signal to a locator. Changes in the channel response may be detected when the object is moved. In some embodiments, a device remote from the object may be capable of sending a channel probe signal. Changes in a channel response between the object (which, e.g., includes a pinger) and the device may be detected, and the change in the channel response may be associated with the movement of an object. In embodiments, a channel response database may include previously measured channel responses of the venue with and without certain objects and/or combinations of objects. A particular change in the channel response may indicate a certain object has been moved or removed, or that a certain combination of objects may be moved or removed.

In embodiments, venues such as museums, homes, offices, public buildings and the like, may use positioning systems to monitor the position and/or presence of pieces of art and/or other valuable items within the venue. Stores and or warehouses may use a positioning system to monitor the positions of inventory. The position and/or movement of a person within a space may be monitored to keep the person safe, to determine if a person has left a certain area, and the like. In embodiments, a positioning system may include additional capabilities to send alerts and/or to activate alarms when certain movements of objects and/or people are determined. In this way, such positioning systems can be useful for security applications.

In embodiments, a positioning system may be part of a security system. For example, upon determining that a door has been opened, a positioning system may initiate an action such as sounding an alarm, sending a communication to a user, sending a communication to a security company, sending a communication to a law enforcement agency, and the like. In embodiments, the positioning system may comprise alarms and or communication equipment for initiating such actions.

In some implementations, the degree of similarity between channel responses (e.g., estimated channel responses) can be determined using the time-reversal resonating strength techniques described above. For example, just as a high resonating strength between a newly determined estimated channel response and an estimated channel response stored in a database may be used to determine the location of a device, changes in the resonating strength between two estimated channel responses may be used to determine that something has changed in the environment. For example, referring to the three channel responses of the door example above, if the time-reversal resonating strength of the first channel response and the third channel response is higher than that of the second channel response and the third channel response, the system may determine that the door is open.

Changes in the environment are sometimes referred to as events. A time-reversal positioning system can be used to detect such events. Examples of events that can be detected include, but are not limited to, detecting that a door and/or window has opened or closed, a person has entered a room, a person is carrying something metal into a room, a person with a gun has just walked through the airport lobby, window shades are up, window shades are down, a car has left the garage, a retail item has left a store, a piece of inventory has been moved from its normal position in the warehouse, and the like. A positioning system (e.g., an event recognition system) may indicate the movement of objects and may be able to identify the objects themselves. For example, the system may be configured to determine whether a person is carrying a cell phone or a firearm.

Gesture Recognition Systems

In addition to event recognition, positioning systems may also be able to recognize gestures. Gestures that can be detected may include, e.g., a person raising a hand, swiping his or her arms, kicking a foot, and bending over. In embodiments, gesture recognition may include recognizing that a person has fallen or has not moved in a certain amount of time. In some implementations, such gesture recognition may be incorporated into a home surveillance system. In embodiments, such systems may be used in hospitals, rehabilitation, skilled nursing environments, and assisted living environments. In embodiments, such systems may be installed to monitor elderly people and/or people with limited mobility or special needs who desire to live independently, but who may be fragile or at risk. In embodiments, emergency response personal may be contacted and/or notified by the recognition system or by an alert system coupled to the recognition system if a person falls or does not move for a certain period of time. Such gesture recognition systems may be applied to gaming systems, indoor surveillance systems, and the like. For the reasons described throughout this disclosure pertaining to multipath propagation, such gesture recognition systems do not necessarily require a line of sight with users in order to recognize gestures that are being made. For example, a person may lift an arm in one room and a locator in another room may associate this gesture with the user's desire to increase the volume on a stereo system (which, e.g., may be in yet another room).

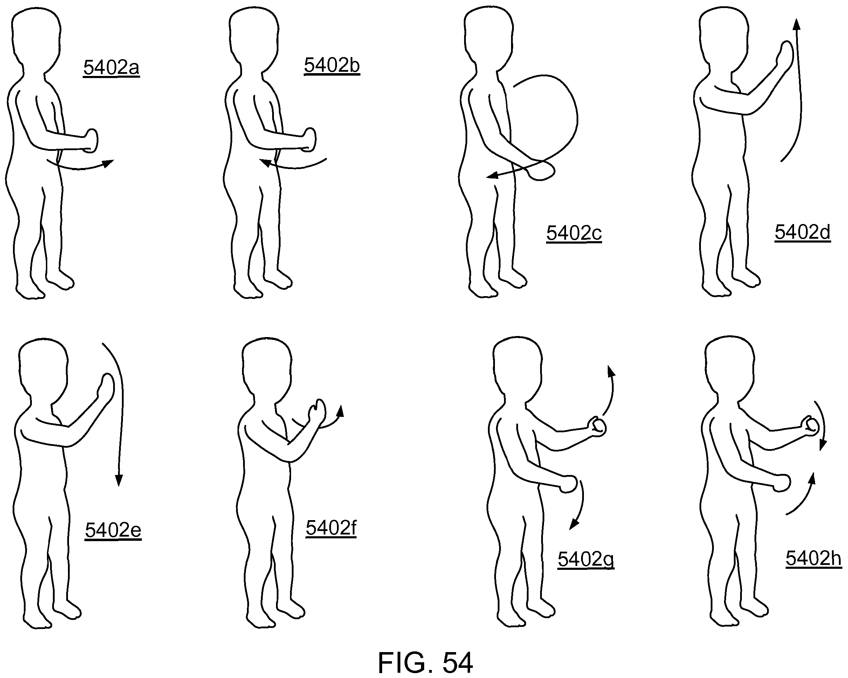

FIG. 54 shows example gestures 5402a-h that may be recognized using a positioning system (e.g., a gesture recognition system). Using the systems described herein, changes in the estimated channel response between a terminal device and a locator can be detected. Such changes can include the gestures depicted in FIG. 54. By way of example only, the gesture 5402a may cause a screen presented by a display (e.g., a display of a device that is in communication with the positioning system) to swipe to the left. The gesture 5402b may cause the screen to swipe to the right. The gesture 5402c may cause the screen to rotate clockwise. The gesture 5402d may cause the screen to swipe up. The gesture 5402e may cause the screen to swipe down. The gesture 5402f may cause the screen to rotate counterclockwise. The gesture 5402g may cause the screen to zoom out. The gesture 5402h may cause the screen to zoom in. The positioning system can be configured to recognize a number of additional gestures. These additional gestures (as well as the gestures depicted in FIG. 54) can be used to indicate a variety of actions for a variety of devices.

Apart from detecting gestures, in some embodiments, the positioning system can be configured to monitor and/or detect one or more characteristics of a living being (e.g., a person). Some characteristics of a person may result in a unique channel response (e.g., a unique signature). For example, when a person enters a venue that is monitored by a positioning system, the system may detect that something in the venue has changed. By processing received waveforms and/or estimated channel responses and/or estimated time-reversed channel responses, the system may be able to identify not only that a living being has entered the room, but also a characteristic of the living being. For example, the system may be able to identify the particular living being in the room (e.g., whether the living being is a person, a cat, or a dog). In some implementations, the system may be able to identify a particular person based on physical characteristics of the person (e.g., including the person's physical geometry). In embodiments, reference channel responses may be determined that differentiate children from adults, dogs from cats, monkeys from humans, and the like. In embodiments, reference channel responses may be used to identify individual living beings, including individual human beings.

In an exemplary demonstration, the positioning system described above can be used to identify people. In this demonstration, a terminal device and a locator are positioned approximately three meters (3 m) apart from each other in a conference room. The system is calibrated by positioning different people between the locator and the terminal device and recording the channel response for each person. Additional channel responses are collected for individuals facing the locator and then turned 180 degrees to face the terminal device. In addition, channel responses are collected for each person positioned sideways (e.g., turned $\pm$ 90 degrees from the "facing the locator" position). The channel responses for each person in each of these positions was stored in a database. At a later time, when any of the various individuals stood between the locator and the terminal device, the locator was able to measure the received probe waveform from the terminal device, estimate a channel response, and calculate a time-reversal resonating strength between the newly measured channel response and the stored channel responses. If the resonating strength exceeded a threshold, the individual and his/her position relative to the locator associated with the stored channel response that yielded the highest time-reversal resonating strength was identified. In embodiments, the system can accurately identify each individual and determine whether the individual is facing the locator, the terminal device, or is rotated by 90 degrees. In embodiments, the system can distinguish between a person rotated by +90 degrees and -90 degrees relative to the locator or terminal device.

The event recognition systems and the gesture recognition systems described above are examples of positioning systems, and they can utilize the various techniques described herein with respect to positioning systems. For example, in some embodiments, the event recognition system and/or the gesture recognition system can utilize a collective bandwidth B that is greater than 50 MHz. The system can include one or more wireless transmitters that are each at different spatial locations and that are each configured to transmit one or more wireless signals, and one or more wireless receivers that are each at different spatial locations and that are each configured to receive at least one of the one or more wireless signals transmitted from each wireless transmitter. Each of the transmitted wireless signals has a bandwidth and a center frequency. In this example, each of the transmitted wireless signals has a different center frequency. The collective bandwidth B can be defined as follows:

$$B = \sum_{m=1}^{M} \sum_{n=1}^{N_m} \sum_{k=1}^{K} b_{mnk} \qquad \text{(Equ. 17)}$$

where the number of the one or more transmitters is M, the number of the one or more wireless signals for the $m^{th}$ transmitter is $N_m$, the number of the one or more wireless receivers is K, and the bandwidth of the $n^{th}$ wireless signal from the $m^{th}$ transmitter that is received by the $k^{th}$ wireless receiver is $b_{mnk}$. In implementations in which the same transmitter sends multiple wireless signals to the same wireless receiver, the multiple wireless signals may occupy non-overlapping frequency bands.

The positioning system also includes an electronic processor that is coupled to at least the one or more wireless receivers. The processor is configured to compare information derived from the received one or more wireless signals to information (e.g., location information) in a database, determine information about the arrangement of macroscopic objects based on the comparison, and generate an output based on the determined information. In some implementations, the output is a signal that causes another device (e.g., an alarm, a communication device, etc.) to perform an action (e.g., emit an alert, initiate a communication, etc.).

As described in detail above, the information derived from the received one or more wireless signals that is compared to the information in the database spans the collective bandwidth B. In other words, the entirety of the collective bandwidth B is utilized to express the derived information. A variety of techniques can be used that give the system the collective bandwidth B of greater than 50 MHz, including using multiple relatively narrow wireless signals, wireless signals with various center frequencies, wireless signals with various channel bandwidths, wireless signals in various frequency bands, wireless signals transmitted from and/or received from various locations, among others. Irrespective of the particular technique that is utilized by the system to have a collective bandwidth B of greater than 50 MHz, the information derived from the received one or more wireless signals spans the collective bandwidth B. That is, the derived information is derived from one or more received wireless signals that have bandwidths that aggregate to the collective bandwidth B that is greater than 50 MHz.

Unique Location-Specific Signatures

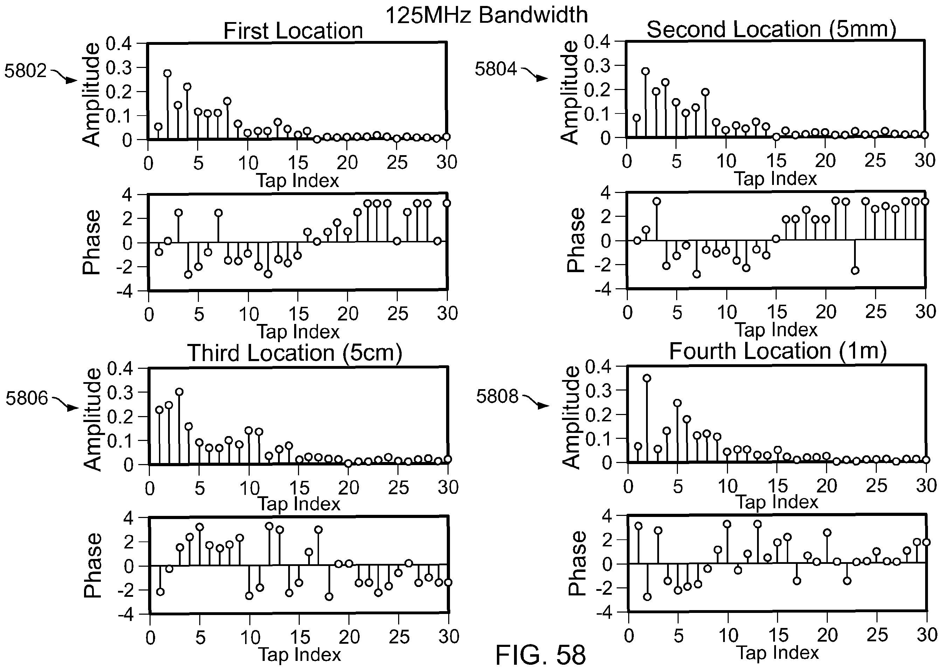

As described above, location-specific signatures (e.g., channel responses, received probe waveforms) may be unique to each location. FIGS. 58-60 show examples of location specific signatures at various locations and various signal bandwidths. For example. FIG. 58 shows location-specific signatures at various locations for a 125 MHz bandwidth signal. A first location-specific signature 5802 that includes amplitude and phase components is for a wireless device positioned at a first location. A second location-specific signature 5804 that includes amplitude and phase components is for a wireless device positioned at a second location that is 5 mm away from the first location. A third location-specific signature 5806 that includes amplitude and phase components is for a wireless device positioned at a third location that is 5 cm away from the first location. A fourth location-specific signature 5808 that includes amplitude and phase components is for a wireless device positioned at a fourth location that is 1 m away from the first location. The first location-specific signature 5802 and the second location-specific signature 5804 are similar, yet have noticeable differences despite having been acquired only 5 mm away from each other. The first location-specific signature 5802 and the fourth location-specific signature 5808 are more-noticeably different given that they were acquired 1 m away from each other.

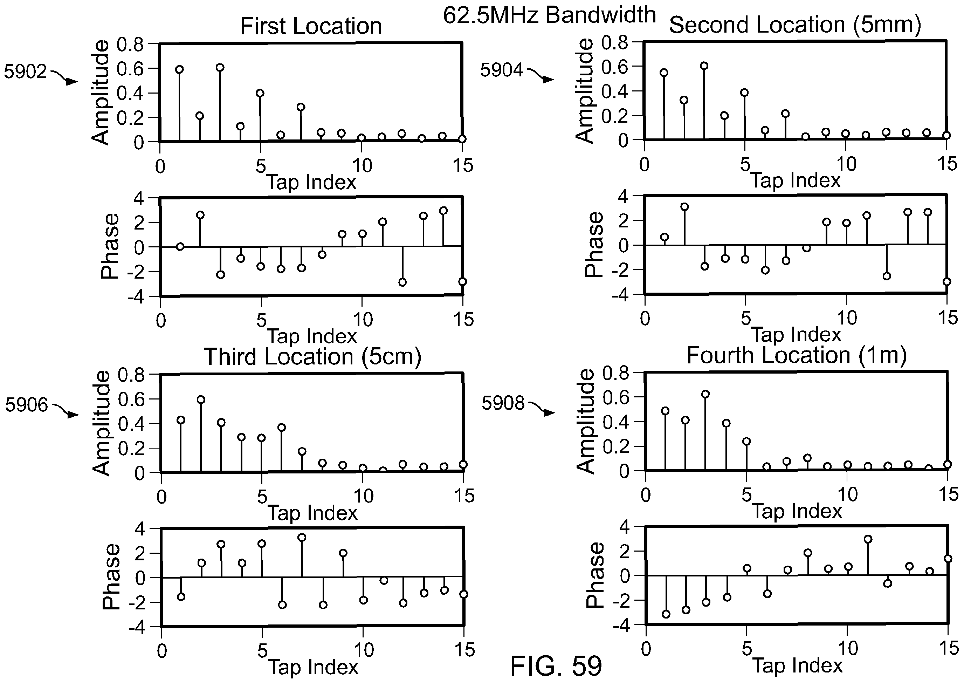

FIG. 59 shows location-specific signatures at various locations for a 62.5 MHz bandwidth signal. A first location-specific signature 5902 that includes amplitude and phase components is for a wireless device positioned at a first location. A second location-specific signature 5904 that includes amplitude and phase components is for a wireless device positioned at a second location that is 5 mm away from the first location. A third location-specific signature 5906 that includes amplitude and phase components is for a wireless device positioned at a third location that is 5 cm away from the first location. A fourth location-specific signature 5908 that includes amplitude and phase components is for a wireless device positioned at a fourth location that is 1 m away from the first location. The first location-specific signature 5902 and the second location-specific signature 5904 are similar, yet have noticeable differences despite having been acquired only 5 mm away from each other. The first location-specific signature 5902 and the fourth location-specific signature 5908 are more-noticeably different given that they were acquired 1m away from each other.

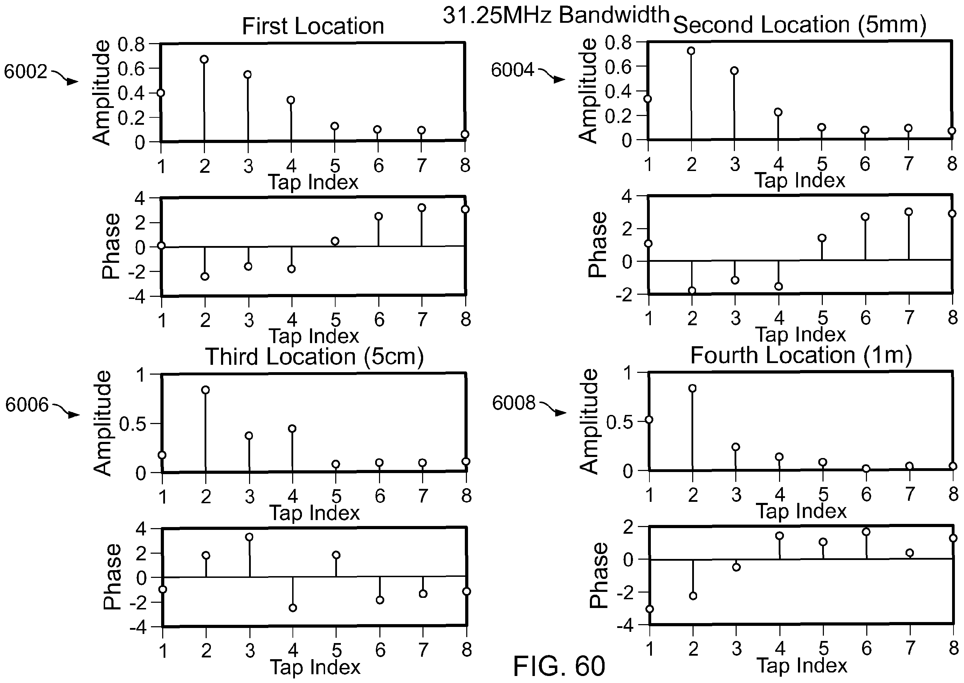

FIG. 60 shows location-specific signatures at various locations for a 31.25 MHz bandwidth signal. A first location-specific signature 6002 that includes amplitude and phase components is for a wireless device positioned at a first location. A second location-specific signature 6004 that includes amplitude and phase components is for a wireless device positioned at a second location that is 5 mm away from the first location. A third location-specific signature 6006 that includes amplitude and phase components is for a wireless device positioned at a third location that is 5 cm away from the first location. A fourth location-specific signature 6008 that includes amplitude and phase components is for a wireless device positioned at a fourth location that is 1 m away from the first location. The first location-specific signature 6002 and the second location-specific signature 6004 are similar, yet have noticeable differences despite having been acquired only 5 mm away from each other. The first location-specific signature 6002 and the fourth location-specific signature 6008 are more-noticeably different given that they were acquired 1 m away from each other.

It can be seen that the resolution of the various location-specific signatures shown in FIGS. 58-60 vary according to the bandwidth of the signal. For example, the resolutions of the signals at 125 MHz is higher than the resolutions of the signals at 62.5 MHz, and even higher than the resolutions of the signals at 31.25 MHz. Thus, the figures represent how the resolution and/or accuracy of the positioning systems described herein can vary based on the bandwidth (among other parameters).

## Handshaking Methods

The following describes two examples of handshaking methods for the channel probing phase. The first method uses pulse position modulation, whereas the second method calculates the correlation of a pseudorandom sequence. Other handshaking methods can also be used in order to obtain channel information.

## Least Square (LS) Based Channel Probing Handshaking

The following describes a least square (LS) based handshaking method for the channel probing phase. In this method, the receiver sends the handshaking signal to the transmitter. The transmitter synchronizes with the received signal and estimates the channel response based on the received signal.

Referring to FIG. 61, in some implementations, a frame of a channel probing signal 6100 transmitted by the receiver includes four consecutive parts: a preamble 6102, a barker code 6104, a payload 6106, and a training sequence 6108. The length of each frame is fixed in this method and known by both the transmitter and the receiver. In some examples, the receiver may send two or more frames of channel probing signals to the transmitter during the channel probing phase to allow the transmitter to obtain more accurate channel and timing information. In some implementations, the accuracy of timing can be improved by increasing the length of the preamble 6102 and Barker code 6104, and the accuracy of channel information can be improved by increasing the length of the training sequence 6108.

In some implementations, the preamble 6102 is modulated using pulse position modulation (PPM). The pulse position modulation symbols '0' and '1' are shown in FIG. 62. The preamble 6102 includes consecutive pulse position modulation symbol '0' s in which $L$ is the length of the multipath channel that is defined by $L = \frac{\tau_s}{\delta_t}$ where $\tau_s$ is the delay spread and $\delta_t$ is the sampling period of the system. In practice, even though the channel length is not exactly known, the transmitter can estimate the channel length based on the typical delay spread of the environment and the sampling rate of the system. In this method, the performance will not be affected if the estimated channel length is longer than the actual channel length. Therefore, the transmitter can overestimate the channel length and set L to be greater than the actual channel length without generating an error.

The barker code 6104 transmitted by the receiver is a code known by both the transmitter and the receiver. The length of the barker code 6104 is $L_b$.

The payload 6106 transmitted by the receiver can be encoded information that is modulated using pulse position modulation. The information may contain the index of the training sequence 6108. The length of the payload 6106 is $L_p$.

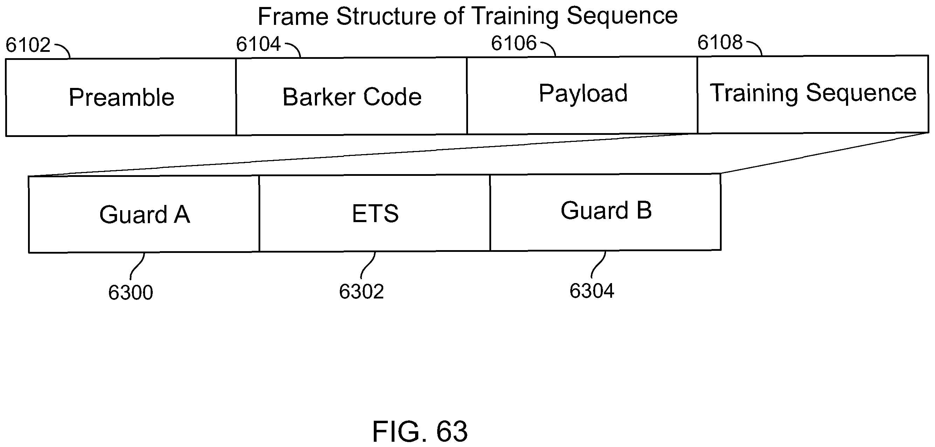

Referring to FIG. 63, the training sequence 6108 has three consecutive parts, including a guard interval A 6300, an effective training sequence (ETS) 6302, and a guard interval B 6304. In some examples, the guard interval A 6300 is a sequence of '0' bits having a length $L_a$, the effective training sequence 6302 is a sequence of '0' and '1' bits having a length $L_e$, and the guard interval B 6304 is a sequence of '0' bits having a length $L_B$ in which $L_B \geq L$.

The channel probing signal transmitted from the receiver passes through the multipath channel and reaches the transmitter. The received signal is a convolution of the channel probing signal and the channel response, contaminated by noise. The transmitter will use the received signal to estimate the channel response.

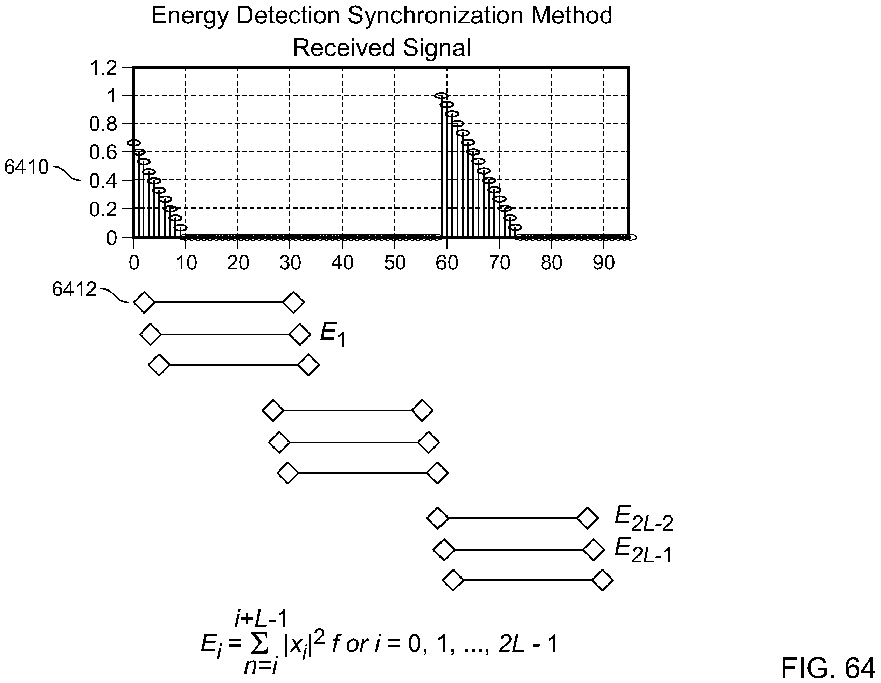

Referring to FIG. 64, upon receiving the channel probing signal, the transmitter determines a synchronization index using sliding window energy detection on the preamble 6102 of the channel probing signal. A graph 6410 shows an example signal received at the transmitter. The sliding window energy detection method uses a moving window 6412 having a window size $L_w = l_p + L$, in which $l_p$ is the length of a PPM symbol. We define $E_l$ as the average energy accumulated by the window starting from the i - th, $(i + L_w)$ - *th,* $(i + 2L_w)$ - *th,⋯,* and $(i + (\gamma - 1)L_w)$ - *th* sample, in which $\gamma$ is the number of averaging windows, $i \in \{0, 1, 2, ⋯, L_w - 1\}$. The synchronization index $i_s$ is the index i that maximizes

the $E_i$, which can be written as follows: $i_s = argmax_i E_i$. Here, the index i corresponds to the i-th sample in the received signal. After the synchronization index $i_s$ is determined, the other indices are determined using the synchronization index $i_s$ as reference.

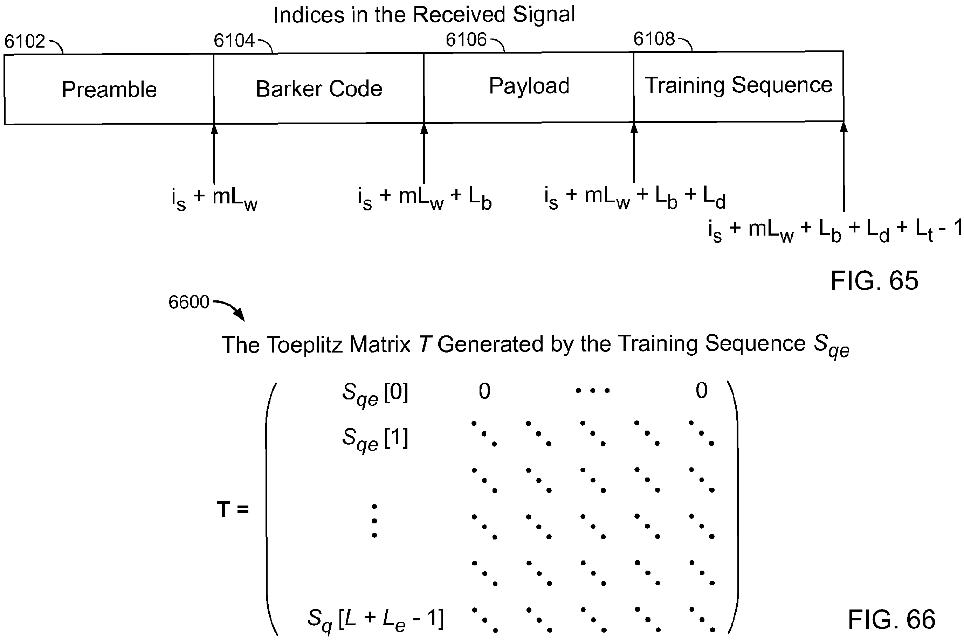

Referring to FIG. 65, after obtaining the synchronization index $i_s$, the transmitter starts to detect the barker code 6104 to confirm the synchronization. The transmitter demodulates a portion of the received signal from the index $i_s + mL_w$ to the index $i_s + mL_w + L_b$ - 1, and compares the demodulated signal portion with a pre-stored barker code sequence, in which $L_b$ is the length of the barker code 6104, $m \in \{0,1,\cdots N\}$ with N being a search range set by the user. In some examples, N is set to be greater than the number of pulse position modulation symbols in the preamble. Once the demodulated signal matches the pre-stored barker code, the transmitter is assured that the receiver is in the channel probing phase, and the payload and the training sequence will follow the barker code in the received signal. Moreover, the transmitter knows that the matching index $i_s + mL_w$ is the position in the received signal where the barker code 6104 begins, and the index $i_s + mL_w + L_b$ - 1 is the position where the barker code 6104 ends. This information enables the transmitter to obtain information for estimating the channel response.

Because the payload 6106 follows the barker code 6104, the transmitter assumes that the payload 6106 begins at the index $i_s + mL_w + L_b$. Because the payload has a fixed length $L_d$, the transmitter demodulates the portion of the received channel probing signal from index $i_s + mL_w + L_b$ to index $i_s + mL_w + L_b + L_d$ - 1, and decodes the demodulated portion to obtain the index q of the training sequence. Here, the index q does not refer to the q-th sample in the received signal. Rather, there is a set of two or more training sequences that is known to both the receiver and the transmitter, and the receiver can choose from any training sequence in the set. The index q indicates which one in the set of training sequences is selected by the receiver.

The transmitter assumes that the training sequence starts at index $i_s + mL_w + L_b + L_d$ of the received signal, and will use the portion of the received signal from index $i_s + mL_w + L_b + L_d$ to index $i_s + mL_w + L_b + L_d + L_t$ - 1 to estimate the channel response, in which $L_t = L_e + L$. Let u denote the fraction of the received signal from index $i_s + mL_w + L_b + L_d$ to index $i_s + mL_w + L_b + L_d + L_t$ - 1. The transmitter converts u to the estimated channel response using a conversion matrix $C_q$ that corresponds to the index q obtained from the payload. This conversion can be written as:

$$\widehat{CR} = C_q u.$$

$$(\text{Equ. } 18)$$

where CR is the estimated channel response.

The conversion matrix $C_q$ can be constructed by the training sequence $s_q$ used by the receiver as follows:

$$C_q = (T'T)^{-1}T'$$

$$(\text{Equ. } 19)$$

where T is the Toeplitz matrix generated by $s_q$, which is the effective training sequence used by the receiver. The first column of the matrix T is $s_{qe} = [s_q; 0]$, in which 0 is the vector composed of L zeros. Referring to FIG. 66, the first row of the Toeplitz matrix T 6600 is composed of all zeros except for the first element taken from $s_{qe}$. The matrix T 6600 has dimensions $c_m \times c_n$ in which $c_m = L_e + L$ and $c_n = L_a + \tau + L$. The parameter $\tau$ is a compensation factor that needs to be greater than the maximum of synchronization mismatch in the previous step, i.e., the difference between the index in the received signal where the training sequence starts and index $i_s + mL_w + L_b + L_d$, which is the beginning of the training sequence 6108 detected by the transmitter.

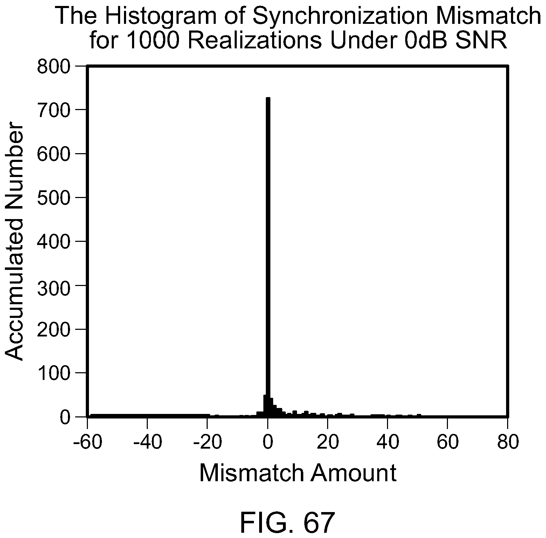

FIG. 67 shows an example synchronization mismatch histogram for 1000 realizations with *SNR* = 0*dB* and channel length *L* = 200. The mismatch amount is small compared with the channel length and can be bounded by some specific value. Since larger $\tau$ takes up more system resource, the value of $\tau$ can be chosen as small as possible that can still bound the synchronization error.

It can be seen from $\widehat{CR} = C_q u$ and the dimension of the conversion matrix $C_q$ that the estimated channel response has a size larger than L, which is the size of the actual channel response. The reason why a longer channel response is estimated is that, due to the synchronization error, the estimated channel response is a shifted version of the real channel response. Estimating a longer channel response ensures that the effective channel response will be included in the estimation such that no significant tap is lost, which is important to the time reversal system that uses the multi-path channel as a matched filter to focus transmitted waveforms at the receiving device.

When the effective training sequence is specifically chosen, the channel response can be estimated more easily without using the conversion matrix $C_q$. For example, if the effective training sequence is a train of impulses separated by $D$ in which $D \geq L$, then

*the channel response can be simply estimated by averaging the windows of size $D$ in the received signal. Let $v_i$ denote the fraction of the received signal from index $i_s + mL_w + L_b + L_d + iD$ to index $i_s + mL_w + L_b + L_d + iD + D - 1$, then the estimated channel response can be written as

$$\widehat{CR} = \sum_{0}^{K} \frac{v_i}{K + 1}$$

(Equ. 20)

where $K = (L_e + L)/D$ is the number of windows. In some examples, if $L_e + L$ is large enough, $K$ is large enough to provide sufficient accuracy for the estimated channel response $\widehat{CR}$.

Correlation Based Channel Probing Handshaking

The following describes a correlation based handshaking method for the channel probing phase. In this method, a single sequence is used for the purpose of both time synchronization and channel response estimation.

The receiver transmits a pseudo random (PN) sequence x to the transmitter through the multipath channel. The sequence x can be, e.g., a train of discrete random variables having probability mass function (pmf) shown in the equation below:

$$X(i) = \begin{cases} 1 & \text{with probality } 0.5 \\ -1 & \text{with probality } 0.5 \end{cases}, i = 1, 2, \dots N$$

(Equ. 21)

The autocorrelation function of the pseudo random sequence x is defined in the following equation:

$$r_x(m) = \sum_{i=0}^{N-1} x(i)x(i + m)$$

(Equ. 22)

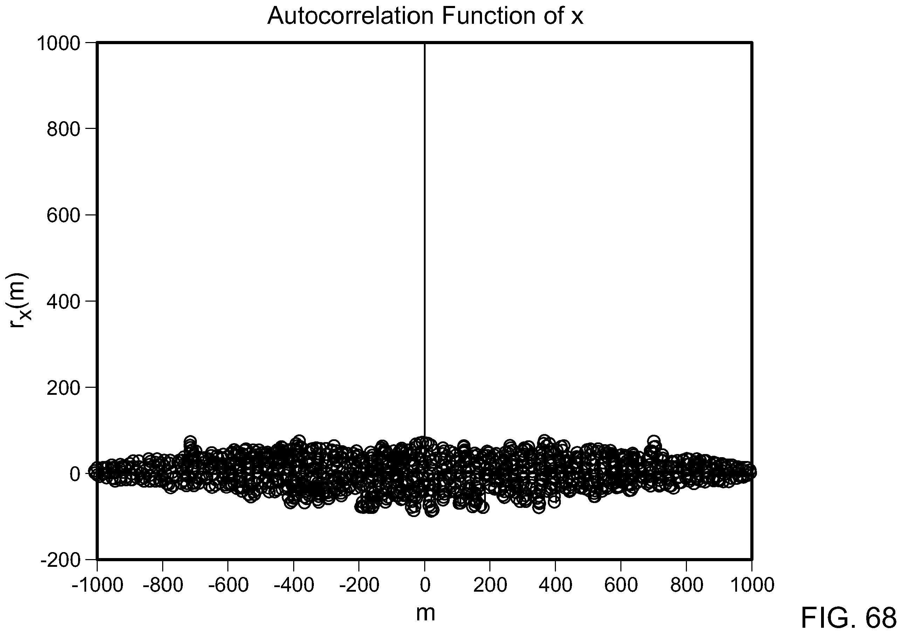

One important feature of a pseudo random code used here is that the autocorrelation function of a long pseudo random code tends to be a delta function. For example, referring to FIG. 68, considering the autocorrelation function of a pseudo random code having a length of 1000, the autocorrelation function has a very high value at m = 0 while being significantly suppressed at other places.

In the following description, several notations are used. L: the length of channel response; N: the length of pseudo random code; and $\alpha$: the parameter related to the threshold for channel probing.

The received signal y is the convolution result of the pseudo random code x and channel h, as shown in the following equation

$$y(n) = \sum_{i=0}^{L} h(i)x(n-i).$$

(Equ. 23)

The cross correlation function $r_{yx}(m)$ defined in the equation below is equivalent to the convolution of autocorrelation of the pseudo random code x and the channel h.

$$r_{yx}(n) = \sum_{i=0}^{N} x(i)y(i+n) = \sum_{i=0}^{L} h(i)r_x(n-i)$$

(Equ. 24)

The following describes an algorithm for synchronization by correlation. The transmitter computes the cross correlation $r_{yx}(m)$, and finds its maximum amplitude

$$corr_{max} = \max|r_{yx}(m)|$$

(Equ. 25)

Based on $corr_{max}$, the transmitter finds the synchronization index $i_s$ of the received signal y as follows

$$i_s = 1;$$

$$\text{WHILE } |r_{yx}(i_s)| < \alpha \times corr_{max}$$

$$i_s \Leftarrow i_s + 1$$

(Equ. 26)

The parameter $\alpha$ can be selected by experiments, and range from 0 to 1. For example, according to an ultra wide band channel model used in the simulation, the parameter $\alpha$ is chosen to be around 0.2. After obtaining the index $i_s$, the estimated channel response $\tilde{h}$ can be determined by truncating the cross correlation function $r_{yx}(m)$ as follows:

$$\tilde{h} = r_{yx}(i_s : i_s + L - 1)$$

(Equ. 27)

Numerical Results

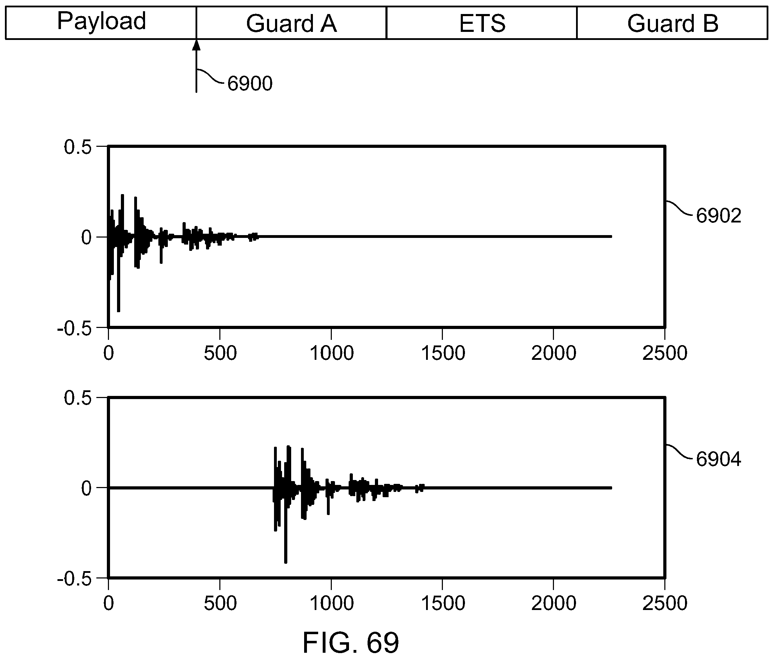

Referring to FIGS. 69 to 71, three instances of the estimated channel response determined using the least square based method are compared with the actual channel response. The length of the guard interval A ($L_a$) and the parameter $\tau$ are both chosen to be L.

FIG. 69 shows an example in which there is no synchronization error, i.e., the transmitter uses the received signal just from the beginning of the training sequence. An arrow 6900 indicates the location where the transmitter is synchronized (i.e., the location where the transmitter considers to be the beginning of the training sequence). A graph 6902 shows the actual channel response. A graph 6904 shows the estimated channel response. In this case, the effective channel response is at the center of the estimated channel response.

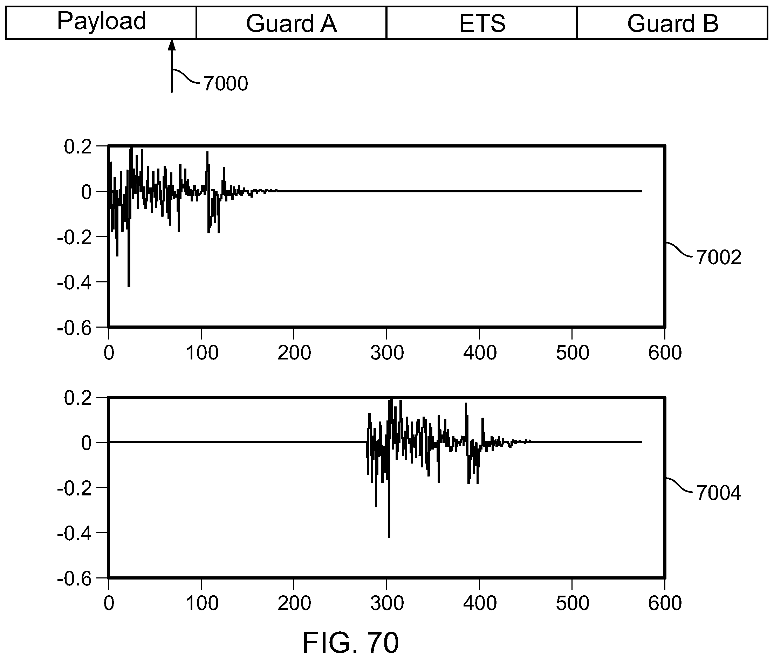

FIG. 70 shows an example in which the transmitter is synchronized ahead of the training sequence. The arrow 7000 indicates the location where the transmitter is synchronized (i.e., the location where the transmitter considers to be the beginning of the training sequence). A graph 7002 shows the actual channel response. A graph 7004 shows the estimated channel response. In this case, the effective channel response is shifted to the rear of the estimated channel response.

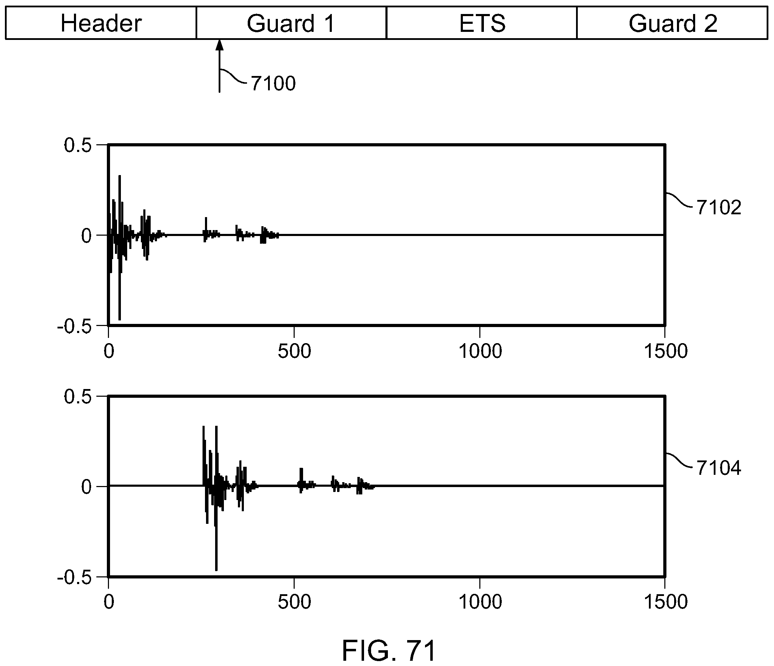

FIG. 71 shows an example in which the transmitter is synchronized after the training sequence. The arrow 7100 indicates the location where the transmitter is synchronized (i.e., the location where the transmitter considers to be the beginning of the training sequence). In this case, the effective channel response is shifted to the front of the estimated channel response. In the three examples shown in FIGS. 69 to 71, the effective channel response is preserved in the estimated channel response.

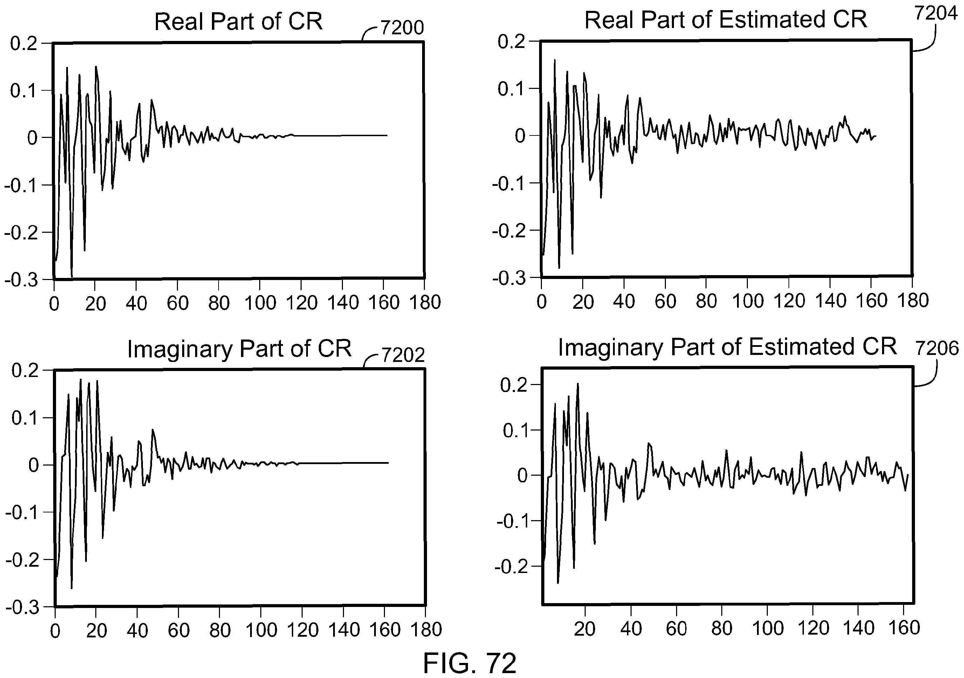

Referring to FIG. 72, a graph 7200 shows a waveform for a real part of an actual channel response, and a graph 7202 shows a waveform for an imaginary part of the actual channel response. A graph 7204 shows a waveform for a real part of an estimated channel response, and a graph 7202 shows a waveform for an imaginary part of the estimated channel response. The estimated channel response is determined using the correlation method described above. A comparison of the real part waveforms in graphs 7200 and 7204, and a comparison of the imaginary part waveforms in graphs 7202 and 7206 indicate that the estimated channel response determined using the correlation method preserves the information of the actual channel response.

K-means Clustering

As described above with respect to FIG. 27, K-means clustering is performed on the CSIs. For each link in the system (e.g., a MIMO system), an ensemble of CSIs can be obtained. In this example, the collection of CSIs on link i can be denoted as $H_i$ which is a matrix with dimension $N_i \times 30$. For the $N_i$ realizations, a set of representative CSIs can be identified that have a smaller cardinality $U_i$ such that $U_i << N_i$, in order to reduce the burden of post processing as well as storage into the database.

A K-means clustering algorithm can be used to identify the representative CSIs. The K-means clustering algorithm is an unsupervised machine learning algorithm that classifies the $N_i$ rows of $H_i$ into K clusters such that: i) the distance between any two CSIs in the same cluster is small, and ii) the distance between any two CSIs in two different clusters is large. The distance metric may be Euclidean distance, and the Euclidean distance, correlation, and cosine functions may be used to measure the similarity between two CSIs.

The K-means clustering algorithm starts with K randomly chosen vectors (e.g., rows) in the matrix $H_i$. The remaining $N_i - K$ CSIs can be labeled according to their distances to the K centroids. A new centroid can then be computed for each of the K clusters. The process can repeat iteratively until the labels remain unchanged between two iterations or the number of iterations exceeds a predefined value.

Using K-means clustering, each specific location on each link can be associated with a set of representative CSIs. If the ensemble of CSIs is directly averaged (e.g., which is equivalent to using K=1 in K-means clustering), the CSIs may be combined in a destructive way, which can significantly undermine the accuracy of CSI measurements.

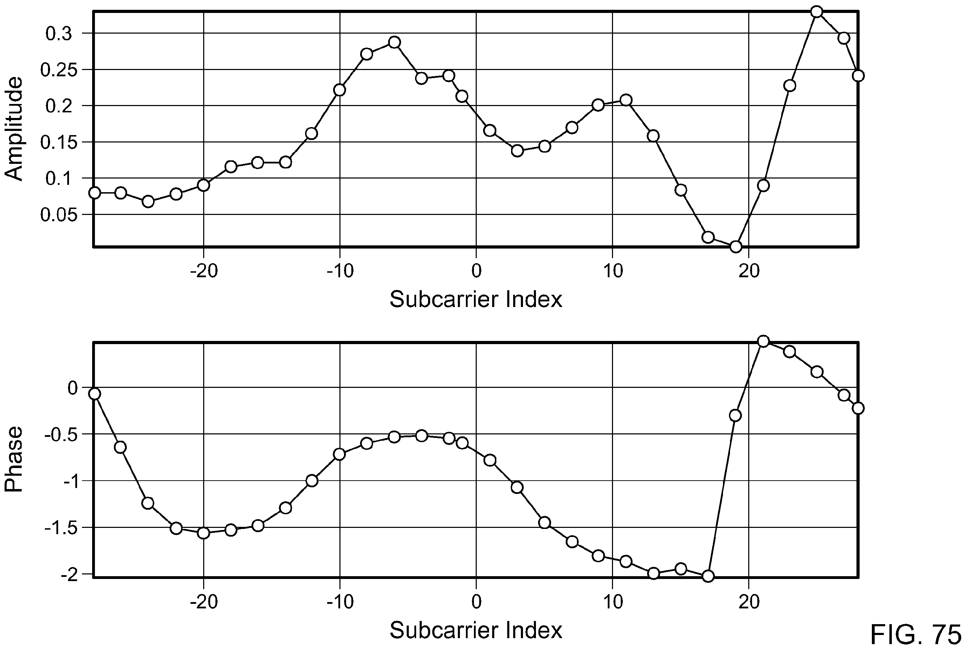

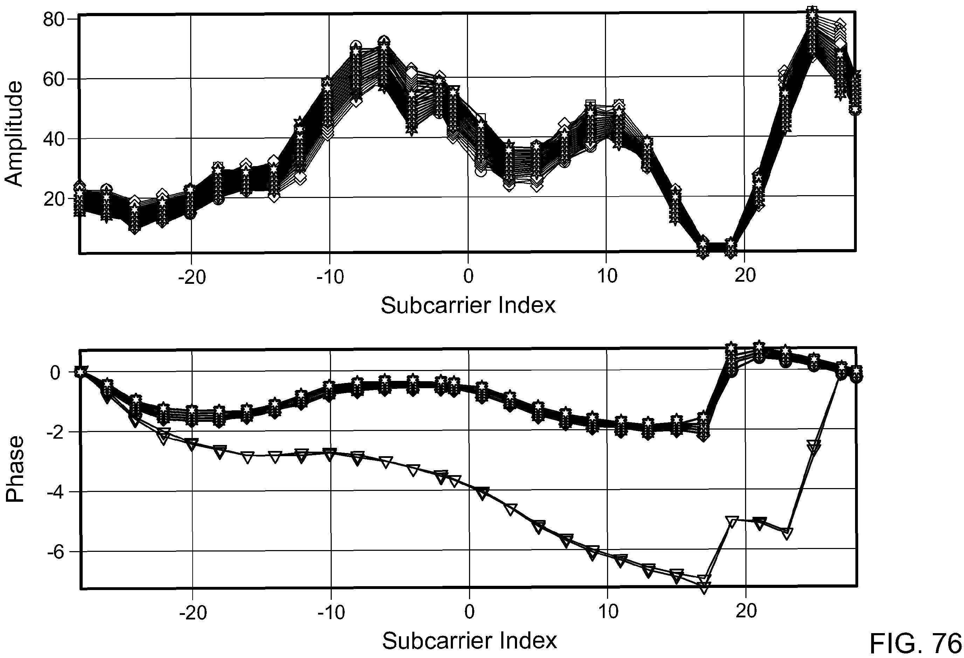

FIGS. 74, 76, and 78, show the results of performing K-means clustering on CSI ensembles of the link between a transmitting antenna and a receiving antenna using various numbers of clusters: K=1 (FIG. 74), K=5 (FIG. 75), and K=10 (FIG. 76). CSIs belonging to different clusters are labeled using different markers. In some implementations, higher K values lead to more robust classification on the unknown data set with a higher diversity.

FIGS. 75, 77, and 79 show centroids of the K-means clustering on the same link shown in FIGS. 74, 76, and 78, respectively. The centroids are the averages of the CSIs that are in the same clusters. Averaging the CSIs to obtain centroid information can alleviate the effect of noise inherent in the CSIs. The centroids can be recorded into the database as representative features for specific locations on the particular link.

K-means clustering can be performed for each of the M links. Assuming that the same K value is used for each link, and denoting the representative CFRs (e.g., as the centroids of the K clusters) belonging to link i as $G_i$ which is a $K \times 30$ matrix, the correlation between the matrix $G_i$ in the mapping phase and the $G_i'$ in the localization phase can be calculated using the following equation:

$$C(i) = Corr[G_i, G_i'] = max(D_i G_i)(D_i' G_i')^H$$

$$(\text{Equ. 28})$$

where $H$ represents Hermitian transpose, and $D_i$ represents a diagonal matrix with diagonal entries given as:

$$[D_i]_{n,n} = \sqrt{\frac{1}{\sum |g_{i,k}|^2}}$$

(Equ. 29)

and $g_{i,k}$ represents the element on the $i^{th}$ row and $j^{th}$ column of the matrix $G_i$.

The computations are repeated for all the M links, and the fused correlation between the CSIs acquired in the mapping phase and that in the localization phase is calculated as:

$$C_{fusion} = \frac{1}{M} \sum C(i)$$

(Equ. 30)

$C_{fusion}$ can be calculated for all locations in the mapping phase. The location with the largest $C_{fusion}$ indicates the estimated location of the device, given that the largest $C_{fusion}$ is larger than the threshold value.

**Claims**

1. A method comprising:

   at a first device (452, 862, 5302), receiving a probe signal sent from a second device (454, 864, 5304) through a multipath channel (472, 5306), the probe signal received at the first device having a waveform that is different from the waveform sent by the second device due to influence of the multipath channel;
   estimating a channel impulse response based on the probe signal received at the first device;
   determining a time-reversed signal based on a time-reversed version of the estimated channel impulse response; and
   determining a position of the second device (454, 864, 5304) based on convolving the time-reversed signal and stored channel impulse responses, wherein the stored channel impulse responses are stored in a storage device and are each associated with a known position.

2. The method of claim 1 in which the stored channel impulse responses are derived from probe signals sent from a plurality of positions, each stored channel impulse response derived from a corresponding probe signal sent from a corresponding position, each stored channel impulse response being associated with the position from which the corresponding probe signal was sent.

3. The method of claim 1 or 2, comprising:

   for each of a plurality of positions, determining a feature value based on a function of the time-reversed signal and the stored channel impulse response associated with the position, and
   determining the position of the second device based on the position associated with a largest feature value among the feature values.

4. The method of claim 3 in which one of a) or b), wherein:

   a) the feature value associated with a position is also a function of the stored channel impulse response or responses associated with one or more neighboring positions; and
   b) the feature value associated with a position is a function of the stored channel impulse responses derived from probe signals sent from the position at a plurality of time periods.

5. The method of claim 3 in which determining the feature value associated with a position comprises said convolving the time-reversed signal and the stored channel impulse response associated with the position.

6. The method of any of claims 1-5 in which one of a), b), or c), wherein:

   a) the probe signal comprises one or more pulse signals;
   b) the probe signal comprises one or more pseudorandom codes; and
   c) the probe signal comprises one or more Golay sequences.

7. The method of any of claims 1-6, comprising receiving coarse positioning data from the second device, selecting a subset of stored channel impulse responses based on the coarse positioning data, and determining the position of the second device based on the time-reversed signal and the subset of stored channel impulse responses.

8. An apparatus (452, 862, 5302) comprising:

   a circuit to receive a probe signal sent from a second device (454, 864, 5304) through a multipath channel (472, 5306), the probe signal received at the apparatus having a waveform that is different from the waveform sent by the second device due to influence of the multipath channel; and
   a data processor configured to:

   estimate a channel impulse response based on the received probe signal;
   determine a time-reversed signal based on a time-reversed version of the estimated channel impulse response; and
   determine a position of the second device based on convolving the time-reversed signal and stored channel impulse responses that are stored in a storage device.

9. The apparatus of claim 8 in which the stored channel impulse responses are derived from probe signals sent from a plurality of positions, each stored channel impulse response derived from a corresponding probe signal sent from a corresponding position, each stored channel impulse response being associated with the position from which the corresponding probe signal was sent.

10. The apparatus of claim 9 in which the data processor is configured to:

    for each of a plurality of positions, determine a feature value based on a function of the time-reversed signal and the stored channel impulse response associated with the position, and
    determine the position of the second device based on the position associated with a largest feature value among the feature values.

11. The apparatus of claim 9 or 10 in which one of a) or b), wherein:

    a) the feature value associated with a position is also a function of the stored channel impulse response or responses associated with one or more neighboring positions; and
    b) the feature value associated with a position is a function of the stored channel impulse responses derived from probe signals sent from the position at a plurality of time periods.

12. The apparatus of any of claims 9-11 in which determine the feature value associated with a position comprises said convolving the time-reversed signal and the stored channel impulse response associated with the position.

13. The apparatus of any of claims 8-12 in which one of a), b), or c), wherein:

    a) the probe signal comprises one or more pulse signals;
    b) the probe signal comprises one or more pseudorandom codes; and
    c) the probe signal comprises one or more Golay sequences.

14. The apparatus of claim 8, further comprising:
    the storage device storing first data representing the stored channel impulse responses derived from probe signals sent from a plurality of positions and second data representing coordinates of the positions.

**Patentansprüche**

1. Verfahren, das Folgendes umfasst:

   Empfangen bei einer ersten Einrichtung (452, 862, 5302) eines Sondensignals, das von einer zweiten Einrichtung (454, 864, 5304) über einen Mehrwegkanal (472, 5306) gesendet wurde, wobei das Sondensignal, das bei der ersten Einrichtung empfangen wird, eine Wellenform besitzt, die von der Wellenform, die durch die zweite Einrichtung gesendet wurde, aufgrund eines Einflusses des Mehrwegkanals verschieden ist;
   Schätzen einer Kanalimpulsantwort auf der Grundlage des Sondensignals, das bei der ersten Einrichtung empfangen wurde;
   Bestimmen eines zeitlich umgekehrten Signals auf der Grundlage einer zeitlich umgekehrten Version der geschätzten Kanalimpulsantwort; und
   Bestimmen einer Position der zweiten Einrichtung (454, 864, 5304) auf der Grundlage eines Faltens des zeitlich umgekehrten Signals mit gespeicherten Kanalimpulsantworten, wobei die gespeicherten Kanalimpulsantworten in einer Speichereinrichtung gespeichert sind und jeweils einer bekannten Position zugeordnet sind.

2. Verfahren nach Anspruch 1, wobei die gespeicherten Kanalimpulsantworten aus Sondensignalen, die von mehreren Positionen gesendet werden, abgeleitet werden, jede gespeicherte Kanalimpulsantwort aus einem entsprechenden Sondensignal, das von einer entsprechenden Position gesendet wurde, abgeleitet wird und jede gespeicherte Kanalimpulsantwort der Position zugeordnet wird, von der das entsprechende Sondensignal gesendet wurde.

3. Verfahren nach Anspruch 1 oder 2, das Folgendes umfasst:

   Bestimmen für jede von mehreren Positionen eines Merkmalswerts auf der Grundlage einer Funktion des zeitlich umgekehrten Signals und der gespeicherten Kanalimpulsantwort, die der Position zugeordnet ist, und
   Bestimmen der Position der zweiten Einrichtung auf der Grundlage der Position, die einem größten Merkmalswert unter den Merkmalswerten zugeordnet ist.

4. Verfahren nach Anspruch 3 mit einem von a) und b), wobei

   a) der Merkmalswert, der einer Position zugeordnet ist, auch eine Funktion der gespeicherten Kanalimpulsantwort oder Kanalimpulsantworten, die einer oder mehreren benachbarten Positionen zugeordnet sind, ist und
   b) der Merkmalswert, der einer Position zugeordnet ist, eine Funktion der gespeicherten Kanalimpulsantworten, die aus Sondensignalen, die von der Position in mehreren Zeiträumen gesendet wurden, abgeleitet wurden, ist.

5. Verfahren nach Anspruch 3, wobei das Bestimmen des Merkmalswerts, der einer Position zugeordnet ist, das Falten des zeitlich umgekehrten Signals mit der gespeicherten Kanalimpulsantwort, die der Position zugeordnet ist, umfasst.

6. Verfahren nach einem der Ansprüche 1-5 mit einem von a), b) und c), wobei

   a) das Sondensignal ein oder mehrere Pulssignale umfasst;
   b) das Sondensignal einen oder mehrere Pseudozufallscodes umfasst und
   c) das Sondensignal eine oder mehrere Golay-Folgen umfasst.

7. Verfahren nach einem der Ansprüche 1-6, das ein Empfangen von Grobpositionierungsdaten von der zweiten Einrichtung, ein Wählen einer Untermenge von gespeicherten Kanalimpulsantworten auf der Grundlage der Grobpositionierungsdaten und ein Bestimmen der Position der zweiten Einrichtung auf der Grundlage des zeitlich umgekehrten Signals und der Untermenge von gespeicherten Kanalimpulsantworten umfasst.

8. Vorrichtung (452, 862, 5302), die Folgendes umfasst:

   eine Schaltung zum Empfangen eines Sondensignals, das von einer zweiten Einrichtung (454, 864, 5304) über einen Mehrwegkanal (472, 5306) gesendet wurde, wobei das Sondensignal, das bei der Vorrichtung empfangen wird, eine Wellenform besitzt, die von der Wellenform, die durch die zweite Einrichtung gesendet wurde, aufgrund eines Einflusses des Mehrwegkanals verschieden ist; und
   einen Datenprozessor, der ausgelegt ist zum
   Schätzen einer Kanalimpulsantwort auf der Grundlage des empfangenen Sondensignals;

Bestimmen eines zeitlich umgekehrten Signals auf der Grundlage einer zeitlich umgekehrten Version der geschätzten Kanalimpulsantwort und

Bestimmen einer Position der zweiten Einrichtung auf der Grundlage eines Faltens des zeitlich umgekehrten Signals mit gespeicherten Kanalimpulsantworten, die in einer Speichereinrichtung gespeichert sind.

9. Vorrichtung nach Anspruch 8, wobei die gespeicherten Kanalimpulsantworten aus Sondensignalen, die von mehreren Positionen gesendet wurden, abgeleitet sind, jede gespeicherte Kanalimpulsantwort aus einem entsprechenden Sondensignal, das von einer entsprechenden Position gesendet wurde, abgeleitet ist und jede gespeicherte Kanalimpulsantwort der Position zugeordnet ist, von der das entsprechende Sondensignal gesendet wurde.

10. Vorrichtung nach Anspruch 9, wobei der Datenprozessor ausgelegt ist zum Bestimmen für jede von mehreren Positionen eines Merkmalswerts auf der Grundlage einer Funktion des zeitlich umgekehrten Signals und der gespeicherten Kanalimpulsantwort, die der Position zugeordnet ist, und Bestimmen der Position der zweiten Einrichtung auf der Grundlage der Position, die einem größten Merkmalswert unter den Merkmalswerten zugeordnet ist.

11. Vorrichtung nach Anspruch 9 oder 10 mit einem von a) und b), wobei

a) der Merkmalswert, der einer Position zugeordnet ist, auch eine Funktion der gespeicherten Kanalimpulsantwort oder Kanalimpulsantworten, die einer oder mehreren benachbarten Positionen zugeordnet sind, ist und

b) der Merkmalswert, der einer Position zugeordnet ist, eine Funktion der gespeicherten Kanalimpulsantworten, die aus Sondensignalen, die von der Position in mehreren Zeiträumen gesendet wurden, abgeleitet wurden, ist.

12. Vorrichtung nach einem der Ansprüche 9-11, wobei das Bestimmen des Merkmalswerts, der einer Position zugeordnet ist, das Falten des zeitlich umgekehrten Signals mit der gespeicherten Kanalimpulsantwort, die der Position zugeordnet ist, umfasst.

13. Vorrichtung nach einem der Ansprüche 8-12 mit einem von a), b) und c), wobei

a) das Sondensignal ein oder mehrere Pulssignale umfasst;
b) das Sondensignal einen oder mehrere Pseudozufallscodes umfasst und
c) das Sondensignal eine oder mehrere Golay-Folgen umfasst.

14. Vorrichtung nach Anspruch 8, die ferner Folgendes umfasst:
die Speichereinrichtung, in der erste Daten, die die gespeicherten Kanalimpulsantworten, die aus Sondensignalen, die von mehreren Positionen gesendet wurden, abgeleitet sind, repräsentieren, und zweite Daten, die Koordinaten der Positionen repräsentieren, gespeichert sind.

**Revendications**

1. Procédé comprenant :

la réception au niveau d'un premier dispositif (452, 862, 5302) d'un signal de sondage envoyé par un second dispositif (454, 864, 5304) au travers d'un canal multivoies (472, 5306), le signal de sondage reçu par le premier dispositif présentant une forme d'onde qui est différente de la forme d'onde envoyée par le second dispositif en raison de l'influence du canal multivoies,
l'estimation d'une réponse impulsionnelle de canal fondée sur le signal de sondage reçu par le premier dispositif,
la détermination d'un signal inversé dans le temps fondé sur une version inversée dans le temps de la réponse impulsionnelle estimée de canal, et
la détermination de la position du second dispositif (454, 864, 5304) sur la base d'une convolution du signal inversé dans le temps et des réponses impulsionnelles de canal stockées, les réponses impulsionnelles de canal stockées étant mémorisées dans un dispositif de stockage et étant chacune associée à une position connue.

2. Procédé selon la revendication 1, dans lequel les réponses impulsionnelles de canal stockées sont déduites de signaux de sondage envoyés d'une pluralité de positions, chaque réponse impulsionnelle de canal stockée étant déduite d'un signal de sondage correspondant envoyé depuis une position correspondante, chaque réponse impulsionnelle de canal stockée étant associée à la position depuis laquelle a été envoyé le signal de sondage correspondant.

3. Procédé selon la revendication 1 ou la revendication 2, comprenant :

la détermination d'une valeur fonctionnelle pour chacune d'une pluralité de positions, fondée sur une fonction du signal inversé dans le temps et de la réponse impulsionnelle de canal stockée associée à la position, et la détermination de la position du second dispositif sur la base de la position associée à la valeur fonctionnelle la plus grande parmi les valeurs fonctionnelles.

4. Procédé selon la revendication 3, dans lequel une proposition parmi a) ou b) est vraie :

a) la valeur fonctionnelle associée à une position est également une fonction de la ou des réponses impulsionnelles de canal stockées associées à une ou plusieurs positions voisines, et
b) la valeur fonctionnelle associée la position et une fonction des réponses impulsionnelles de canal stockées déduites de signaux de sondage envoyés depuis la position à une pluralité d'intervalles de temps.

5. Procédé selon la revendication 3, dans lequel la détermination de la valeur fonctionnelle associée à une position comprend ladite convolution du signal inversé dans le temps et de la réponse impulsionnelle de canal stockée associée à la position.

6. Procédé selon l'une quelconque des revendications 1 à 5, dans lequel l'une des propositions a), b) ou c) est vraie :

a) le signal de sondage comprend un ou plusieurs signaux impulsionnels,
b) le signal de sondage comprend un ou plusieurs codes pseudo aléatoires, et
c) le signal de sondage comprend une ou plusieurs séquences de Golay.

7. Procédé selon l'une quelconque des revendications 1 à 6, comprenant la réception de données grossières de positionnement en provenance du second dispositif, la sélection d'un sous-ensemble de réponses impulsionnelles de canal stockées sur la base des données grossières de positionnement et la détermination de la position du second dispositif sur la base du signal inversé dans le temps et du sous-ensemble de réponses impulsionnelles de canal stockées.

8. Appareil (450, 862, 5302) comprenant :

un circuit destiné à recevoir un signal de sondage envoyé par un second dispositif (454, 864, 5304) au travers d'un canal multivoies (472, 5306), le signal de sondage reçu au niveau de l'appareil présentant une forme d'onde qui est différente de la forme d'onde envoyée par le second dispositif en raison de l'influence du canal multivoies, et
un processeur de données configuré pour :

estimer une réponse impulsionnelle de canal fondée sur le signal de sondage reçu,
déterminer un signal inversé dans le temps fondé sur une version inversée dans le temps de la réponse impulsionnelle estimée de canal, et
déterminer la position du second dispositif sur la base d'une convolution du signal inversé dans le temps et des réponses impulsionnelles de canal stockées qui sont mémorisées dans un dispositif de stockage.

9. Appareil selon la revendication 8, dans lequel les réponses impulsionnelles de canal stockées sont déduites de signaux de sondage envoyés depuis une pluralité de positions, chaque réponse impulsionnelle de canal stockée étant déduite d'un signal de sondage correspondant envoyé depuis une position correspondante, chaque réponse impulsionnelle de canal stockée étant associée à la position depuis laquelle a été envoyé le signal de sondage correspondant.

10. Appareil selon la revendication 9, dans lequel le processeur de données est configuré pour :

déterminer une valeur fonctionnelle pour chacune d'une pluralité de positions, fondée sur une fonction du signal inversé dans le temps et de la réponse impulsionnelle de canal stockée associée à la position, et
déterminer la position du second dispositif sur la base de la position associée à la valeur fonctionnelle la plus grande parmi les valeurs fonctionnelles.

**11.** Appareil selon la revendication 9 ou la revendication 10, dans lequel une proposition parmi a) ou b) est vraie :

a) la valeur fonctionnelle associée à une position est également une fonction de la ou des réponses impulsionnelles de canal stockées associées à une ou plusieurs positions voisines, et
b) la valeur fonctionnelle associée la position et une fonction des réponses impulsionnelles de canal stockées déduites de signaux de sondage envoyés depuis la position à une pluralité d'intervalles de temps.

**12.** Appareil selon l'une quelconque des revendications 9 à 11, dans lequel la détermination de la valeur fonctionnelle associée à une position comprend ladite convolution du signal inversé dans le temps et de la réponse impulsionnelle de canal stockée associée à la position.

**13.** Appareil selon l'une quelconque des revendications 8 à 12, dans lequel l'une des propositions a), b) ou c) est vraie :

a) le signal de sondage comprend un ou plusieurs signaux impulsionnels,
b) le signal de sondage comprend un ou plusieurs codes pseudo aléatoires, et
c) le signal de sondage comprend une ou plusieurs séquences de Golay.

**14.** Appareil selon la revendication 8, comprenant en outre :
le dispositif de stockage mémorisant des premières données représentant les réponses impulsionnelles de canal stockées déduites de signaux de sondage envoyés depuis une pluralité de positions, ainsi que des secondes données représentant les coordonnées des positions.

Transceiver A ((·)) ~108

Channel
$h(t)$
$H(\omega)$

Transceiver B ((·)) ~106

100

104

102

$h(t)$

$H(\omega)$

110

**FIG. 1A**

Terminal
Device

Channel
Probe
Signal

Wideband
Channel

Received
Probe
Waveform

Detector → A/D → Processor →

Estimated
Channel
Response

108

104

110

102

106

**FIG. 1B**

FIG. 1C

FIG. 2A

FIG. 2B

EP 3 195 541 B1

FIG. 2C

FIG. 3

EP 3 195 541 B1

FIG. 4

EP 3 195 541 B1

EP 3 195 541 B1

512a   512b        510

FIG. 5

600

FIG. 6

FIG. 7

EP 3 195 541 B1

FIG. 8B

FIG. 8A

FIG. 9A

FIG. 9B

910

920

Amplitude

Phase

Tap

FIG. 10

1100

FIG. 11

1210

FIG. 12

FIG. 13

FIG. 14

FIG. 15

FIG. 16

FIG. 17A

FIG. 17B

FIG. 17C

FIG. 17D

EP 3 195 541 B1

Data,
Command,
and Control
Signals

→ 802.11
Transmitter

\Tx/

\Rx/

Receiver
Circuits

Intel 5300
Chip

CSI
Signals

FIG. 18A

No Overlapping

Overlapping

Figure: Overlap Versus Non-overlap

|  | $f_{start}$ (GHz) | $f_{end}$ (GHz) | $\Delta f$ (MHz) | $S$ |
|---|---|---|---|---|
| No-Overlap | 4.9 | 5.9 | 10 | 101 |
| Overlap | 4.8909375 | 5.9090625 | 8.28125 | 124 |

1802

1804

Table: Comparison Between Overlap and No-overlap Schemes

FIG. 18B

amp+phase,
non-overlapping,10MHz

Location Index

Location Index

FIG. 19B

amp,
non-overlapping,10MHz

Location Index

Location Index

FIG. 19D

amp+phase,overlapping,10MHz

Location Index

Location Index

FIG. 19A

amp,overlapping,10MHz

Location Index

Location Index

FIG. 19C

71

amp+phase,overlapping,50MHz

FIG. 20A

amp+phase,
non-overlapping,50MHz

FIG. 20B

amp,overlapping,50MHz

FIG. 20C

amp,
non-overlapping,50MHz

FIG. 20D

FIG. 21A

FIG. 21B

FIG. 21C

FIG. 21D

FIG. 22A

FIG. 22B

FIG. 22C

FIG. 22D

amp+phase,overlapping,200MHz

FIG. 23A

amp+phase,
non-overlapping,200MHz

FIG. 23B

amp,overlapping,200MHz

FIG. 23C

amp,
non-overlapping,200MHz

FIG. 23D

EP 3 195 541 B1

FIG. 24A

amp+phase,overlapping,500MHz

FIG. 24B

amp+phase,
non-overlapping,500MHz

FIG. 24C

amp,overlapping,500MHz

FIG. 24D

amp,
non-overlapping,500MHz

amp+phase,overlapping,1000MHz

FIG. 25A

amp+phase,
non-overlapping,1000MHz

FIG. 25B

amp,overlapping,1000MHz

FIG. 25C

amp,
non-overlapping,1000MHz

FIG. 25D

EP 3 195 541 B1

2620

2610

**FIG. 26**

2700

| TX |
|---|
| Transmit Data |

2702

| RX |
|---|
| Receive Data |

2704

| Parse CSI |
|---|

2706

| STO/SFO/CFO Removal |
|---|

2708

| K-Means Clustering |
|---|

2710

| Store/refine mapping between position coordinates and CSI |
|---|

2712

**FIG. 27**

2800

TX

| Transmit Data | 2802 |

Receive Data — 2804

Parse CSI — 2806

STO/SFO/CFO Removal — 2808

K-Means Clustering — 2810

Calculate Correlation — 2812

Identify Maximum — 2814

Fusion — 2816

>Threshold ? — 2818

No → Cannot Find Location — 2822

Yes

Location Determined — 2820

RX

FIG. 28

1 TX, 1 RX, RX #1, 1 Cluster

FIG. 29

FIG. 30

1 TX, 1 RX, RX #1, 10 Clusters

Location Index (y-axis)

Location Index (x-axis)

FIG. 31

EP 3 195 541 B1

1 TX, 3 RX, One Stream Fusion, 1 Cluster

FIG. 32

EP 3 195 541 B1

1 TX, 3 RX, One Stream Fusion, 5 Clusters

FIG. 33

1 TX, 3 RX, One Stream Fusion, 10 Clusters

FIG. 34

2 TX, 3 RX, Two Streams Fusion, 1 Cluster

Location Index

Location Index

FIG. 35

2 TX, 3 RX, Two Streams Fusion, 5 Clusters

FIG. 36

FIG. 37

3 TX, 3 RX, 3 Streams Fusion, 1 Cluster

FIG. 38

EP 3 195 541 B1

FIG. 39

FIG. 40

ROC,1 TX, 1 RX, RX #1, 1 Cluster

ROC,1 TX, 1 RX, RX #1,5 Clusters

FIG. 41

FIG. 42

EP 3 195 541 B1

EP 3 195 541 B1

ROC,1 TX, 1 RX, RX #1,10 Clusters

**FIG. 43**

ROC,1 TX, 3 RX, One Stream Fusion, 1 Cluster

**FIG. 44**

EP 3 195 541 B1

ROC,1 TX, 3 RX, One Stream Fusion,
5 Clusters

ROC,1 TX, 3 RX, One Stream Fusion,
10 Clusters

FIG. 45

FIG. 46

ROC, 2 TX, 3 RX, One Stream Fusion,
1 Cluster

FIG. 47

ROC, 2 TX, 3 RX, One Stream Fusion,
5 Clusters

FIG. 48

ROC, 2 TX, 3 RX, One Stream Fusion,
10 Clusters

ROC, 3 TX, 3 RX, 3 Streams Fusion,
1 Cluster

FIG. 49

FIG. 50

EP 3 195 541 B1

EP 3 195 541 B1

ROC, 3 TX, 3 RX, 3 Streams Fusion,
5 Clusters

ROC, 3 TX, 3 RX, 3 Streams Fusion,
10 Clusters

FIG. 51

FIG. 52

FIG. 53

FIG. 54

EP 3 195 541 B1

5502

5504

FIG. 55

FIG. 56

5602

5604

EP 3 195 541 B1

FIG. 57

EP 3 195 541 B1

FIG. 58

FIG. 59

FIG. 60

6100 ➘

## Frame Structure of Channel Probing Signal

| 6102 ⌐ | 6104 ⌐ | 6106 ⌐ | 6108 ⌐ |
|---|---|---|---|
| Preamble | Barker Code | Payload | Training Sequence |

**FIG. 61**

EP 3 195 541 B1

## PPM Symbol

Bit 0

I  g  L

Bit 1

L  I  g

L: Delay Spread of the Multipath Channel
g: Guard Band
I: Pulse Band           L = I + g

**FIG. 62**

Frame Structure of Training Sequence

| Preamble | Barker Code | Payload | Training Sequence |
|---|---|---|---|
| 6102 | 6104 | 6106 | 6108 |

| Guard A | ETS | Guard B |
|---|---|---|
| 6300 | 6302 | 6304 |

FIG. 63

## Energy Detection Synchronization Method
### Received Signal

$$E_i = \sum_{n=i}^{i+L-1} |x_i|^2 \; f\,or\; i = 0, 1, ..., 2L - 1$$

FIG. 64

Indices in the Received Signal

| 6102 | 6104 | 6106 | 6108 |
|---|---|---|---|
| Preamble | Barker Code | Payload | Training Sequence |

$i_s + mL_w$

$i_s + mL_w + L_b$

$i_s + mL_w + L_b + L_d$

$i_s + mL_w + L_b + L_d + L_t - 1$

FIG. 65

6600

The Toeplitz Matrix $T$ Generated by the Training Sequence $S_{qe}$

$$T = \begin{pmatrix} S_{qe}[0] & 0 & \cdots & & 0 \\ S_{qe}[1] & & & & \\ & & & & \\ \vdots & & & & \\ & & & & \\ S_q[L + L_e - 1] & & & & \end{pmatrix}$$

FIG. 66

EP 3 195 541 B1

The Histogram of Synchronization Mismatch for 1000 Realizations Under 0dB SNR

FIG. 67

FIG. 68

| Payload | Guard A | ETS | Guard B |

6900

6902

6904

FIG. 69

| Payload | Guard A | ETS | Guard B |
|---------|---------|-----|---------|

7000

7002

7004

FIG. 70

EP 3 195 541 B1

| Header | Guard 1 | ETS | Guard 2 |
|--------|---------|-----|---------|

7100

7102

7104

FIG. 71

EP 3 195 541 B1

**Real Part of CR** — 7200

**Real Part of Estimated CR** — 7204

**Imaginary Part of CR** — 7202

**Imaginary Part of Estimated CR** — 7206

FIG. 72

FIG. 73

EP 3 195 541 B1

FIG. 74

FIG. 75

FIG. 76

EP 3 195 541 B1

FIG. 77

EP 3 195 541 B1

FIG. 78

FIG. 79

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CA 2442950 A1
- US 183648
- US 20150236848 A
- US 62025795
- US 70634212
- US 969271
- US 20150049745 A
- US 2014051148 W
- US 969320
- US 20150049792 A
- US 262153
- US 20150312081 A
- US 202651
- US 20150257167 A